# EUROPEAN PATENT APPLICATION

(11) **EP 4 230 405 A1**
(43) Date of publication of application: **23.08.2023**
(21) Application number: 21879781.9
(22) Date of filing: 07.09.2021
(51) Int. Cl.: B32B 27/00, B32B 7/023, B32B 7/12, B32B 27/20, B65D 30/02, B65D 65/40, B65D 85/50

(54) **LAMINATED FILM, PACKAGING BAG, PACKAGE, AND METHOD FOR MANUFACTURING LAMINATED FILM**

(30) Priority: 16.10.2020 JP 2020174465; 23.12.2020 JP 2020213930; 22.06.2021 JP 2021103474; 22.06.2021 JP 2021103478; 22.06.2021 JP 2021103481
(71) Applicant: TOPPAN INC., Tokyo 110-0016 (JP)
(72) Inventor: SHIMIZU, Kosuke, Tokyo 110-0016 (JP); HORIUCHI, Masafumi, Tokyo 110-0016 (JP); OKUYAMA, Satoru, Tokyo 110-0016 (JP); MORITA, Machiko, Tokyo 110-0016 (JP)
(74) Representative: TBK
(86) International application number: PCT/JP2021/032821
(87) International publication number: WO 2022/080039

(57) **Abstract**

A laminated film includes, in the following order, a predetermined layer, an adhesive layer containing an adhesive component and polyvalent metal particles or polyvalent metal compound particles mixed with the adhesive component, and a sealant layer laminated, in which a ratio of a maximum diameter of aggregates formed of the polyvalent metal particles or the polyvalent metal compound particles to a minimum diameter of the aggregates is 14.0 times or less.

## Description

### [Technical Field]

The present invention relates to a laminated film, a packaging bag, a package, and a method for manufacturing a laminated film.

Priority is claimed on Japanese Patent Application No. 2020-174465, filed October 16, 2020, Japanese Patent Application No. 2020-213930, filed December 23, 2020, Japanese Patent Application No. 2021-103474, filed June 22, 2021, Japanese Patent Application No. 2021-103478, filed June 22, 2021, and Japanese Patent Application No. 2021-103481, filed June 22, 2021, the contents of which are incorporated herein by reference.

### [Background Art]

A packaging material that is used for the packaging of articles to be packaged is required to have a function of suppressing quality deterioration of the articles to be packaged. For example, as a packaging material, there is known a packaging bag configured by pasting a pair of laminated films together. Such a packaging bag is required to have an excellent sealing property in order to prevent quality deterioration of articles to be packaged.

As an example of the articles to be packaged, food is an exemplary example. When boiling sterilization or retort sterilization is performed on, among food, food products containing a sulfur-containing amino acid such as meat products and egg products, there are cases where a peculiar odor is generated. This odor is attributed to a sulfur compound such as hydrogen sulfide that is generated by the hydrolysis of the sulfur-containing amino acid. Patent Documents 1 and 2 propose to provide a layer containing a polyvalent metal compound to packaging bags in order to reduce such a retort odor.

### [Citation List]

### [Patent Documents]

[Patent Document 1]
   Japanese Unexamined Patent Application, First Publication No. 2014-61682
[Patent Document 2]
   Japanese Unexamined Patent Application, First Publication No. 2017-94533

### [Summary of Invention]

### [Technical Problem]

However, the related art as described above has the following problem.

A wide variety of articles to be packaged are packaged with a package, and the articles to be packaged contain a variety of components. There are cases where, among the components, a specific component reacts with a component that configures each layer of laminated films that form a packaging bag to affect the lamination strength. For example, the layer that is formed of the polyvalent metal compound of Patent Document 1 has a possibility of affecting the lamination strength between the layers of the laminated films depending on a component contained in an article to be packaged.

The present invention has been made in view of the above-described problem and provides a laminated film, a packaging bag, and a package that are capable of reducing a retort odor and have a favorable lamination strength.

### [Solution to Problem]

In order to achieve the above-described object, the present invention employs the following means.

That is, a laminated film according to the present invention includes, in the following order, a predetermined layer, an adhesive layer containing an adhesive component and polyvalent metal particles or polyvalent metal compound particles mixed with the adhesive component, and a sealant layer laminated, in which a ratio of a maximum diameter of aggregates formed of the polyvalent metal particles or the polyvalent metal compound particles to a minimum diameter of the aggregates is 14.0 times or less.

In addition, in the laminated film according to the present invention, the aggregates may have an average aggregate diameter of 150 nm or less.

In addition, in the laminated film according to the present invention, among the aggregates, the number of the aggregates having a size of 10% to 200% of an average particle diameter may be 60 or more.

In addition, in the laminated film according to the present invention, no aggregates may have a diameter of 3.0 µm or more.

In addition, in the laminated film according to the present invention, for the aggregates having a diameter approximately equal to an average aggregate diameter, a distance between the aggregates may be 3.0 µm or less, the distance being an average value of distances between the aggregates adjacent to each other.

In addition, in the laminated film according to the present invention, the predetermined layer may be a base material film having a barrier layer.

In addition, in the laminated film according to the present invention, the base material film may have a nylon layer.

In addition, in the laminated film according to the present invention, the adhesive layer may contain 0.5% by mass or more and 10% by mass or less of the polyvalent metal particles or the polyvalent metal compound particles.

In addition, in the laminated film according to the present invention, the polyvalent metal particles or the polyvalent metal compound particles may have an average particle diameter of 10 nm or more and 45 nm or less.

In addition, in the laminated film according to the present invention, the polyvalent metal particles or the polyvalent metal compound particles may have a specific surface area of 1 m²/g or more.

In addition, in the laminated film according to the present invention, the adhesive layer may further contain a dispersant that disperses the polyvalent metal particles or the polyvalent metal compound particles in the adhesive component.

In addition, in the laminated film according to the present invention, the adhesive component may be a cured product of a two-component curable adhesive.

In addition, a packaging bag according to the present invention is a packaging bag formed by pasting films together, in which the films include any of the laminated films described above.

In addition, a package according to the present invention includes the packaging bag described above and an article to be packaged that is accommodated in the packaging bag.

In addition, in the package according to the present invention, the article to be packaged may contain a sulfur compound.

In addition, in the laminated film according to the present invention, in a range of 500 µm × 500 µm in the adhesive layer, the number of the aggregates of 9 µm or larger may be 30 or less among the aggregates formed of the polyvalent metal particles or the polyvalent metal compound particles.

In addition, in the laminated film according to the present invention, the distance between the aggregates may be 100 µm or more.

In addition, in the laminated film according to the present invention, the predetermined layer may be a base material film having a barrier layer.

In addition, in the laminated film according to the present invention, the base material film may have a nylon layer.

In addition, in the laminated film according to the present invention, the adhesive layer may contain 0.5% by mass or more and 10% by mass or less of the polyvalent metal particles or the polyvalent metal compound particles.

In addition, in the laminated film according to the present invention, the polyvalent metal particles or the polyvalent metal compound particles may have an average particle diameter of 10 nm or more and 45 nm or less.

In addition, in the laminated film according to the present invention, the polyvalent metal particles or the polyvalent metal compound particles may have a specific surface area of 1 m2/g or more.

In addition, in the laminated film according to the present invention, the adhesive layer may further contain a dispersant that disperses the polyvalent metal particles or the polyvalent metal compound particles in the adhesive component.

In addition, in the laminated film according to the present invention, the adhesive component may be a cured product of a two-component curable adhesive.

In addition, the laminated film according to the present invention may have a light transmission portion configured to transmit visible light in a thickness direction, in which the predetermined layer may be a base material film having a barrier layer, and a ratio of a haze measured in accordance with a haze measurement method specified in JIS-K-7136 in the light transmission portion to a haze measured in accordance with the measurement method in the light transmission portion when the adhesive layer does not contain the polyvalent metal particles and the polyvalent metal compound particles may be 1.10 or less.

In addition, in the laminated film according to the present invention, a ratio of a solid content of the polyvalent metal particles or the polyvalent metal compound particles to a total mass of the solid content of the polyvalent metal particles or the polyvalent metal compound particles and a solid content of an adhesive in the adhesive layer may be 0.5% by mass or more and 10% by mass or less.

In addition, in the laminated film according to the present invention, the polyvalent metal particles or the polyvalent metal compound particles may have an average particle diameter of 10 nm or more and 50 nm or less.

In addition, in the laminated film according to the present invention, in the adhesive layer, regarding a distribution of the aggregates formed of the polyvalent metal particles or the polyvalent metal compound particles, the number of the aggregates as large as 10% or more and 200% or less of the average particle diameter present in a rectangular region of 50 µm in a width direction may be 50 or more.

In addition, in the laminated film according to the present invention, in the adhesive layer, an average diameter of the aggregates formed of the polyvalent metal particles or the polyvalent metal compound particles viewed in a direction orthogonal to the thickness direction may be 20 nm or more and 120 nm or less.

In addition, in the laminated film according to the present invention, the polyvalent metal particles or the polyvalent metal compound particles may have a specific surface area of 1 m²/g or more.

In addition, in the laminated film according to the present invention, the adhesive layer may further contain a dispersant that disperses the polyvalent metal particles or the polyvalent metal compound particles in the adhesive component.

In addition, in the laminated film according to the present invention, the adhesive component may be a cured product of a two-component curable adhesive.

In addition, in the laminated film according to the present invention, in the adhesive layer, the maximum diameter of the aggregates formed of the polyvalent metal particles or the polyvalent metal compound particles viewed in a direction orthogonal to the thickness direction may be 1.0 µm or less.

In addition, in the laminated film according to the present invention, the base material film may have a nylon layer.

In addition, in the package according to the present invention, the film may include any one of the above-described laminated films.

In addition, the package according to the present invention may include the above-described packaging bag and an article to be packaged that is accommodated in the packaging bag.

In addition, in the package according to the present invention, the article to be packaged may contain a sulfur compound.

In addition, a method for manufacturing a laminated film according to the present invention is a method for manufacturing a laminated film including a base material film having a barrier layer, an adhesive layer containing an adhesive component and polyvalent metal particles or polyvalent metal compound particles mixed with the adhesive component, and a sealant layer laminated in this order and having a light transmission portion configured to transmit visible light in a thickness direction, in which a ratio of a haze measured in accordance with a haze measurement method specified in JIS-K-7136 in the light transmission portion to a haze measured in accordance with the measurement method in the light transmission portion when the adhesive layer does not contain the polyvalent metal particles and the polyvalent metal compound particles is 1.10 or less, a step of forming the adhesive layer has a coating liquid preparation step of preparing a coating liquid in which the polyvalent metal particles or the polyvalent metal compound particles have been mixed with an adhesive that forms the adhesive component after cured, and, in the coating liquid preparation step, a dispersion treatment is performed with a bead mill in a state where the polyvalent metal particles or the polyvalent metal compound particles, a dispersant, and a solvent have been mixed together.

### [Advantageous Effects of Invention]

According to the laminated film, the packaging bag, the package, and the method for manufacturing a laminated film according to the present invention, it is possible to reduce a retort odor, and the lamination strength is favorable.

### [Brief Description of Drawings]

FIG. 1 is a schematic cross-sectional view showing an example of a laminated film according to a first embodiment of the present invention.
FIG. 2 is a schematic cross-sectional view showing an example of a laminated film according to a second embodiment of the present invention.
FIG. 3 is a schematic cross-sectional view showing an example of a laminated film according to a third embodiment of the present invention.
FIG. 4 is a schematic front view showing an example of a packaging bag and a package according to a fourth embodiment of the present invention.
FIG. 5 is a schematic perspective view showing a method for manufacturing the packaging bag according to the fourth embodiment of the present invention.
FIG. 6 is a schematic perspective view showing an example of a packaging bag and a package according to a fifth embodiment of the present invention.
FIG. 7 is an example of an image of SEM image observation in Example 2.
FIG. 8 is an example of an image of SEM image observation in Comparative Example 5.
FIG. 9 is a schematic cross-sectional view showing an example of a laminated film according to a sixth embodiment of the present invention.
FIG. 10 is a schematic cross-sectional view showing an example of a laminated film according to a seventh embodiment of the present invention.
FIG. 11 is a schematic cross-sectional view showing an example of a laminated film according to an eighth embodiment of the present invention.
FIG. 12 is a schematic front view showing an example of a packaging bag and a package according to a ninth embodiment of the present invention.
FIG. 13 is a schematic perspective view showing a method for manufacturing a packaging bag according to the ninth embodiment of the present invention.
FIG. 14 is a schematic perspective view showing an example of a packaging bag and a package according to a tenth embodiment of the present invention.
FIG. 15 is an example of an image of OM image observation in Comparative Example 3.
FIG. 16 is a schematic cross-sectional view showing an example of a laminated film according to an eleventh embodiment of the present invention.
FIG. 17 is a schematic cross-sectional view showing an example of a laminated film according to a twelfth embodiment of the present invention.
FIG. 18 is a schematic front view showing an example of a packaging bag and a package according to a thirteenth embodiment of the present invention.
FIG. 19 is a schematic perspective view showing a method for manufacturing a packaging bag according to the thirteenth embodiment of the present invention.
FIG. 20 is a schematic perspective view showing an example of a packaging bag and a package according to a fourteenth embodiment of the present invention.
FIG. 21 is an example of a photographic image of a laminated film of Example 2.
FIG. 22 is an example of a photographic image of a laminated film of Comparative Example 5.

### [Description of Embodiments]

Hereinafter, embodiments of the present invention will be described with reference to the accompanying drawings. In all the drawings, even in a case where embodiments are different, the same or corresponding member will be given the same reference numerals, and common description will be omitted. Unless particularly otherwise specified, positional relationships such as up, down, right, and left will be based on the positional relationships shown in the drawings.

Hereinafter, in a case where a plurality of suitable numerical ranges is exemplified under a specific numerical range, unless particularly otherwise specified, the combination of the upper limit value and the lower limit value is not limited to an exemplified combination as long as the combination is included within the maximum preferable numerical range. For example, in a case where, as a preferable range of the amount X, "x1 or more and x4 or less" and "x2 or more and x3 or less" are exemplified with an assumption of x1 < x2 < x3 < x4, for example, each numerical range of "more than x1 and less than x4", "x2 or more and x4 or less", "x3 or more and x4 or less" and the like are also a preferable range.

### [First Embodiment]

A laminated film according to a first embodiment of the present invention will be described.

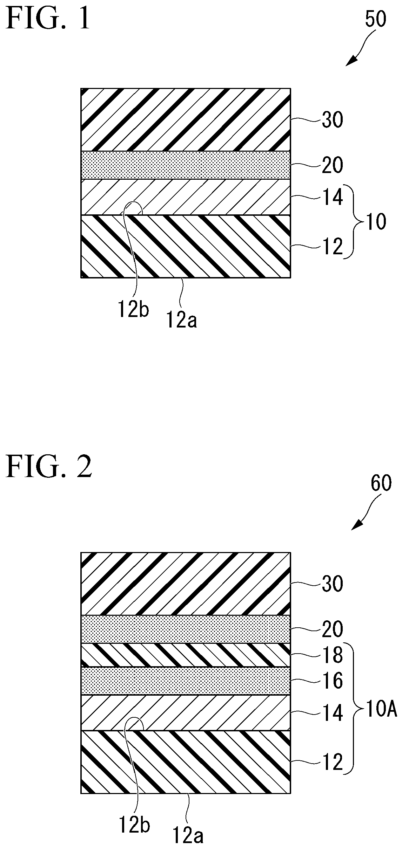

FIG. 1 is a schematic cross-sectional view showing an example of the laminated film according to the first embodiment of the present invention.

A laminated film 50 of the present embodiment shown in FIG. 1 includes a base material film (predetermined layer) 10, an adhesive layer 20, and a sealant layer 30. The base material film 10, the adhesive layer 20, and the sealant layer 30 in the laminated film 50 are laminated in this order. The base material film 10, the adhesive layer 20, and the sealant layer 30 each have a light transmission property of transmitting visible light. Therefore, the laminated film 50 has a light transmission portion through which visible light is transmitted in the thickness direction (vertical direction in the drawing). In the example shown in FIG. 1, the light transmission portion is the entire laminated film 50. The laminated film 50 may not be provided with the light transmission portion.

In the light transmission portion of the laminated film 50, the haze measured in accordance with a haze measurement method specified in JIS-K-7136 is 30% or less. Hereinafter, the haze that is specified in JIS-K-7136 will be simply referred to as "haze".

The base material film 10 has a resin layer 12 and a barrier layer 14. The base material film 10 may not be provided with the barrier layer 14.

The resin layer 12 is composed of, for example, a resin film.

As the resin film, polyester films formed of polyethylene terephthalate (PET), polyethylene naphthalate (PEN), or the like; polyolefin films formed of polyethylene, polypropylene, or the like; polystyrene films; polyamide films formed of a polyamide such as 66-nylon; polycarbonate films; polyacrylonitrile films; polyimide films; engineering plastic films formed of a different engineering plastic; and the like are exemplary examples.

As the resin film that configures the resin layer 12, one of the above-described resin films may be used singly or two or more thereof may be used in combination.

For example, the resin layer 12 may be configured by laminating a plurality of resin films of the same kind.

The resin film may be any of a stretched film or an unstretched film. The resin film may be a multilayer film in which at least one stretched film and at least one unstretched film are laminated.

The resin layer 12 may have a film randomly stretched biaxially. In this case, it is possible to improve the mechanical strength and the dimensional stability.

The resin layer 12 more preferably has one or both of a polyester film and a biaxially-stretched polypropylene film from the viewpoint of satisfying, particularly, both the strength and the flexibility.

The resin layer 12 more preferably has one or both of a polypropylene film and a polyethylene terephthalate film from the viewpoint of, particularly, improving the strength and reducing the cost.

The resin layer 12 more preferably has a nylon film from the viewpoint of improving, particularly, the strength. Nylon films have excellent flexibility and thus do not easily allow the generation of pinholes. Therefore, in a case where a package is formed with a packaging bag in which the laminated film 50 is used, it is possible to suppress the generation of pinholes in the laminated film 50 and the consequent deterioration of an article to be packaged. Such an action is particularly useful in a case where the article to be packaged is a food product.

The thickness of the resin layer 12 can be set to a thickness suitable for an application or a required characteristic and is not particularly limited. The thickness of the resin layer 12 may be, for example, 3 µm or more and 100 µm or less and is more preferably 6 µm or more and 50 µm or less.

The resin layer 12 may contain an appropriate additive. As the additive, at least one selected from a filler, an antistatic agent, a plasticizer, a lubricant, an antioxidant, and the like is an exemplary example.

A surface 12a of the resin layer 12 is a surface that forms the outer surface of the laminated film 50 at the time of forming a packaging bag.

A surface 12b of the resin layer 12 is a surface opposite to the surface 12a in the thickness direction and is a joining surface with the barrier layer 14 to be described below.

An appropriate surface treatment may be performed on the laminated film 50. For example, an appropriate surface treatment that improves adhesion to the barrier layer 14 may be performed on the surface 12b. As an example of the surface treatment, for example, at least one treatment selected from a chemical treatment, a solvent treatment, a corona treatment, a plasma treatment, and an ozone treatment is an exemplary example.

The barrier layer 14 is a layer having a barrier property against at least oxygen and water vapor. The barrier layer 14 is laminated on the surface 12b of the resin layer 12.

The number of layers as the barrier layer 14 is not particularly limited as long as at least one layer having a barrier property is included.

As an example of a case where the barrier layer 14 is composed of a single layer, a vapor-deposited layer composed of an inorganic substance, a barrier film composed of a resin having a barrier property, and the like are exemplary examples.

As an example of a case where the barrier layer 14 is composed of multiple layers, a barrier film obtained by coating the surface of a resin film or the like with an inorganic substance having a barrier property is an exemplary example.

As the inorganic substance that can be used for the barrier layer 14, silica, aluminum, silicon, and the like are exemplary examples. In a case where the barrier layer 14 is formed of a single layer, such an inorganic substance may be vapor-deposited on the surface of the resin layer 12.

As the barrier film that can be used for the barrier layer 14, a nylon-based barrier film, an ethylene vinyl alcohol-based barrier film, and the like are exemplary examples. In a case where the barrier layer 14 is formed of a single layer, such a barrier film may be laminated on the resin layer 12 by extrusion lamination, dry lamination, wet coating, or the like.

For example, in a case where a barrier film coated with an inorganic substance is used as the barrier layer 14, silica, aluminum, silicon, or the like may be used as the inorganic substance. In this case, the barrier film may be laminated on the resin layer 12 by dry lamination or the like.

As the barrier layer 14, one film exemplified above may be used singly or two or more films may be used in combination.

The layer thickness of the barrier layer 14 is not particularly limited. For example, in a case where the barrier layer 14 is composed of a vapor-deposited layer, the layer thickness may be 5 nm or more and 100 nm or less.

The barrier layer 14 can be formed by, for example, a vacuum deposition method, a sputtering method, an ion plating method, a plasma chemical vapor deposition method (CVD), a dry lamination method, an extrusion lamination method, or the like.

The adhesive layer 20 is a layer that causes the barrier layer 14 and the sealant layer 30 to be described below to adhere to each other.

The adhesive layer 20 contains an adhesive component and polyvalent metal particles or polyvalent metal compound particles mixed with the adhesive component.

As the adhesive component, cured products of an urethane-based adhesive, a polyester-based adhesive, a polyamide-based adhesive, an epoxy-based adhesive, an isocyanate-based adhesive, and the like are exemplary examples.

The adhesive component in the adhesive layer 20 is more preferably formed of a two-component curable adhesive in that it is easy to suppress the alteration of the polyvalent metal particles or polyvalent metal compound particles to be described below.

There is a tendency that such an alteration suppression effect appears more significantly in a case where a two-component curable urethane-based adhesive is used. Therefore, among two-component curable adhesives, a urethane-based adhesive is particularly preferably used.

The polyvalent metal particles are particles formed of a metal that generates a polyvalent ion (hereinafter, polyvalent metal). The polyvalent metal compound particles are particles formed of a compound of a polyvalent metal.

The polyvalent metal particles or the polyvalent metal compound particles are used for the purpose of trapping a substance that causes a retort odor (hereinafter, referred to as an odor-causing substance in some cases), for example, a sulfur compound or the like, in the adhesive layer 20. As the sulfur compound that acts as an odor-causing substance, hydrogen sulfide, mercaptans, sulfur dioxide, sulfur trioxide, and the like are exemplary examples.

The principle of the fact that odor-causing substances can be trapped with the polyvalent metal particles and the polyvalent metal compound particles is not always theoretically elucidated, but it is possible to experimentally confirm that the particles are effective for reducing odor-causing substances.

The polyvalent metal particles and the polyvalent metal compound particles that are mixed with the adhesive layer 20 are not particularly limited as long as the particles have an action of trapping a compound that causes a retort odor and can be stably present in the adhesive component of the adhesive layer 20.

As the polyvalent metal particles, for example, particles of an alkaline earth metal such as beryllium, magnesium, or calcium; particles of a transition metal such as titanium, zirconium, chromium, manganese, iron, cobalt, nickel, copper, or zinc; particles of aluminum or the like may be used.

An oxide film may be formed on the surfaces of the polyvalent metal particles or the surfaces thereof may be coated so as to make it easy for the particles to be stably present in the adhesive layer 20.

As the polyvalent metal compound particles, particles of an oxide of a polyvalent metal, a hydroxide, a carbonate, an organic acid salt (for example, acetate), an inorganic acid salt, or the like are an exemplary example. As the polyvalent metal compound particles, for example, particles of an ammonium complex of a polyvalent metal oxide, a secondary to quaternary amine complex of a polyvalent metal oxide, a carbonate or organic acid salt thereof may be used.

It is more preferable to use the polyvalent metal compound particles, which makes it easy for the particles to be stably present in the adhesive layer 20.

As the polyvalent metal compound particles, particles of a zinc compound, an aluminum compound, a magnesium compound, or the like are more preferably used from the viewpoint of stability in the adhesive component and easiness in manufacturing. From the viewpoints of easiness in handling and cost, particles of zinc oxide, aluminum oxide, magnesium oxide, or the like are particularly preferably used as the polyvalent metal compound particles.

Hereinafter, for the sake of simplicity, the polyvalent metal particles or the polyvalent metal compound particles that are mixed with the adhesive component will be referred to as "additive particles" in some cases.

In the adhesive layer 20, one or more kinds of particles can be used as the additive particles that are mixed with the adhesive component.

The content of the additive particles in the adhesive layer 20 is not particularly limited.

As the content of the additive particles increases, the amount of an odor-causing substance trapped increases, which makes it easy to suppress a retort odor. On the other hand, when the content of the additive particles increases, there is a possibility that the lamination strength of the adhesive layer 20 may be likely to decrease or the transparency of the laminated film 50 may deteriorate.

For example, the content of the additive particles in the adhesive layer 20 is more preferably 0.5% by mass or more and 10% by mass or less and still more preferably 1.5% by mass or more and 5% by mass or less in that it is easy to satisfy both the lamination strength of the adhesive layer 20 and the transparency of the laminated film and the retort odor-reducing action.

When the content of the additive particles is less than 1% by mass, there is a possibility that the effect of suppressing a retort odor may be too weak.

When the content of the additive particles exceeds 10% by mass, there is a possibility that the lamination strength of the adhesive layer 20 may become too low or the transparency of the laminated film may become too low.

In the distribution of the additive particles in the adhesive layer 20, a bias is more preferably small. For example, when the distribution of the additive particles concentrates in a specific portion due to aggregation or the like, the transparency of the laminated film 50 is likely to be uneven. The bias of the distribution of the additive particles in the adhesive layer 20 also causes a decrease in the haze or a decrease in the lamination strength.

Particularly, in the adhesive layer 20, when large aggregates of the additive particles are formed, the additive particles form an uneven granular shape and are easily visible. Particularly, in a case where the additive particles having an uneven granular shape are arranged close to each other, the additive particles form uneven streaks and are more easily visible. For example, in a case where the laminated film 50 is used for a packaging bag so as to make an article to be packaged in the packaging bag visible from the outside through the light transmission portion, it is preferable that the uneven granular shape or the uneven streaks are not visible.

For example, from the viewpoint of improving the lamination strength of the adhesive layer 20, the ratio of the maximum diameter of the aggregates to the minimum diameter of the aggregates is preferably 14.0 times or less. In addition, the average aggregate diameter of the aggregates is preferably 150 nm or less.

For the measurement of the diameters of the aggregates, the laminated film 50 is cut with a microtome, and the cross section is observed with SEM. In a measurement method, the adhesive layer 20 is captured 10 µm continuously at a magnification of 10000 times to produce 5 images. The maximum length among the diameters (major axes) of the aggregates included in the 5 captured images is regarded as "the maximum diameter of the aggregates". The minimum length among the diameters of the aggregates included in the 5 captured images is regarded as "the minimum diameter of the aggregates". A value obtained by dividing "the maximum diameter of the aggregates" by "the minimum diameter of the aggregates" is "the ratio of the maximum diameter of the aggregates to the minimum diameter of the aggregates". "The average aggregate diameter of the aggregates" is a value obtained by dividing the total of all diameters (major axes) of the aggregates included in the 5 captured images by the number of the aggregates.

Here, "aggregate" is used in a broad sense and means an apparent mass when observed with a microscope or the like in the thickness direction. Whether the apparent mass has been formed by the aggregation phenomenon of the additive particles or is shown in a massive shape since the distribution density in a certain region when viewed in the thickness direction is high is not particularly differentiated.

For example, it is considered that the additive particles trap an odor-causing substance that permeates the adhesive layer 20 by adsorption.

In order to make it possible for the additive particles to efficiently trap an odor-causing substance, the specific surface area of the additive particles is more preferably as large as possible. Here, the specific surface area represents the surface area per unit mass of the additive particles. For example, the specific surface area of the additive particles may be 1 m2/g or more and is more preferably 5 m2/g or more.

When the specific surface area increases, the particle diameters of the additive particles become too small, and the additive particles are likely to, for example, scatter in the environment, and thus caution is required in handling the additive particles. From the viewpoint of making it easy to handle the additive particles in a manufacturing step, the specific surface area of the additive particles may be 100 m2/g or less and more preferably 50 m2/g.

When the average particle diameter of the additive particles as primary particles is too large, aggregates exceeding 3.0 µm are likely to be formed, and thus the average particle diameter of the additive particles is more preferably as small as possible. However, when the average particle diameter of the additive particles is small to some extent, the maximum diameter of the aggregates changes depending on the mixing method in the manufacturing step, and the correlation between the magnitude of the average particle diameter and the maximum diameter of the aggregates becomes weak.

Hereinafter, unless particularly otherwise specified, the average particle diameter of the additive particles as primary particles will be simply referred to as the average particle diameter of the additive particles. The average particle diameter is calculated from the following general formula by obtaining the area circle equivalent diameters from an image where the powder is enlarged to a magnification of 50,000 to 200,000 times with a transmission electron microscope (TEM). The average particle diameter is represented by a formula of the sum of the area equivalent circle diameters of measured particles/the number of the measured particles (the number of the measured particles is at least 100).

The average particle diameter of the additive particles is not particularly limited and may be, for example, 5 nm or more and 100 nm or less and is more preferably 10 nm or more and 60 nm or less and still more preferably 20 nm or more and 45 nm or less.

For example, when the average particle diameter of the additive particles is less than 5 nm, there is a possibility that the manufacturing cost may increase or it may become difficult to handle the additive particles in the manufacturing step.

For example, when the average particle diameter of the additive particles exceeds 100 nm, the specific surface area becomes small, and thus there is a possibility that the effect of trapping an odor-causing substance may decrease.

In order to reduce the sizes of the aggregates of the additive particles in the adhesive component, the adhesive layer 20 may contain 1 part by mass or more and 50 parts by mass or less of a dispersant with respect to 100 parts by mass of the additive particles.

The kind of the dispersant is not particularly limited as long as the dispersant is capable of dispersing the additive particles in a liquid adhesive component for forming the adhesive component.

As the dispersant, (poly)ester salts, polyether phosphates, alkyl sulfate ester salts, alkylbenzenesulfonates, alkylnaphthalenesulfonates, alkylsulfosuccinates, alkyldiphenylether disulfonates, alkyl phosphates, aromatic phosphates, polyoxyethylene alkyl ethers, polyoxyethylene alkylphenol ethers, polyoxyethylene alkyl esters, alkylallyl sulfate ester salts, polyoxyethylene alkyl phosphates, sorbitan alkyl esters, glycerin fatty acid esters, sorbitan fatty acid esters, sucrose fatty acid esters, polyethylene glycol fatty acid esters, polyoxyethylene sorbitan alkyl esters, polyoxyethylene alkylallyl ethers, polyoxyethylene derivatives, polyoxyethylene sorbitol fatty acid esters, polyoxy fatty acid esters, polyoxyethylene alkylamine, vinyl chloride-vinyl acetate copolymers, and the like are exemplary examples. These dispersants may be used singly or two or more dispersants may be mixed and used.

The lamination strength of the adhesive layer 20 is measured in accordance with JIS Z 0238: 1998 by a T-peel method (crosshead speed: 300 mm/min.) using a TENSILON tensile tester.

The lamination strength of the adhesive layer 20 needs to be, for example, 6 N/15 mm width or more and is more preferably 7 N/15 mm width or more.

The thickness of the adhesive layer 20 is not particularly limited as long as the lamination strength is favorable in the case of forming the laminated film 50 into a packaging bag and the effect of reducing an odor-causing substance is favorable.

The thickness of the adhesive layer 20 may be, for example, 0.01 µm or more and 5 µm or less and is more preferably 0.03 µm or more and 3 µm or less.

When the thickness of the adhesive layer 20 is less than 0.01 µm, there is a possibility that the lamination strength may decrease and the amount of an odor-causing substance trapped may be too small.

When the thickness of the adhesive layer 20 exceeds 5 µm, there is a possibility that the laminated film 50 may become too thick.

The sealant layer 30 is a layer for pasting the laminated film 50 to another laminated film by thermal fusion. The sealant layer 30 is not particularly limited as long as the sealant layer melts by heat and is capable of fusing with a sealant layer in another laminated film.

As the material of the sealant layer 30, for example, resins such as low-density polyethylene, medium-density polyethylene, high-density polyethylene, linear low-density polyethylene, polypropylene, ethylene-vinyl acetate copolymer, an ionomer resin, an ethylene-acrylic acid copolymer, an ethylene-methyl acrylate copolymer, an ethylene-methacrylic acid copolymer, and an ethylene-propylene copolymer are exemplary examples. As the resin that is used for the sealant layer 30, any one of the exemplified resins may be used singly or two or more resins may be used in combination.

For example, in the case of forming a package with the laminated film 50, which will be subjected to boiling sterilization or retort sterilization, the sealant layer 30 more preferably contains an unstretched polypropylene resin from the viewpoint of maintaining sufficient adhesion.

The sealant layer 30 may be laminated on the adhesive layer 20 while forming a film of a resin composition by extrusion lamination or a film-like sheet may be pasted to the adhesive layer 20.

The thickness of the sealant layer 30 may be, for example, 10 µm or more and 150 µm or less and is more preferably 30 µm or more and 80 µm or less.

Next, an example of a method for manufacturing the laminated film 50 will be described.

First, the base material film 10 having the barrier layer 14 laminated on a resin film that forms the resin layer 12 is prepared.

After that, the adhesive layer 20 and the sealant layer 30 are laminated in this order on the barrier layer 14 of the base material film 10.

As a lamination method, for example, dry lamination may be used.

For example, a coating liquid with which the additive particles have been mixed is prepared as an adhesive that forms the adhesive component of the adhesive layer 20 after curing, the coating liquid is applied to and dried on the surface of the barrier layer 14 of the base material film 10 with a dry lamination machine, and a resin film that forms the sealant layer 30 and the base material film 10 are thermally pressed using hot rolls.

A method for applying the coating liquid is not particularly limited. For example, the coating liquid can be applied using a coater such as a roll coater, a reverse roll coater, a gravure coater, a micro gravure coater, a knife coater, a bar coater, a wire bar coater, a die coater, a dip coater, or a spin coater.

As a lamination method, a non-solvent laminator can be used, and, as the adhesive component of the adhesive layer 20, a coating liquid with which a non-solvent adhesive additive particles have been mixed can also be used.

At the time of preparing the coating liquid, it is more preferable to mix the additive particles with the adhesive that forms the adhesive component and sufficiently stir the additive particles so that the sizes of aggregates of the additive particles become 3.0 µm or less. Stirring makes the additive particles dispersed in the coating liquid.

In order to decrease the sizes of the aggregates of the additive particles, it is more preferable to add a dispersant to the coating liquid. The dispersant may be directly added to the adhesive together with the additive particles, but it is more preferable to form a particle dispersion liquid by dispersing the additive particles and the dispersant in a solvent and then mixing and stirring the particle dispersion liquid and the adhesive to prepare the coating liquid. In this case, the dispersion of the additive particles in the coating liquid is promoted.

On the additive particles, it is more preferable to perform a physical fibrillation treatment for refining the additive particles in a state where the additive particles, the dispersant, and the solvent have been mixed together. This promotes the refinement and dispersion of the additive particles in the coating liquid.

As the physical fibrillation treatment, mechanical treatments such as a highpressure homogenizer, an ultrahigh-pressure homogenizer, a ball mill, a roll mill, a cutter mill, a planetary mill, a jet mill, an attritor, a grinder, a juicer mixer, a homomixer, an ultrasonic homogenizer, a NanoGenizer, and aqueous counter collision are exemplary examples.

When a dispersion treatment for dispersing the refined additive particles in the coating liquid is performed using one or more means described above, it is possible to suppress the growth of the aggregates in the coating liquid.

The dispersion treatment also suppresses the formation of a precipitate in the coating liquid and is thus capable of efficiently dispersing the additive particles in the coating liquid.

Once the coating liquid is prepared, it is more preferable to perform the filtration treatment before application.

Since the laminated film 50 includes the barrier layer 14 having a barrier property against oxygen and water vapor, the permeation of oxygen and water vapor that have passed through the resin layer 12 into the adhesive layer 20 and the sealant layer 30 is suppressed. Therefore, it is possible to suppress the intrusion of oxygen, water vapor, or the like into packaging bags. This makes it possible to suppress deterioration of an article to be packaged attributed to at least one of oxygen and water vapor in a package accommodating the article to be packaged in a packaging bag formed of the laminated film 50. Deterioration of the polyvalent metal particles or the polyvalent metal compound particles attributed to at least one of oxygen and water vapor permeating from the outside can also be suppressed in the same manner.

The laminated film 50 has the adhesive layer 20 containing the polyvalent metal particles or the polyvalent metal compound particles between the base material film 10 and the sealant layer 30 and is thus capable of adsorbing an odor-causing substance such as a sulfur compound that has permeated into the adhesive layer 20 through the sealant layer 30. Therefore, in a package accommodating an article to be packaged in a packaging bag formed of the laminated film 50, an odor-causing substance such as a sulfur compound derived from the article to be packaged that has permeated into the adhesive layer 20 is trapped with the polyvalent metal particles or the polyvalent metal compound particles. As a result, it is possible to reduce a retort odor in the article to be packaged.

The polyvalent metal particles or polyvalent metal compound particles contained in the adhesive layer suppress a decrease in the lamination strength of the adhesive layer 20. Since the polyvalent metal particles or the polyvalent metal compound particles are mixed with the adhesive component of the adhesive layer 20, the polyvalent metal particles or the polyvalent metal compound particles react with a component such as acetic acid or amino acid contained in the article to be packaged to suppress alteration. Therefore, the effect of reducing an odor-causing substance and the lamination strength are less likely to decrease over time.

As described above, according to the laminated film 50 of the present embodiment, it is possible to provide a laminated film capable of reducing a retort odor and having a favorable lamination strength.

### [Second Embodiment]

A laminated film according to a second embodiment of the present invention will be described.

FIG. 2 is a schematic cross-sectional view showing an example of the laminated film according to the second embodiment of the present invention.

A laminated film 60 of the present embodiment shown in FIG. 2 includes a base material film (predetermined layer) 10A in place of the base material film 10 in the laminated film 50 of the first embodiment.

The base material film 10A includes an adhesive layer 16 and an intermediate layer 18 in this order between the barrier layer 14 and the adhesive layer 20. Hereinafter, differences from the first embodiment will be mainly described.

The adhesive layer 16 is a layer that causes the barrier layer 14 and the intermediate layer 18 to adhere to each other.

For the adhesive layer 16, one or more materials of the materials exemplified as the adhesive component in the adhesive layer 20 are used. The adhesive layer 16 may be formed of the same material as the adhesive layer 20 in the laminated film 60 or may be formed of a different material.

The adhesive layer 16 may not contain additive particles or may contain additive particles.

In a case where the adhesive layer 16 contains additive particles, the laminated film 60 is an example of a case where there are a plurality of adhesive layers containing additive particles.

In a case where the adhesive layer 16 contains additive particles, the kind, content, specific surface area, layer thickness, and average particle diameter of the additive particles in the adhesive layer 16 are not particularly limited.

For example, the kind, content, specific surface area, layer thickness, and average particle diameter of the additive particles in the adhesive layer 16 are more preferably the same kind and suitable numerical ranges as those exemplified for the adhesive layer 20 in the laminated film 50.

This is also true for the kind, content, specific surface area, layer thickness, and average particle diameter of the adhesive layer 20 in the laminated film 60.

In a case where the adhesive layer 16 contains additive particles, the maximum diameter and distribution of aggregates of the additive particles in the laminated film 60 are not particularly limited.

The maximum diameter of the aggregates of the additive particles in the laminated film 60 in each of the adhesive layers 20 and 16 in the laminated film 60 is more preferably within the preferable range of the adhesive layer 20 in the laminated film 50.

The distribution of the aggregates of the additive particles in the laminated film 60 in each of the adhesive layers 20 and 16 in the laminated film 60 is more preferably within the preferable range for the adhesive layer 20 in the laminated film 50.

The intermediate layer 18 is a resin layer disposed between the barrier layer 14 and the sealant layer 30. The intermediate layer 18 adheres to each of the barrier layer 14 through the adhesive layer 16 and the sealant layer 30 through the adhesive layer 20.

A material of the intermediate layer 18 is not particularly limited.

The kind of the intermediate layer 18 can be selected as appropriate depending on the application of the laminated film 60. For example, when a resin film that is excellent in terms of at least one of an oxygen barrier property, a water vapor barrier property, a mechanical strength, bending resistance, puncture resistance, impact resistance, abrasion resistance, cold resistance, heat resistance, chemical resistance, and light-shielding resistance is selected, the characteristic improves in the laminated film 60.

For example, as a suitable material of the intermediate layer 18, a film of nylon, polyethylene terephthalate, polyamide, polyethylene, polypropylene, polyvinyl chloride, polycarbonate, polyvinyl alcohol, an ethylene-propylene copolymer, an ethylene-vinyl acetate copolymer saponified product, or the like or a resin film having a vapor-deposited layer is an exemplary example.

For example, when nylon is used as the intermediate layer 18, the flexibility improves, and it is possible to suppress the generation of pinholes even in a case where a large external force is applied. Therefore, in a case where a package is formed with a packaging bag in which the laminated film 50 is used, it is possible to suppress the generation of pinholes in the laminated film 60 and the consequent deterioration of an article to be packaged. Such an action is particularly useful in a case where the article to be packaged is a food product.

The laminated film 60 of the present embodiment can be manufactured in the same manner as the laminated film 50 except that the base material film 10A having the adhesive layer 16 and the intermediate layer 18 laminated on the barrier layer 14 is formed in place of the base material film 10.

Particularly, in a case where the adhesive layer 16 contains the additive particles, the adhesive layer 16 can be manufactured in the same manner as the adhesive layer 20 in the first embodiment.

The laminated film 60 of the present embodiment has the same configuration as the laminated film 50 of the first embodiment except that the adhesive layer 16 and the intermediate layer 18 are laminated between the barrier layer 14 and the adhesive layer 20, and thus it is possible to provide a laminated film capable of reducing a retort odor and having a favorable lamination strength.

Particularly, since the laminated film 60 includes the intermediate layer 18, it is possible to improve the characteristics of the laminated film 60 depending on the characteristics of the intermediate layer 18.

Furthermore, in a case where the adhesive layer 16 contains polyvalent metal particles or polyvalent metal compound particles, since two layers trap an odor-causing substance, it is possible to improve the effect of reducing an odor-causing substance.

### [Third Embodiment]

A laminated film according to a third embodiment of the present invention will be described.

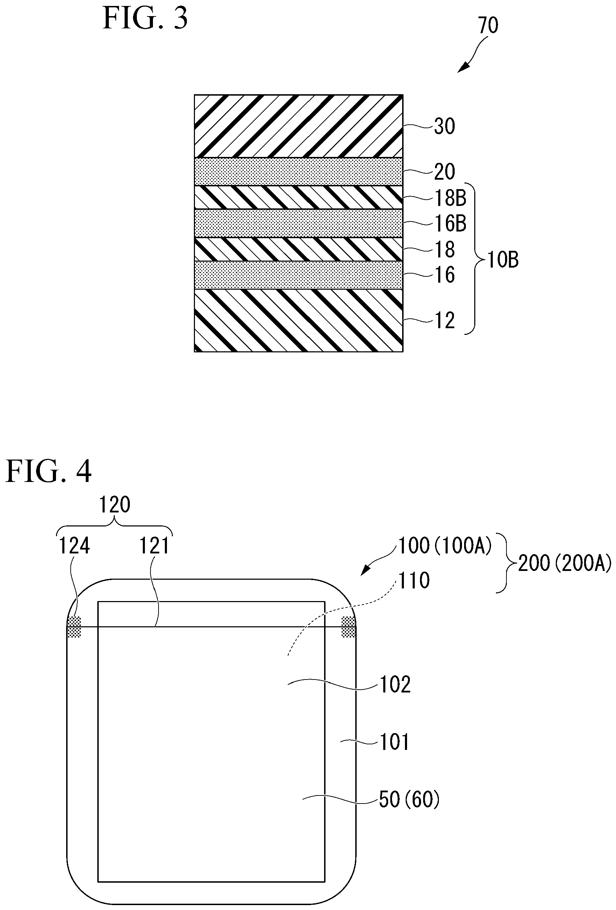

FIG. 3 is a schematic cross-sectional view showing an example of the laminated film according to the third embodiment of the present invention.

A laminated film 70 of the present embodiment shown in FIG. 3 includes a base material film (predetermined layer) 10B in place of the base material film 10A in the laminated film 70 of the second embodiment. In the laminated film 70, the resin layer 12, the adhesive layer 16, the intermediate layer 18, an adhesive layer 16B, and an intermediate layer 18B are laminated in this order. Hereinafter, differences from the second embodiment will be mainly described.

The adhesive layer 16 is a layer that causes the resin layer 12 and the intermediate layer 18 to adhere to each other. The adhesive layer 16B is a layer that causes the intermediate layer 18 and the intermediate layer 18B to adhere to each other.

For the adhesive layers 16 and 16B, one or more materials of the materials exemplified as the adhesive component in the adhesive layer 20 are used. The adhesive layers 16 and 16B may be formed of the same material as the adhesive layer 20 in the laminated film 70 or may be formed of a different material.

The adhesive layers 16 and 16B may not contain additive particles or may contain additive particles.

In a case where the adhesive layers 16 and 16B contain additive particles, the laminated film 70 is an example of a case where there are a plurality of adhesive layers containing additive particles.

In a case where the adhesive layers 16 and 16B contain additive particles, the kind, content, specific surface area, layer thickness, and average particle diameter of the additive particles in the adhesive layers 16 and 16B are not particularly limited.

For example, the kind, content, specific surface area, layer thickness, and average particle diameter of the additive particles in the adhesive layers 16 and 16B are more preferably the same kind and suitable numerical ranges as those exemplified for the adhesive layer 20 in the laminated film 50.

This is also true for the kind, content, specific surface area, layer thickness, and average particle diameter of the adhesive layer 20 in the laminated film 70.

In a case where the adhesive layers 16 and 16B contain additive particles, the maximum diameter and distribution of aggregates of the additive particles in the laminated film 70 are not particularly limited.

The maximum diameter of the aggregates of the additive particles in the laminated film 70 in each of the adhesive layers 16 and 16B in the laminated film 70 is more preferably within the preferable range of the adhesive layer 20 in the laminated film 50.

The distribution of the aggregates of the additive particles in the laminated film 70 in each of the adhesive layers 16 and 16B in the laminated film 70 is more preferably within the preferable range of the adhesive layer 20 in the laminated film 50.

The intermediate layer 18 is a resin layer disposed between the resin layer 12 and the intermediate layer 18B. The intermediate layer 18 adheres to each of the resin layer 12 through the adhesive layer 16 and the intermediate layer 18B through the adhesive layer 16B.

A material of the intermediate layer 18 is not particularly limited.

The kind of the intermediate layer 18 can be selected as appropriate depending on the application of the laminated film 70. For example, when a resin film that is excellent in terms of at least one of an oxygen barrier property, a water vapor barrier property, a mechanical strength, bending resistance, puncture resistance, impact resistance, abrasion resistance, cold resistance, heat resistance, chemical resistance, and light-shielding resistance is selected, the characteristic improves in the laminated film 70.

For example, as a suitable material of the intermediate layer 18, a film of nylon, polyethylene terephthalate, polyamide, polyethylene, polypropylene, polyvinyl chloride, polycarbonate, polyvinyl alcohol, an ethylene-propylene copolymer, an ethylene-vinyl acetate copolymer saponified product, or the like or a resin film having a vapor-deposited layer is an exemplary example.

For example, when nylon is used as the intermediate layer 18, the flexibility improves, and it is possible to suppress the generation of pinholes even in a case where a large external force is applied. Therefore, in a case where a package is formed with a packaging bag in which the laminated film 70 is used, it is possible to suppress the generation of pinholes in the laminated film 70 and the consequent deterioration of an article to be packaged. Such an action is particularly useful in a case where the article to be packaged is a food product.

The intermediate layer 18B is a layer disposed between the intermediate layer 18 and the sealant layer 30. The intermediate layer 18B adheres to each of the intermediate layer 18 through the adhesive layer 16B and the sealant layer 30 through the adhesive layer 20.

For example, an aluminum film foil can be used as the intermediate layers 18 and 18B. Aluminum film foils do not easily transmit gas or liquid and have a characteristic of shielding light. Therefore, in a case where a package is formed with a packaging bag in which the laminated film 70 is used, it is possible to suppress the deterioration of an article to be packaged. In addition, since aluminum film foils do not let smells out, it is possible to suppress flavor being degraded by leakage of scent. Such an action is particularly useful in a case where the article to be packaged is a food product.

According to the laminated film 70 of the present embodiment, it is possible to provide a laminated film capable of reducing a retort odor and having a favorable lamination strength.

### [Fourth Embodiment]

A packaging bag and a package according to a fourth embodiment of the present invention will be described.

FIG. 4 is a schematic front view showing an example of the packaging bag and the package according to the fourth embodiment of the present invention.

As shown in FIG. 4, a package 200 of the present embodiment includes a packaging bag 100 of the present embodiment and an article to be packaged 110 accommodated in the packaging bag 100.

The packaging bag 100 includes a seal portion 101 formed by pasting the peripheral edges of a pair of the laminated films 50 cut into a substantially rectangular shape together and an accommodation portion 102 formed between the pair of laminated films 50 surrounded by the seal portion 101. That is, in the packaging bag 100, the side end portions, the lower end portion, and the upper end portion are sealed with the seal portion 101.

The accommodation portion 102 forms an accommodation space sandwiched between the pair of laminated films 50 and surrounded by the seal portion 101 and accommodates, for example, the article to be packaged 110 such as food.

For example, the package 200 may be a retort food product obtained by heat-sterilizing the article to be packaged 110 composed of food and sealing the article to be packaged with the packaging bag 100.

The pair of laminated films 50 are formed by cutting the laminated films 50 of the first embodiment to appropriate sizes.

The pair of laminated films 50 are overlaid so that the sealant layers 30 face each other. Each sealant layer 30 is thermally fused to the outer peripheral portion of the pair of laminated films 50. Therefore, the seal portion 101 is formed.

The packaging bag 100 includes an opening portion 120. For example, the opening portion 120 has a pair of easy-to-open processed portions 124 formed in the seal portion 101 at the side end portions and a half-cut line 121 that serves as a path of cutting between the pair of easy-to-open processed portions 124.

The easy-to-open processed portion 124 is not particularly limited as long as the portion is configured to enable the easy opening of the packaging bag 100. For example, the easy-to-open processed portion 124 may be formed of a scar group composed of a collection of fine recess portions formed on the surface of the seal portion 101. For example, the easy-to-open processed portion 124 may be a notch that penetrates an end edge of the seal portion 101 in the thickness direction. The shape of the notch is not particularly limited, and the notch may be, for example, a V-shaped, U-shaped, or I-shaped notch.

For example, the half-cut line 121 can be formed by laser processing.

A method for manufacturing the packaging bag 100 and the package 200 will be described.

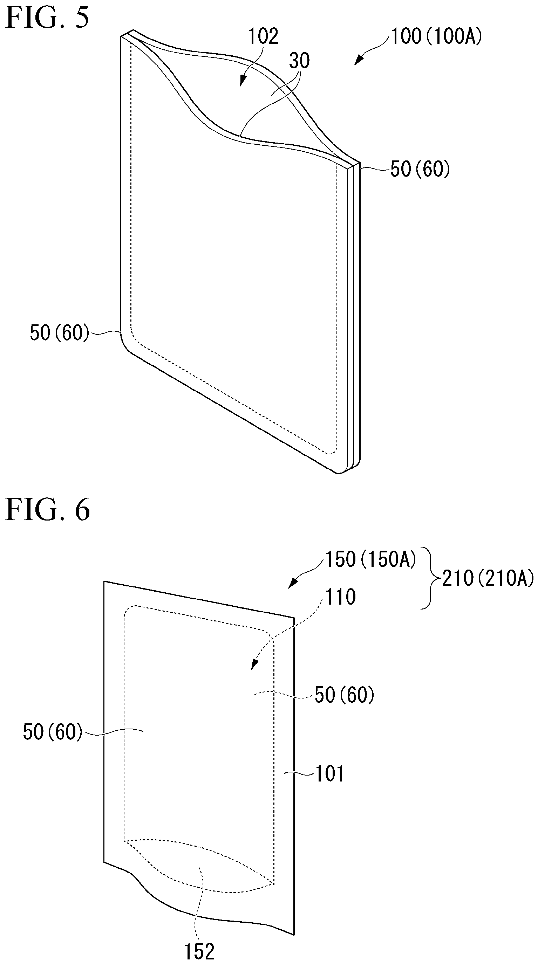

FIG. 5 is a schematic perspective view showing a method for manufacturing the packaging bag according to the fourth embodiment of the present invention.

A pair of the laminated films 50 cut in accordance with the outer shape of the packaging bag 100 are prepared.

After that, as shown in FIG. 5, the sealant layers 30 of the individual laminated films 50 are made to face each other, and the sealant layers 30 are thermally fused together at the lower end portions and side end portions of the individual laminated films 50.

Therefore, the seal portion 101 is formed at the lower end portion and the side end portions. The accommodation portion 102 is formed in the individual laminated films 50 surrounded by the seal portion 101 in a U-shape.

At the upper end of the packaging bag 100, a slit portion that communicates with the accommodation portion 102 is formed.

After that, the article to be packaged 110 is loaded from the upper end portion of the packaging bag 100 in an unsealed state. After that, the sealant layers 30 of the laminated films 50 facing each other at the upper end portions are thermally fused together, thereby forming the seal portion 101 at the upper end portion as well. The package 200 as shown in FIG. 4 can be manufactured as described above.

In the packaging bag 100 of the present embodiment, the accommodation portion 102 is formed of the same laminated films 50 as the first embodiment.

Since each laminated film 50 has the barrier layer 14, it is possible to suppress oxygen and water vapor permeating into the inside from the outside and to suppress deterioration of the members inside the barrier layer 14 and the article to be packaged 110 attributed to oxygen and water vapor.

Each laminated film 50 contains the polyvalent metal particles or the polyvalent metal compound particles in the adhesive layer 20 inside (on the article to be packaged side) the barrier layer 14. Therefore, it is possible to adsorb a retort odor-causing substance, such as a sulfur compound, that is generated from the article to be packaged 110 for a long period of time. Therefore, the packaging bag 100 is capable of suppressing the accumulation of a retort odor-causing substance, which accumulates in the article to be packaged 110 in the accommodation portion 102, in the article to be packaged 110 in the accommodation portion 102.

As a result, it is possible to reduce a retort odor that is generated in a case where the package 200 is opened.

Depending on the kind, there are cases where the article to be packaged 110 contains a component that alters the polyvalent metal particles or the polyvalent metal compound particles and degrades the retort odor-trapping action (deterioration-causing component). For example, acids, such as acetic acid, contained in a variety of food products are likely to alter the polyvalent metal particles or the polyvalent metal compound particles.

In the present embodiment, since the polyvalent metal particles or the polyvalent metal compound particles are mixed with the adhesive component and covered with the adhesive component, for example, the chemical reaction between the polyvalent metal particles or the polyvalent metal compound particles and the deterioration-causing component is suppressed, and thus the polyvalent metal particles or the polyvalent metal compound particles are less likely to deteriorate.

As described above, according to the packaging bag 100 and the package 200 of the present embodiment, since the laminated films 50 of the first embodiment are provided, similar to the first embodiment, it is possible to provide a packaging bag and a package each capable of reducing a retort odor and having a favorable lamination strength. The same action is provided even when the laminated film 60 of the second embodiment or the laminated film 70 of the third embodiment is employed in place of the laminated film 50.

### [Fifth Embodiment]

A packaging bag and a package according to a fifth embodiment of the present invention will be described.

FIG. 6 is a schematic perspective view showing an example of the packaging bag and the package according to the fifth embodiment of the present invention.

As shown in FIG. 6, a package 210 of the present embodiment includes a packaging bag 150 and the same article to be packaged 110 as in the fourth embodiment.

The packaging bag 150 is a stand-up pouch including a pair of the laminated films 50 and a bottom tape made to adhere to the lower end portion of each laminated film 50. A bottom tape 152 is composed of a laminated film having the same layer configuration as that of the laminated film 50.

The packaging bag 150 and the package 210 of the present embodiment are configured in the same manner as the packaging bag 100 and the package 200 of the fourth embodiment except that the packaging bag 150 and the package 210 include the bottom tape 152 and are thus formed in a stand-up pouch shape.

The package 210 can be manufactured by manufacturing the packaging bag 150 having a slit formed at the upper end portion by a well-known method for manufacturing a stand-up pouch in which a pair of the laminated films 50 and the bottom tape 152 are used, then, loading the article to be packaged 110 from the upper end portion, and sealing the upper end portion to form the seal portion 101.

The packaging bag 150 and the package 210 of the present embodiment include the laminated films 50 as in the fourth embodiment and thus have the same action as in the fourth embodiment. The same action is provided even when the laminated film 60 of the second embodiment or the laminated film 70 of the third embodiment is employed in place of the laminated film 50.

In each of the above-described embodiments, examples where the laminated films 50 and 60 are entire light transmission portions have been described.

However, a light transmission portion may be formed in a part of each of the laminated films 50 and 60 by providing a printed layer on an appropriate portion of the laminated film 50 or 60 and thereby forming a light-shielding portion on a part of each of the laminated films 50 and 60.

For example, in a case where the packaging bag 100 is formed of a pair of the laminated films 50 as in the fourth embodiment, a light-shielding portion by a printed layer may be formed in one or both of the pair of laminated films 50.

For example, in the laminated films 50 and 60, the printed layer may be provided between the resin layer 12 and the barrier layer 14.

The printed layer is, for example, a layer composed of an ink formed by adding a variety of pigments, a plasticizer, a drying agent, a stabilizer, and the like to a binder resin such as a urethane-based resin, an acrylic resin, a nitrocellulose-based resin, or a rubber-based resin. This printed layer makes it possible to display a character, a pattern, and the like. As a printing method, for example, a well-known printing method such as offset printing, gravure printing, flexographic printing, silk screen printing, or inkjet printing can be used.

On the surface 12b of the resin layer 12 that forms the printed layer, a corona treatment or an ozone treatment may be performed in advance as a pretreatment. In this case, it is possible to improve the adhesion between the printed layer and the resin layer 12.

The layer configurations of the laminated films in the first and second embodiments are examples. For example, the laminated film may include a random layer or a thin film between the adhesive layer 20 and the sealant layer 30 or between the resin layer 12 and the barrier layer 14 as long as the function of the laminated film is not significantly impaired.

In the description of the second embodiment, an example where the polyvalent metal particles or the polyvalent metal compound particles are contained in the adhesive layer 20 of the laminated film 60 and an example where the polyvalent metal particles or the polyvalent metal compound particles are contained in both of the adhesive layers 20 and 16 of the laminated film 60 have been described. However, the polyvalent metal particles or the polyvalent metal compound particles may be contained only in the adhesive layer 16.

In the description of the second embodiment, an example where there is one intermediate layer has been described. However, in the laminated film, two or more intermediate layers may be included.

The resin layer 12, the adhesive layer 16, the intermediate layer 18, the adhesive layer 16, the barrier layer 14 containing aluminum, the adhesive layer 20, and the sealant layer 30 may be laminated in this order.

The resin layer 12, the adhesive layer 16, the barrier layer 14 containing aluminum, the adhesive layer 20, and the sealant layer 30 may be laminated in this order.

The barrier layer 14, the adhesive layer 16, the intermediate layer 18, the adhesive layer 20, and the sealant layer 30 may be laminated in this order.

The resin layer 12, the adhesive layer 16, the intermediate layer 18, the adhesive layer 20, and the sealant layer 30 may be laminated in this order.

The intermediate layer 18, the adhesive layer 20, and the sealant layer 30 may be laminated in this order.

The resin layer 12, the adhesive layer 20, and the sealant layer 30 may be laminated in this order.

The intermediate layer 18, the barrier layer 14, the adhesive layer 20, and the sealant layer 30 may be laminated in this order.

The sealant layer 30 may be configured in the same manner as the resin layer 12.

The sealant layer 30 may be configured to impart a light-shielding property by light-shielding printing.

A full-tone printed layer may be provided on the resin layer 12 or the barrier layer 14. For example, in a case where the resin layer 12, the adhesive layer 16, the intermediate layer 18, the adhesive layer 20, and the sealant layer 30 are laminated in this order, a full-tone printed layer provided on the resin layer 12 is disposed between the resin layer 12 and adhesive layer 16.

In addition, for example, in a case where the resin layer 12, the barrier layer 14, the adhesive layer 16, the intermediate layer 18, the adhesive layer 20, and the sealant layer 30 are laminated in this order, a full-tone printed layer provided on the barrier layer 14 is disposed between the barrier layer 14 and the adhesive layer 16.

In the above-described fourth embodiment, an example where the packaging bag 100 and the package 200 are formed using the pair of laminated films 50 has been described.

However, as shown in FIGS. 4 and 5, a packaging bag 100A and a package 200A may be formed of a pair of the laminated films 60 or 70 in place of the pair of laminated films 50.

The packaging bag 100A and the package 200A can be manufactured in the same manner as the packaging bag 100 and the package 200 except that the pair of laminated films 60 are used in place of the pair of laminated films 50.

The packaging bag 100A and the package 200A include the pair of laminated films 60 and thus have the same action as the laminated film 60.

In the above-described fourth embodiment, an example where the packaging bag 150 and the package 210 are formed using the pair of laminated films 50 has been described.

However, as shown in FIG. 6, a packaging bag 150A and a package 210A may be formed of a pair of the laminated films 60 or 70 in place of the pair of laminated films 50.

The packaging bag 150A and the package 210A can be manufactured in the same manner as the packaging bag 150 and the package 210 except that the pair of laminated films 60 are used in place of the pair of laminated films 50.

The packaging bag 150A and the package 210A include the pair of laminated films 60 and thus have the same action as the laminated film 60.

In the above-described fourth and fifth embodiments, examples where the packaging bag and the package are formed using the pair of laminated films 50 have been described. However, as long as the laminated film 50 is used in some of the outer peripheral portions of the packaging bags and the packages, laminated films in the other outer peripheral portions may have a different layer configuration from the laminated film 50.

For example, in a case where a retort odor can be suppressed with the polyvalent metal particles or polyvalent metal compound particles contained in one laminated film 50, polyvalent metal particles or polyvalent metal compound particles may not be contained in other laminated films.

In the above-described fourth and fifth embodiments, examples where the packaging bags are a gusseted bag and a stand-up pouch have been described, but the shape of the packaging bag is not limited thereto, and the packaging bag may have other well-known bag shapes.

For example, the shape of the packaging bag may be a two-side seal bag, a three-side seal bag, or a center seal bag.

For example, the packaging bag may include a synthetic resin fastener that can be sealed repeatedly by fitting a spout or a strip-like protrusion with a strip-like groove.

The packaging bag may have one or a plurality of functions such as retort packaging, boiling packaging, and microwave packaging.

In the above-described fourth and fifth embodiments, examples where the article to be packaged 110 is food have been described, but the article to be packaged 110 is not limited to food.

The article to be packaged 110 may be curry, oden, noodle soup, seasoning liquid, pasta sauce, side dishes, soup, kamameshi mix, and pet food.

### [Examples]

Next, Examples 1 to 31 of the embodiments of the present invention will be described together with Comparative Examples 1 to 20. The configurations of Examples 1 to 22 and Comparative Examples 1 to 14 are the configuration of the second embodiment of the present invention.

The configurations of Examples 23 to 31 and Comparative Examples 15 to 20 are the configuration of the third embodiment of the present invention.

First, particle dispersion liquids used for the manufacturing of laminated films of Examples 1 to 31 and Comparative Examples 1 to 20 will be collectively described. Each particle dispersion liquid was used for the manufacturing of an adhesive containing polyvalent metal compound particles.

The following [Table 1] shows the compositions of the particle dispersion liquids and dispersion treatments used for the manufacturing of the laminated films of Examples 1 to 31 and Comparative Examples 1 to 20.

**[Table 1]**

| | Particles | | | Dispersant | | Dispersion treatment |
|---|---|---|---|---|---|---|
| | Material | Parts by mass | Average particle diameter (nm) | Name | Parts by mass | |
| Particle dispersion liquid 11Aa | ZnO | 100 | 35 | Dispersant A | 5 | Bead mill |
| Particle dispersion liquid 11Ba | ZnO | 100 | 35 | Dispersant A | 40 | Bead mill |
| Particle dispersion liquid 11Ca | ZnO | 100 | 35 | Dispersant A | 20 | Bead mill |
| Particle dispersion liquid 12Aa | ZnO | 100 | 35 | Dispersant B | 5 | Bead mill |
| Particle dispersion liquid 12Ba | ZnO | 100 | 35 | Dispersant B | 40 | Bead mill |
| Particle dispersion liquid 13Aa | ZnO | 100 | 35 | Dispersant C | 5 | Bead mill |
| Particle dispersion liquid 13Ba | ZnO | 100 | 35 | Dispersant C | 40 | Bead mill |
| Particle dispersion liquid 14Aa | ZnO | 100 | 20 | Dispersant A | 5 | Bead mill |
| Particle dispersion liquid 14Ba | ZnO | 100 | 20 | Dispersant A | 40 | Bead mill |
| Particle dispersion liquid 14Ca | ZnO | 100 | 20 | Dispersant A | 20 | Bead mill |
| Particle dispersion liquid 15Aa | ZnO | 100 | 60 | Dispersant A | 5 | Bead mill |
| Particle dispersion liquid 15Ba | ZnO | 100 | 60 | Dispersant A | 40 | Bead mill |
| Particle dispersion liquid 100a | ZnO | 100 | 35 | - | - | Bead mill |
| Particle dispersion liquid 200a | Al₂O₃ | 100 | 45 | - | - | Bead mill |
| Particle dispersion liquid 300a | MgO | 100 | 20 | - | - | Bead mill |
| Particle dispersion liquid 400a | ZnO | 100 | 20 | - | - | Bead mill |
| Particle dispersion liquid 11Ab | ZnO | 100 | 35 | Dispersant A | 5 | Stirring only |
| Particle dispersion liquid 11Bb | ZnO | 100 | 35 | Dispersant A | 40 | Stirring only |
| Particle dispersion liquid 11Cb | ZnO | 100 | 35 | Dispersant A | 20 | Stirring only |
| Particle dispersion liquid 14Ab | ZnO | 100 | 20 | Dispersant A | 5 | Stirring only |
| Particle dispersion liquid 14Bb | ZnO | 100 | 20 | Dispersant A | 40 | Stirring only |
| Particle dispersion liquid 100b | ZnO | 100 | 35 | - | - | Stirring only |
| Particle dispersion liquid 200b | Al₂O₃ | 100 | 45 | - | - | Stirring only |
| Particle dispersion liquid 300b | MgO | 100 | 20 | - | - | Stirring only |
| Particle dispersion liquid 400b | ZnO | 100 | 20 | - | - | Stirring only |

### [Particle dispersion liquid 11Aa]

As shown in [Table 1], a particle dispersion liquid 11Aa was prepared by dispersing fine particles of zinc oxide (ZnO), which is a polyvalent metal oxide, (hereinafter, zinc oxide particles) in ethyl acetate.

The particle dispersion liquid 11Aa was prepared as described below.

First, the zinc oxide particles were added to ethyl acetate, which was a solvent, to form a liquid mixture. As the zinc oxide particles, FINEX-30 (trade name; manufactured by Sakai Chemical Industry Co., Ltd.) having an average particle diameter of 35 nm was used. The amount of FINEX (registered trademark)-30 added was set to an amount at which the solid content concentration of the liquid mixture became 30% by mass.

After that, a dispersant A containing polyester acid amide amine salt, alkylcyclohexane, and propylene glycol monomethyl ether acetate was added to the liquid mixture. The dispersant A is a dispersant containing amide amino acid of a high-molecular-weight polyester acid as a main component.

The amount of the dispersant A added was set to 5 parts by mass relative to 100 parts by mass of the solid content of the zinc oxide particles in the liquid mixture.

A dispersion treatment (described as "bead mill" in [Table 1]) was performed on this liquid mixture using a planetary ball mill.

As a result, the particle dispersion liquid 11Aa containing zinc oxide particles dispersed in the solvent was prepared.

### [Particle dispersion liquid 11Ba]

A particle dispersion liquid 11Ba was prepared in the same manner as the particle dispersion liquid 11Aa except that the amount of the dispersant added was set to 40 parts by mass.

### [Particle dispersion liquid 11Ca]

A particle dispersion liquid 11Ca was prepared in the same manner as the particle dispersion liquid 11Aa except that the amount of the dispersant added was set to 20 parts by mass.

### [Particle dispersion liquids 12Aa and 12Ba]

A particle dispersion liquid 12Aa was prepared in the same manner as the particle dispersion liquid 11Aa except that a dispersant B containing phosphoric acid ester was used in place of the dispersant A as a dispersant. The dispersant B is a polyether phosphate compound-based dispersant.

A particle dispersion liquid 12Ba was prepared in the same manner as the particle dispersion liquid 12Aa except that the amount of the dispersant added was set to 40 parts by mass.

### [Particle dispersion liquids 13Aa and 13Ba]

A particle dispersion liquid 13Aa was prepared in the same manner as the particle dispersion liquid 11Aa except that a dispersant C containing a vinyl chloride/vinyl acetate-based copolymer, acetone, and methanol was used in place of the dispersant A as a dispersant. The dispersant C is a dispersant containing a vinyl chloride-vinyl acetate copolymer resin as a main component.

A particle dispersion liquid 13Ba was prepared in the same manner as the particle dispersion liquid 13Aa except that the amount of the dispersant added was set to 40 parts by mass.

### [Particle dispersion liquids 14Aa, 14Ba, and 14Ca]

A particle dispersion liquid 14Aa was prepared in the same manner as the particle dispersion liquid 11Aa except that FINEX (registered trademark)-50 (trade name; manufactured by Sakai Chemical Industry Co., Ltd.), which is zinc oxide particles having an average particle diameter of 20 nm as primary particles, was used in place of FINEX-30 (registered trademark) having an average particle diameter of 35 nm as primary particles.

A particle dispersion liquid 14Ba was prepared in the same manner as the particle dispersion liquid 14Aa except that the amount of the dispersant added was set to 40 parts by mass.

A particle dispersion liquid 14Ca was prepared in the same manner as the particle dispersion liquid 14Aa except that the amount of the dispersant added was set to 20 parts by mass.

### [Particle dispersion liquids 15Aa and 15Ba]

A particle dispersion liquid 15Aa was prepared in the same manner as the particle dispersion liquid 11Aa except that FINEX (registered trademark)-20, which is zinc oxide particles having an average particle diameter of 60 nm as primary particles, was used in place of FINEX (registered trademark)-30.

A particle dispersion liquid 15Ba was prepared in the same manner as the particle dispersion liquid 15Aa except that the amount of the dispersant added was set to 40 parts by mass.

### [Particle dispersion liquids 100a, 200a, 300a, and 400a]

A particle dispersion liquid 100a was prepared in the same manner as the particle dispersion liquid 11Aa except that the dispersant was not added.

A particle dispersion liquid 200a was prepared in the same manner as the particle dispersion liquid 100a except that the particles of aluminum oxide (Al2O3) (hereinafter, aluminum oxide particles) manufactured by Fujifilm Wako Pure Chemical Corporation were used in place of the zinc oxide particles. The average particle diameter of the aluminum oxide particles was 45 nm.

A particle dispersion liquid 300a was prepared in the same manner as the particle dispersion liquid 100a except that the particles of magnesium oxide (MgO) (hereinafter, magnesium oxide particles) manufactured by Stream Chemicals, Inc. were used in place of the zinc oxide particles. The average particle diameter of the magnesium oxide particles was 20 nm.

A particle dispersion liquid 400a was prepared in the same manner as the particle dispersion liquid 100a except that FINEX (registered trademark)-50 was used in place of FINEX (registered trademark)-30.

### [Particle dispersion liquids 11 Ab, 11Bb, and 11Cb]

A particle dispersion liquid 11Ab was prepared in the same manner as the particle dispersion liquid 11Aa except that the dispersion treatment using a planetary ball mill was not performed and the liquid mixture was stirred for 10 minutes using a stirring blade (expressed as "stirring only" in [Table 1]).

A particle dispersion liquid 11Bb was prepared in the same manner as the particle dispersion liquid 11Ab except that the amount of the dispersant added was set to 40 parts by mass.

A particle dispersion liquid 11 Cb was prepared in the same manner as the particle dispersion liquid 11Ab except that the amount of the dispersant added was set to 20 parts by mass.

### [Particle dispersion liquids 14Ab and 14Bb]

A particle dispersion liquid 14Ab was prepared in the same manner as the particle dispersion liquid 14Aa except that the dispersion treatment using a planetary ball mill was not performed and the liquid mixture was stirred for 10 minutes using a stirring blade.

A particle dispersion liquid 14Bb was prepared in the same manner as the particle dispersion liquid 14Ab except that the amount of the dispersant added was set to 40 parts by mass.

### [Particle dispersion liquids 100b, 200b, 300b, and 400b]

A particle dispersion liquid 100b was prepared in the same manner as the particle dispersion liquid 100a except that the dispersion treatment using a planetary ball mill was not performed and the liquid mixture was stirred for 10 minutes using a stirring blade.

A particle dispersion liquid 200b was prepared in the same manner as the particle dispersion liquid 200a except that the dispersion treatment using a planetary ball mill was not performed and the liquid mixture was stirred for 10 minutes using a stirring blade.

A particle dispersion liquid 300b was prepared in the same manner as the particle dispersion liquid 300a except that the dispersion treatment using a planetary ball mill was not performed and the liquid mixture was stirred for 10 minutes using a stirring blade.

A particle dispersion liquid 400b was prepared in the same manner as the particle dispersion liquid 400a except that the dispersion treatment using a planetary ball mill was not performed and the liquid mixture was stirred for 10 minutes using a stirring blade.

The following [Table 2] shows the manufacturing conditions and evaluation results of Examples 1 to 31 and Comparative Examples 1 to 20.

**[Table 2]**

| | Particle dispersion liquid | Coating liquid | Particle amount (% by mass) | Cross-sectional SEM image observation results | | | | | | | H₂S concentration (mg/L) | Lamination strength (N) | | Evaluation | | |
|---|---|---|---|---|---|---|---|---|---|---|---|---|---|---|---|---|
| | | | | Maximum aggregate diameter (nm) | Minimum aggregate diameter (nm) | Ratio | Average aggregate diameter (nm) | Number of aggregates 1 | Number of aggregates 2 | Distance between aggregates (µm) | | Before treatment | After treatment | Odor | Strength | Comprehensive |
| Example 1 | 11Aa | 11Aa | 1.5 | 100 | 35 | 2.86 | 40 | 80 | 0 | 2.0 | 0.03 | 11 | 8 | A | A | A |
| Example 2 | 11Ca | 11Ca | 3.0 | 100 | 35 | 2.86 | 40 | 150 | 0 | 1.0 | 0.02 | 11 | 8 | A | A | A |
| Example 3 | 11Ca | 11Ca+ | 5.0 | 100 | 35 | 2.86 | 40 | 250 | 0 | 0.6 | 0.01 | 11 | 8 | A | A | A |
| Example 4 | 11Ba | 11Ba | 1.5 | 100 | 35 | 2.86 | 40 | 80 | 0 | 20 | 0.03 | 11 | 8 | A | A | A |
| Example 5 | 12Aa | 12Aa | 1.5 | 200 | 35 | 5.71 | 90 | 70 | 0 | 23 | 0.03 | 11 | 8 | A | A | A |
| Example 6 | 12Ba | 12Ba | 1.5 | 200 | 35 | 5.71 | 90 | 70 | 0 | 23 | 0.03 | 11 | 8 | A | A | A |
| Example 7 | 13Aa | 13Aa | 1.5 | 200 | 35 | 5.71 | 90 | 70 | 0 | 2.3 | 0.03 | 11 | 8 | A | A | A |
| Example 8 | 13Ba | 13Ba | 1.5 | 200 | 35 | 5.71 | 90 | 70 | 0 | 2.3 | 0.03 | 11 | 8 | A | A | A |
| Example 9 | 100a | 100a | 1.5 | 250 | 35 | 7.14 | 110 | 60 | 0 | 2.7 | 0.03 | 11 | 8 | A | A | A |
| Example 10 | 11Aa | 11Aa+ | 9.5 | 100 | 35 | 2.86 | 40 | 400 | 0 | 0.4 | 0.01 | 11 | 8 | A | A | A |
| Example 11 | 100a | 100a+ | 9.5 | 250 | 35 | 7.14 | 110 | 200 | 0 | 0.8 | 0.01 | 11 | 8 | A | A | A |
| Example 12 | 14Aa | 14Aa | 1.5 | 80 | 20 | 4.00 | 25 | 100 | 0 | 1.6 | 0.03 | 11 | 8 | A | A | A |
| Example 13 | 14Ca | 14Ca | 3.0 | 80 | 20 | 4.00 | 25 | 200 | 0 | 0.8 | 0.02 | 11 | 8 | A | A | A |
| Example 14 | 14Ca | 14Ca+ | 5.0 | 80 | 20 | 4.00 | 25 | 300 | 0 | 0.5 | 0.01 | 11 | 8 | A | A | A |
| Example 15 | 14Ba | 14Ba | 1.5 | 80 | 20 | 4.00 | 25 | 100 | 0 | 1.6 | 0.03 | 11 | 8 | A | A | A |
| Example 16 | 400a | 400a | 1.5 | 200 | 20 | 10.00 | 90 | 90 | 0 | 1.8 | 0.03 | 11 | 8 | A | A | A |
| Example 17 | 200a | 200a | 1.5 | 250 | 45 | 5.56 | 110 | 60 | 0 | 2.7 | 0.03 | 11 | 8 | A | A | A |
| Example 18 | 300a | 300a | 1.5 | 250 | 20 | 12.50 | 110 | 60 | 0 | 2.7 | 0.03 | 11 | 8 | A | A | A |
| Example 19 | 11Aa | 11Aa- | 0.8 | 100 | 35 | 2.86 | 40 | 65 | 0 | 2.5 | 0.2 | 11 | 8 | B | A | B |
| Example 20 | 11Aa | 11Aa++ | 11 | 100 | 35 | 2.86 | 40 | 500 | 0 | 0.3 | 0.01 | 11 | 6 | A | B | B |
| Example 21 | 15Aa | 15Aa | 1.5 | 800 | 60 | 13.33 | 70 | 60 | 0 | 2.7 | 0.06 | 11 | 8 | B | A | B |
| Example 22 | 15Ba | 15Ba | 1.5 | 800 | 60 | 13.33 | 70 | 60 | 0 | 2.7 | 0.06 | 11 | 8 | B | A | B |
| Example 23 | 11Aa | 11Aa | 1.5 | 100 | 35 | 2.86 | 40 | 80 | 0 | 20 | 0.03 | 12 | 8 | A | A | A |
| Example 24 | 11Ba | 11Ba | 1.5 | 100 | 35 | 2.86 | 40 | 80 | 0 | 2.0 | 0.03 | 12 | 8 | A | A | A |
| Example 25 | 100a | 100a | 1.5 | 250 | 35 | 7.14 | 110 | 60 | 0 | 2.7 | 0.03 | 12 | 8 | A | A | A |
| Example 26 | 11Aa | 11Aa+ | 9.5 | 100 | 35 | 2.86 | 40 | 400 | 0 | 0.4 | 0.01 | 12 | 8 | A | A | A |
| Example 27 | 14Aa | 14Aa | 1.5 | 80 | 20 | 4.00 | 25 | 100 | 0 | 1.6 | 0.03 | 12 | 8 | A | A | A |
| Example 28 | 14Ba | 14Ba | 1.5 | 80 | 20 | 4.00 | 25 | 100 | 0 | 1.6 | 0.03 | 12 | 8 | A | A | A |
| Example 29 | 400a | 400a | 1.5 | 200 | 20 | 10.00 | 90 | 90 | 0 | 1.8 | 0.03 | 12 | 8 | A | A | A |
| Example 30 | 11Aa | 11Aa- | 0.8 | 100 | 35 | 2.86 | 40 | 65 | 0 | 2.5 | 0.20 | 12 | 8 | B | A | B |
| Example 31 | 11Aa | 11Aa++ | 11 | 100 | 35 | 2.86 | 40 | 500 | 0 | 0.3 | 0.01 | 12 | 6 | A | B | B |
| Comparative Example 1 | - | - | - | - | - | - | - | N/A | - | - | 0.26 | 12 | 10 | C | A | C |
| Comparative Example 2 | 100b | 100bN | 1.5 | 5300 | 35 | 151.43 | 3500 | 0-3 | 0-2 | 40 | 0.07 | 12 | 6 | B | B | C |
| Comparative Example 3 | 100b | 100bP | 3.0 | 6300 | 35 | 180.00 | 3500 | 0-5 | 0-3 | 30 | 0.05 | 12 | 6 | B | B | C |
| Comparative Example 4 | 11Ab | 11Ab | 1.5 | 3500 | 35 | 10000 | 2600 | 0-3 | 0-2 | 40 | 0.07 | 12 | 6 | B | B | C |
| Comparative Example 5 | 11Cb | 11Cb | 3.0 | 3500 | 35 | 10000 | 2400 | 0-5 | 0-3 | 30 | 0.05 | 12 | 6 | B | B | C |
| Comparative Example 6 | 11Bb | 11Bb | 1.5 | 3500 | 35 | 10000 | 2100 | 0-3 | 0-2 | 40 | 0.05 | 12 | 6 | B | B | C |
| Comparative Example 7 | 200b | 200b | 1.5 | 3500 | 45 | 77.78 | 2800 | 0-3 | 0-2 | 40 | 0.05 | 12 | 6 | B | B | C |
| Comparative Example 8 | 300b | 300b | 1.5 | 3500 | 20 | 17500 | 2800 | 0-3 | 0-2 | 40 | 0.05 | 12 | 6 | B | B | C |
| Comparative Example 9 | 100b | 100b+ | 9.5 | 3500 | 35 | 10000 | 2800 | 0-10 | 0-5 | 15 | 0.01 | 12 | 4 | A | C | C |
| Comparative Example 10 | 200b | 200b+ | 9.5 | 3500 | 45 | 77.78 | 2800 | 0-10 | 0-5 | 15 | 0.01 | 12 | 4 | A | C | C |
| Comparative Example 11 | 300b | 300b+ | 9.5 | 3500 | 20 | 17500 | 2800 | 0-10 | 0-5 | 15 | 0.01 | 12 | 4 | A | C | C |
| Comparative Example 12 | 14Ab | 14Ab | 1.5 | 3000 | 20 | 15000 | 2500 | 0-3 | 0-2 | 40 | 0.05 | 12 | 6 | B | B | C |
| Comparative Example 13 | 14Bb | 14Bb | 1.5 | 3000 | 20 | 150.00 | 2000 | 0-3 | 0-2 | 40 | 0.05 | 12 | 6 | B | B | C |
| Comparative Example 14 | 400b | 400b | 1.5 | 3500 | 20 | 17500 | 2700 | 0-3 | 0-2 | 40 | 0.05 | 12 | 6 | B | B | C |
| Comparative Example 15 | 11Ab | 11Ab | 1.5 | 3500 | 35 | 10000 | 2600 | 0-3 | 0-2 | 40 | 0.07 | 13 | 6 | B | B | C |
| Comparative Example 16 | 11Bb | 11Bb | 1.5 | 3500 | 35 | 10000 | 2100 | 0-3 | 0-2 | 40 | 0.05 | 13 | 6 | B | B | C |
| Comparative Example 17 | 100b | 100b | 1.5 | 3500 | 35 | 10000 | 2800 | 0-3 | 0-2 | 40 | 0.05 | 13 | 6 | B | B | C |
| Comparative Example 18 | 14Ab | 14Ab | 1.5 | 3000 | 20 | 15000 | 2500 | 0-3 | 0-2 | 40 | 0.05 | 13 | 6 | B | B | C |
| Comparative Example 19 | 14Bb | 14Bb | 1.5 | 3000 | 20 | 15000 | 2000 | 0-3 | 0-2 | 40 | 0.05 | 13 | 6 | B | B | C |
| Comparative Example 20 | 400b | 400b | 1.5 | 3500 | 20 | 17500 | 2700 | 0-3 | 0-2 | 40 | 0.05 | 13 | 6 | B | B | C |

### [Example 1]

In Example 1, a TOYOBO ESTER (registered trademark) film E5100 (trade name; manufactured by Toyobo Co., Ltd.), which is a biaxially-stretched polyethylene terephthalate film, was used as a resin layer 12. E5100 was 12 µm in thickness, 500 m in length, and 600 mm in width.

One surface 12b of the resin layer 12 was corona-treated, and a barrier layer 14 composed of SiOx was formed on the corona-treated surface 12b using a vacuum deposition machine.

Specifically, a vapor deposition material in which a metal silicon powder and a silicon dioxide powder had been mixed was prepared, and vapor deposition was performed with the vacuum deposition machine such that a vapor-deposited layer having an element ratio O/Si of 1.5 (x = 1.5) was formed on the surface 12b. The thickness of the barrier layer 14 was 50 nm.

After that, two-component curable polyurethane-based adhesives A626/A50 (trade name; manufactured by Mitsui Fine Chemicals, Inc Co., Ltd.) were applied onto the barrier layer 14 using a dry lamination machine, and EMBLEM (registered trademark) ON (trade name; manufactured by Unitika Ltd.), which is a 15 µm-thick nylon film, was laminated thereon. As a result, an adhesive layer 16 and an intermediate layer 18 were formed.

A coating liquid for forming an adhesive layer 20 was prepared as described below using the particle dispersion liquid 11Aa.

A626 and A50, which are the above-described two-component curable polyurethane-based adhesives, were mixed such that the mass ratio became 8:1 and diluted with ethyl acetate to form an adhesive having a solid content concentration of 30% by mass. After that, the particle dispersion liquid 11 Aa was added to the adhesive, and the ratio of the solid content of the zinc oxide particles to the total mass of the solid content of the adhesive and the solid content of the zinc oxide particles was adjusted to be 1.5% by mass.

Hereinafter, for the sake of simplicity, "the ratio of the solid content of the polyvalent metal compound particles to the total mass of the solid content of the adhesive and the solid content of the polyvalent metal compound particles" will be referred to as "the particle amount in the coating liquid". In [Table 2], the ratio was expressed as "particle amount".

After that, the liquid mixture of the adhesive and the particle dispersion liquid 11 Aa was stirred with a stirring blade for 30 minutes. After that, the liquid mixture was filtered through a membrane filter having a pore size of 3 µm to obtain a coating liquid 11Aa that was used in Example 1. In the particle dispersion liquid 11Aa on which the dispersion treatment had been performed, since it was difficult for the zinc oxide particles to aggregate, the majority of the zinc oxide particles in the liquid mixture passed through the membrane filter.

After that, the coating liquid 11Aa was applied onto the intermediate layer 18 using a dry lamination machine and pasted to an 80 µm-thick polyolefin-based unstretched coextruded film as a sealant layer 30.

A laminated film 60 having a laminate structure shown in FIG. 2 was obtained as described above. That is, this laminated film 60 had the sealant layer 30 composed of a polyolefin-based unstretched coextruded film, the adhesive layer 20 containing zinc oxide particles, the intermediate layer 18 composed of a nylon film, the adhesive layer 16 not containing zinc oxide particles, the barrier layer 14 and the resin layer 12 in this order.

The particle amount of the zinc oxide particles in the adhesive layer 20 was, similar to the particle amount in the coating liquid, 1.5% by mass.

After that, the laminated films 60 of Example 1 were pasted together such that the sealant layers 30 faced to each other to produce a packaging bag 100A of Example 1, which was a three-side seal bag as shown in FIG. 5.

After that, an article to be packaged 110 was accommodated and sealed in the packaging bag 100A, thereby manufacturing a package 200A of Example 1.

As the article to be packaged 110, a cysteine aqueous solution containing 0.03% by mass of cysteine was used.

### [Examples 2 to 22]

As shown in [Table 2], in each of Examples 2 to 22, a laminated film 60, a packaging bag 100A, and a package 200A were produced in the same manner as in Example 1 except that a coating liquid shown in the column was used in place of the coating liquid 11Aa.

While the particle amount of the zinc oxide particles in the coating liquid 11Aa is 1.5% by mass, the particle amount of the zinc oxide particles in a coating liquid 11Aa+ is 9.5% by mass, the particle amount of the zinc oxide particles in a coating liquid 11Aa-is 0.8% by mass, and the particle amount of the zinc oxide particles in a coating liquid 11Aa++ is 11% by mass.

While the particle amount of the zinc oxide particles in a coating liquid 11 Ca is 3.0% by mass, the particle amount of the zinc oxide particles in a coating liquid 11Ca+ is 5.0% by mass.

While the particle amount of the zinc oxide particles in a coating liquid 14Ca is 3.0% by mass, the particle amount of the zinc oxide particles in a coating liquid 14Ca+ is 5.0% by mass.

While the particle amount of the zinc oxide particles in a coating liquid 100a is 1.5% by mass, the particle amount of the zinc oxide particles in a coating liquid 100a+ is 9.5% by mass.

### [Example 23]

In Example 23, a TOYOBO ESTER (registered trademark) film E5100 (trade name; manufactured by Toyobo Co., Ltd.), which is a biaxially-stretched polyethylene terephthalate film, was used as a resin layer 12. E5100 was 12 µm in thickness, 500 m in length, and 600 mm in width.

Two-component curable polyurethane-based adhesives A525/A52 (trade name; manufactured by Mitsui Fine Chemicals, Inc Co., Ltd.) were applied onto the resin layer 12 using a dry lamination machine, and EMBLEM (registered trademark) ON (trade name; manufactured by Unitika Ltd.), which is a 15 µm-thick nylon film, was laminated thereon as an intermediate layer 18. As a result, an adhesive layer 16 and an intermediate layer 18 were formed.

Subsequently, the adhesives were, again, applied onto the intermediate layer 18 in the same manner, and a 7 µm-thick aluminum film foil was laminated as an intermediate layer 18B. As a result, an adhesive layer 16B and the intermediate layer 18B were formed.

A coating liquid for forming an adhesive layer 20 was prepared as described below using the particle dispersion liquid 11Aa.

A525 and A52, which are the above-described two-component curable polyurethane-based adhesives, were mixed such that the mass ratio became 8:1 and diluted with ethyl acetate to form an adhesive having a solid content concentration of 30% by mass. After that, the particle dispersion liquid 11 Aa was added to the adhesive, and the ratio of the solid content of the zinc oxide particles to the total mass of the solid content of the adhesive and the solid content of the zinc oxide particles was adjusted to be 1.5% by mass.

Hereinafter, for the sake of simplicity, "the ratio of the solid content of the polyvalent metal compound particles to the total mass of the solid content of the adhesive and the solid content of the polyvalent metal compound particles" will be referred to as "the particle amount in the coating liquid". In [Table 2], the ratio was expressed as "particle amount".

After that, the liquid mixture of the adhesive and the particle dispersion liquid 11 Aa was stirred with a stirring blade for 30 minutes. After that, the liquid mixture was filtered through a membrane filter having a pore size of 3 µm to obtain a coating liquid 11 Aa that was used in Example 19. In the particle dispersion liquid 11 Aa on which the dispersion treatment had been performed, since it was difficult for the zinc oxide particles to aggregate, the majority of the zinc oxide particles in the liquid mixture passed through the membrane filter.

After that, the coating liquid 11Aa was applied onto the intermediate layer 18B using a dry lamination machine and pasted to an 80 µm-thick polyolefin-based unstretched coextruded film as a sealant layer 30.

A laminated film 70 having a laminate structure shown in FIG. 3 was obtained as described above. That is, this laminated film 70 had the sealant layer 30 composed of a polyolefin-based unstretched coextruded film, the adhesive layer 20 containing zinc oxide particles, the intermediate layer 18B composed of the aluminum foil, the adhesive layer 16B not containing zinc oxide particles, the intermediate layer 18 composed of a nylon film, the adhesive layer 16 not containing zinc oxide particles, and the resin layer 12 in this order.

The particle amount of the zinc oxide particles in the adhesive layer 20 was, similar to the particle amount in the coating liquid, 1.5% by mass.

After that, the laminated films 70 of Example 1 were pasted together such that the sealant layers 30 faced to each other to produce a packaging bag 100A of Example 1, which was a three-side seal bag as shown in FIG. 5.

After that, an article to be packaged 110 was accommodated and sealed in the packaging bag 100A, thereby manufacturing a package 200A of Example 1.

As the article to be packaged 110, a cysteine aqueous solution containing 0.03% by mass of cysteine was used.

### [Examples 24 to 31]

As shown in [Table 2], in each of Examples 24 to 31, a laminated film 70, a packaging bag 100A, and a package 200A were produced in the same manner as in Example 23 except that a coating liquid shown in the column was used in place of the coating liquid 11Aa.

### [Comparative Examples 1 to 14]

In Comparative Example 1, a laminated film 60, a packaging bag 100A, and a package 200A of Comparative Example 1 were produced in the same manner as in Example 1 except that the adhesive layer was formed using only the polyurethane-based adhesive without using the polyvalent metal particles and the polyvalent metal compound particles.

In Comparative Example 2, a laminated film 60, a packaging bag 100A, and a package 200A of Comparative Example 2 were produced in the same manner as in Example 9 except that a coating liquid 100bN (the particle amount of zinc oxide particles was 1.5% by mass) was used in place of the coating liquid 100a. The coating liquid 100bN was formed in the same manner as the coating liquid 100a except that the adhesive and the particle dispersion liquid 100b were stirred for 30 minutes and then not filtered with a membrane filter.

In each of Comparative Examples 3 to 14, a stirring treatment was performed and a laminated film 60, a packaging bag 100A, and a package 200A were produced in the same manner as in Comparative Example 2 except that a coating liquid shown in the column was used.

While the particle amount of the zinc oxide particles in the coating liquid 100bN is 1.5% by mass, the particle amount of the zinc oxide particles in a coating liquid 100bP is 3.0% by mass, and the particle amount of the zinc oxide particles in a coating liquid 100b+ is 9.5% by mass.

While the particle amount of the aluminum oxide particles in a coating liquid 200b is 1.5% by mass, the particle amount of the aluminum oxide particles in a coating liquid 200b+ is 9.5% by mass.

While the particle amount of the magnesium oxide particles in a coating liquid 300b is 1.5% by mass, the particle amount of the magnesium oxide particles in a coating liquid 300b+ is 9.5% by mass.

### [Comparative Examples 15 to 20]

In Comparative Example 15, a laminated film 70, a packaging bag 100A, and a package 200A of Comparative Example 16 were produced in the same manner as in Example 23 except that a coating liquid 11Ab (the particle amount of zinc oxide particles was 1.5% by mass) was used in place of the coating liquid 11Aa. The coating liquid 11Ab was formed in the same manner as the coating liquid llAa except that the adhesive and the particle dispersion liquid 11Ab were stirred for 30 minutes and then not filtered with a membrane filter.

In each of Comparative Examples 16 to 20, a stirring treatment was performed and a laminated film 70, a packaging bag 100A, and a package 200A were produced in the same manner as in Example 23 except that a coating liquid shown in the column was used.

### [Evaluation methods]

In order to evaluate each example and each comparative example, SEM image observation, the hydrogen sulfide (H₂S) concentration, and the lamination strength were measured.

For the SEM image observation result, the laminated film is cut with a microtome, and the cross section is observed with SEM. The adhesive layer 20 is captured 10 µm continuously at a magnification of 10000 times to produce 5 images. The maximum length among the diameters (major axes) of the aggregates included in the 5 captured images (the maximum diameter of the aggregates) is entered into the column "Maximum aggregate diameter" in [Table 2]. The minimum length among the diameters of the aggregates included in the 5 captured images (the minimum diameter of the aggregates) was entered into the column "Minimum aggregate diameter" in [Table 2]. A value obtained by dividing "the maximum diameter of the aggregates" by "the minimum diameter of the aggregates" (the ratio of the maximum diameter of the aggregates to the minimum diameter of the aggregates) was entered into the column "Ratio" in [Table 2]. A value obtained by dividing the total of all diameters (major axes) of the aggregates included in the 5 captured images by the number of the aggregates (the average aggregate diameter of the aggregates) was entered into the column "Average aggregate diameter" in [Table 2]. The number of aggregates having a size of 10% to 200% of the average particle diameter among the aggregates included in the 5 captured images was entered into the column "Number of aggregates 1" in [Table 2]. The number of aggregates having a diameter (major axis) of 3 µm or more among the aggregates included in the 5 captured images was entered into the column "Number of aggregates 2" in [Table 2]. Among the aggregates included in the 5 captured images, for aggregates having a diameter approximately equal to the average aggregate diameter (10% to 200% of the average aggregate diameter), the average value of the distances between the aggregates adjacent to each other was entered into the column "Distance between aggregates" in [Table 2].

For the hydrogen sulfide concentration measurement, the package accommodating the cysteine aqueous solution in each example and each comparative example was used as a test sample.

On the package, which was each test sample, a retort treatment was performed by heating the package at 120°C for 60 minutes. After the retort treatment, the package was stored in a refrigerator for 1 week. After that, the aqueous solution in each package was collected, and the hydrogen sulfide concentration was obtained by a methylene blue method (wavelength: 668 nm). Upon the calculation of the hydrogen sulfide concentration, a calibration curve prepared in advance was used. The measurement results of the hydrogen sulfide concentration are shown in [Table 2].

As test samples for the measurement of the lamination strength, the packaging bag before the retort treatment and the packaging bag after retort treatment in each example and each comparative example were used.

The packaging bag before the retort treatment was aged under conditions of at 45°C for 4 days. After that, the lamination strength between the nylon layer and the sealant layer was measured in accordance with JIS Z 0238:1998. Specifically, the lamination strength of each test sample was measured by a T-peel method (crosshead speed: 300 mm/min.) using a TENSILON universal material testing instrument (trade name; manufactured by A&D Company, Limited). The measurement results are shown in the column "Lamination strength, Before treatment" in [Table 2].

The lamination strength (N/15 mm width) was measured using the test sample that was the packaging bag after the retort treatment in the same manner as for the packaging bag before the retort treatment. The measurement results are shown in the column "Lamination strength, After treatment" in [Table 2]. Here, in [Table 2], (N/15 mm width) is simply expressed as (N).

### [Evaluation results]

As shown in [Table 2], in the laminated films of Examples 1 to 31, the "ratios" in the adhesive layers 20 were 2.86 to 13.33. In addition, the "average aggregate diameters" were 25 nm to 110 nm. In addition, the "numbers of aggregates 1" were 60 to 5000, and the "number of aggregates 2" were 0. In addition, the "distances between aggregates" were 0.3 to 2.7 µm.

In addition, in the laminated films of Examples 1 to 19 and 21 to 30, the lamination strengths after the retort treatment were 8 N/15 mm width or more. Furthermore, in the laminated films of Examples 20 and 31, the lamination strengths after the retort treatment were 6 N/15 mm width or more.

In Examples 1 to 31, the "ratios" are 2.86 to 13.33. In Comparative Examples 2 to 20, the "ratios" are 77.78 to 180.00. In Comparative Examples 2 to 20, since the results were poor in both the retort odor adsorption effect and the lamination strength after the retort treatment, it was found that, when the "ratio" is 14.0 times or less, the lamination strength after the retort treatment is favorable while the retort odor adsorption effect is enhanced. This is considered to be because, in Examples 1 to 31, there were no coarse aggregates, and thus large interfaces were not formed, which made it less likely for the lamination strength to deteriorate.

In Examples 1 to 31, the "average aggregate diameters" are 25 nm to 110 nm. In Comparative Examples 2 to 20, the "average aggregate diameters" are 2000 nm (2.0 µm) to 3500 nm (3.5 µm). In Comparative Examples 2 to 20, the results were poor in both the retort odor adsorption effect and the lamination strength after the retort treatment. When the aggregate diameter is small, the surface area becomes large, and the adsorption effect becomes high, and thus it is found that, when the "average aggregate diameter" is 150 nm or less, the lamination strength after the retort treatment is favorable while the retort odor adsorption effect is enhanced.

In Examples 1 to 31, the "distances between aggregates" are 0.3 µm to 2.7 µm. In Comparative Examples 2 to 20, the "distances between aggregates" are 15 µm to 40 µm. In Comparative Examples 2 to 20, the results were poor in both the retort odor adsorption effect and the lamination strength after the retort treatment.

When the distance between aggregates is small, the number of aggregates is large. That is, since the size of each aggregate becomes small, the surface area becomes large, the adsorption effect is enhanced, large interfaces are less likely to be formed, and the lamination strength is less likely to deteriorate, and thus it is found that, when the "distance between aggregates" is 3.0 µm or less, the lamination strength after the retort treatment is favorable while the retort odor adsorption effect is enhanced.

When Example 1, Example 19, and Example 20 are compared, the "number of aggregates 1" in Example 20 where the particle amount was 11% by mass is 500, the "number of aggregates 1" in Example 1 where the particle amount was 1.5% by mass is 80, and the "number of aggregates 1" in Example 19 where the particle amount was 0.8% by mass is 65. When Example 2 and Example 3 are compared, the "number of aggregates 1" in Example 3 where the particle amount was 5.0% by mass is 250, and the "number of aggregates 1" in Example 2 where the particle amount was 3.0% by mass is 150. When Example 9 and Example 11 are compared, the "number of aggregates 1" in Example 11 where the particle amount was 9.5% by mass is 200, and the "number of aggregates 1" in Example 9 where the particle amount was 1.5% by mass is 60. When Example 13 and Example 14 are compared, the "number of aggregates 1" in Example 14 where the particle amount was 5.0% by mass is 300, and the "number of aggregates 1" in Example 13 where the particle amount was 3.0% by mass is 200.

That is, it is found that, when the particle amount of the additive particles is large, the number of "number of aggregates 1" becomes large.

In Examples 1 to 31, the "numbers of aggregates 1", which are the numbers of aggregates having a size of 10% to 200% of the average particle diameter, were 60 or more; however, in Comparative Examples 1 to 20, the numbers of aggregates 1 were a maximum of 0 to 10. Here, when the "number of aggregates 1" is 60 or more, the dispersibility becomes high, and it becomes easy to adsorb a retort odor.

That is, it is considered that the number of aggregates having a size of 10% to 200% of the average particle diameter is preferably 60 or more.

In Examples 1 to 31, among the aggregates, the "numbers of aggregates 2", which are the numbers of aggregates having a diameter (major axis) of 3 µm or more, were 0; however, in Comparative Examples 1 to 20, the numbers of "number of aggregates 2" were a minimum of 0 to 2. When aggregates having a diameter (major axis) of 3 µm or more are not present, the cohesive force of the film of the adhesive layer is less likely to decrease.

That is, it is considered that aggregates having a diameter (major axis) of 3 µm or more are preferably not present.

When Example 1, Example 19, and Example 20 are compared, the hydrogen sulfide concentration in Example 20 where the particle amount was 11% by mass is 0.0 mg/L, the hydrogen sulfide concentration in Example 1 where the particle amount was 1.5% by mass is 0.03 mg/L, and the hydrogen sulfide concentration in Example 19 where the particle amount was 0.8% by mass is 0.2 mg/L. When Example 2 and Example 3 are compared, the hydrogen sulfide concentration in Example 3 where the particle amount was 5.0% by mass is 0.01 mg/L, and the hydrogen sulfide concentration in Example 2 where the particle amount was 3.0% by mass is 0.02 mg/L. When Example 9 and Example 11 are compared, the hydrogen sulfide concentration in Example 11 where the particle amount was 9.5% by mass is 0.01 mg/L, and the hydrogen sulfide concentration in Example 9 where the particle amount was 1.5% by mass is 0.03 mg/L. When Example 13 and Example 14 are compared, the hydrogen sulfide concentration in Example 14 where the particle amount was 5.0% by mass is 0.01 mg/L, and the hydrogen sulfide concentration in Example 13 where the particle amount was 3.0% by mass is 0.02 mg/L.

That is, it is found that, when the particle amount of the additive particles is large, the retort odor adsorption effect is high.

When the particle amount is 0.5% by mass or more, the retort odor adsorption effect is sufficient, but it is considered that the particle amount is preferably 1.0% by mass or more.

When Example 1 and Example 20 are compared, the lamination strength after the retort treatment in Example 1 where the particle amount was 1.5% by mass was 8 N/15 mm width, and the lamination strength after the retort treatment in Example 20 where the particle amount was 11% by mass was 6 N/15 mm width.

That is, when the particle amount of the additive particles is large, the retort odor adsorption effect is high, but aggregates of the additive particles are likely to be formed, and an increase in the number of interfaces between the adhesive and the particles in spite of high dispersibility decreases the cohesive force as a film (the film becomes weak), and thus it is considered that the particle amount of the additive particles is preferably 10% by mass or less.

When Example 12 and Example 21 are compared, the hydrogen sulfide concentration in Example 12 where the average particle diameter of the primary particles of the additive particles was 20 nm was 0.03 mg/L, but hydrogen sulfide concentration in Example 21 where the average particle diameter of the primary particles of the additive particles was 60 nm was 0.06 mg/L. When Example 15 and Example 22 are compared, the hydrogen sulfide concentration in Example 15 where the average particle diameter of the primary particles of the additive particles was 20 nm was 0.03 mg/L, but hydrogen sulfide concentration in Example 22 where the average particle diameter of the primary particles of the additive particles was 60 nm was 0.06 mg/L.

That is, the average particle diameter of the primary particles of the additive particles may be 60 nm; however, when the average particle diameter increases, the surface area decreases, and thus it is considered that the average particle diameter is preferably 45 nm or less.

Example 1 and Example 23, Example 4 and Example 24, Example 9 and Example 25, Example 10 and Example 26, Example 12 and Example 27, Example 15 and Example 28, Example 16 and Example 29, Example 19 and Example 30, and Example 20 and Example 31 are each different from each other in that no aluminum film foil was included in the intermediate layer of the former, but an aluminum film foil was included in the intermediate layer of the latter. In any cases, since the reactivity of aluminum is low, regardless of the presence or absence of the aluminum film foil, the results are the same in terms of the retort odor adsorption effect and the lamination strength after the retort treatment.

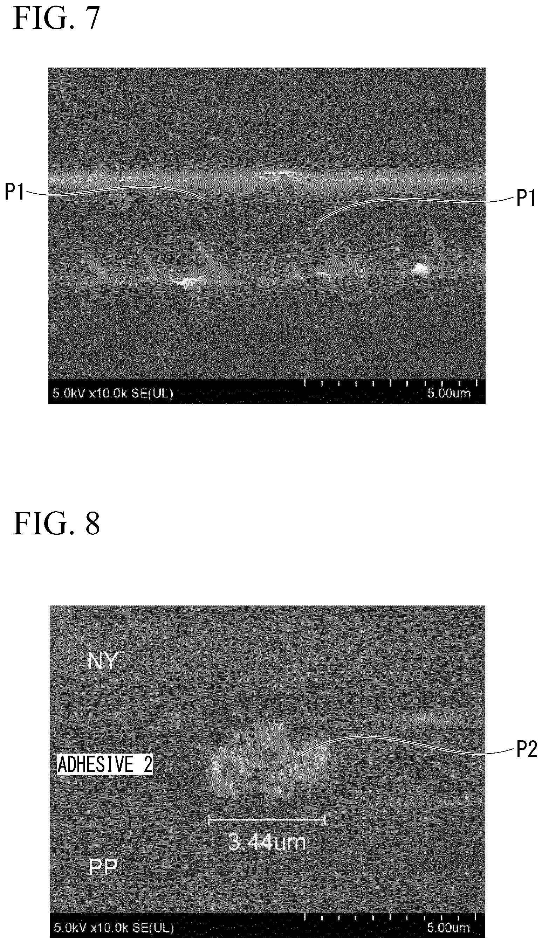

FIG. 7 is an example of an image of SEM image observation in Example 2. FIG. 8 is an example of an image of SEM image observation in Comparative Example 5. In FIG. 7, aggregates are indicated by P1. In FIG. 8, an aggregate is indicated by P2, the adhesive layer 20 is indicated by adhesive 2, the intermediate layer 18 is indicated by NY, and the sealant layer 30 is indicated by PP.

### [Comprehensive evaluations]

The retort odor (expressed as "Odor" in [Table 2]) was determined as favorable (expressed as "A" in [Table 2]) in a case where the hydrogen sulfide concentration was 0.04 mg/L or less, as slightly favorable (expressed as "B" in [Table 2]) in a case where the hydrogen sulfide concentration was more than 0.04 mg/L and 0.25 mg/L or less, and as poor (expressed as "C" in [Table 2]) in a case where the hydrogen sulfide concentration was more than 0.25 mg/L.

The lamination strength (expressed as "Strength" in [Table 2]) was determined as favorable (expressed as "A" in [Table 2]) in a case where the lamination strength after the retort treatment was 7 N/15 mm width or more, as slightly favorable (expressed as "B" in [Table 2]) in a case where the lamination strength after the retort treatment was 6 N/15 mm width or more and less than 7 N/15 mm width, and as poor (expressed as "C" in [Table 2]) in a case where the lamination strength after the retort treatment was less than 6 N/15 mm width.

In a case where both the retort odor and the lamination strength were evaluated as favorable (expressed as "A" in [Table 2]), the comprehensive evaluation was determined as favorable (expressed as "A" in [Table 2]). In a case where any one of the retort odor and the lamination strength was evaluated as favorable (expressed as "A" in [Table 2]), but the other was evaluated as slightly favorable (expressed as "B" in [Table 2]), the comprehensive evaluation was determined as slightly favorable (expressed as "B" in [Table 2]). In a case where both the retort odor and the lamination strength were evaluated as slightly favorable (expressed as "B" in [Table 2]) or any one of the retort odor and the lamination strength was evaluated as poor (expressed as "C" in [Table 2]), the comprehensive evaluation was determined as poor (expressed as "C" in [Table 2]).

As shown in [Table 2], the comprehensive evaluations of Examples 1 to 18 and 23 to 29 were A. The comprehensive evaluations of Examples 19 to 22, 30, and 31 were B.

In Comparative Example 1, since the odor was evaluated as C, the comprehensive evaluation was C.

In Comparative Examples 2 to 8 and 12 to 20, since the retort odors and the strengths were evaluated as B, the comprehensive evaluations were C.

In Comparative Examples 9 to 11, since the strengths were evaluated as C, the comprehensive evaluations were C.

Hereinafter, embodiments of the present invention will be described with reference to the accompanying drawings. In all the drawings, even in a case where embodiments are different, the same or corresponding member will be given the same reference numerals, and common description will be omitted. There are also cases where even the same or corresponding member as that in the embodiment is given a different reference numeral. In addition, unless particularly otherwise specified, positional relationships such as up, down, right, and left will be based on the positional relationships shown in the drawings.

Hereinafter, in a case where a plurality of suitable numerical ranges is exemplified under a specific numerical range, unless particularly otherwise specified, the combination of the upper limit value and the lower limit value is not limited to an exemplified combination as long as the combination is included within the maximum preferable numerical range. For example, in a case where, as a preferable range of the amount X, "x1 or more and x4 or less" and "x2 or more and x3 or less" are exemplified with an assumption of x1 < x2 < x3 < x4, for example, each numerical range of "more than x1 and less than x4", "x2 or more and x4 or less", "x3 or more and x4 or less" and the like are also a preferable range.

### [Sixth Embodiment]

A laminated film according to a sixth embodiment of the present invention will be described.

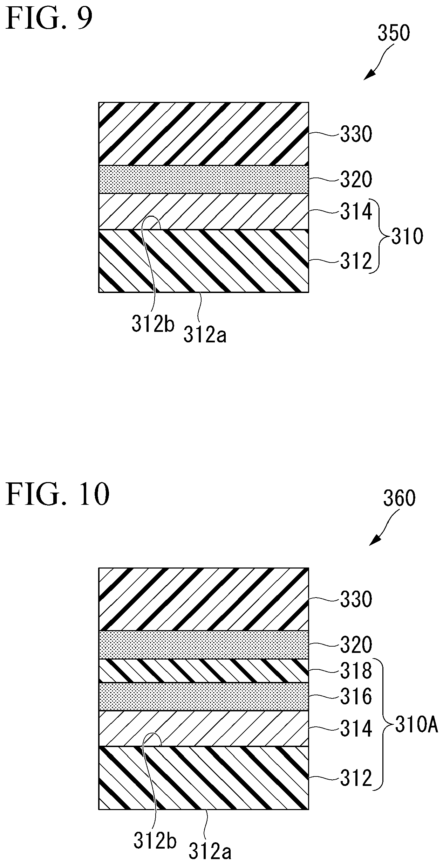

FIG. 9 is a schematic cross-sectional view showing an example of the laminated film according to the sixth embodiment of the present invention.

A laminated film 350 of the present embodiment shown in FIG. 9 includes a base material film (predetermined layer) 310, an adhesive layer 320, and a sealant layer 330. The base material film 310, the adhesive layer 320, and the sealant layer 330 in the laminated film 350 are laminated in this order. The base material film 310, the adhesive layer 320, and the sealant layer 330 each have a light transmission property of transmitting visible light.

Therefore, the laminated film 350 has a light transmission portion through which visible light is transmitted in the thickness direction (vertical direction in the drawing). In the example shown in FIG. 9, the light transmission portion is the entire laminated film 350. The laminated film 350 may not be provided with the light transmission portion.

In the light transmission portion of the laminated film 350, the haze measured in accordance with a haze measurement method specified in JIS-K-7136 is 30% or less. Hereinafter, the haze that is specified in JIS-K-7136 will be simply referred to as "haze".

The base material film 310 has a resin layer 312 and a barrier layer 314. The base material film 310 may not be provided with the barrier layer 314.

The resin layer 312 is composed of, for example, a resin film.

As the resin film, polyester films formed of polyethylene terephthalate (PET), polyethylene naphthalate (PEN), or the like; polyolefin films formed of polyethylene, polypropylene, or the like; polystyrene films; polyamide films formed of a polyamide such as 66-nylon; polycarbonate films; polyacrylonitrile films; polyimide films; engineering plastic films formed of a different engineering plastic; and the like are exemplary examples.

As the resin film that configures the resin layer 312, one of the above-described resin films may be used singly or two or more thereof may be used in combination.

For example, the resin layer 312 may be configured by laminating a plurality of resin films of the same kind.

The resin film may be any of a stretched film or an unstretched film. The resin film may be a multilayer film in which at least one stretched film and at least one unstretched film are laminated.

The resin layer 312 may have a film randomly stretched biaxially. In this case, it is possible to improve the mechanical strength and the dimensional stability.

The resin layer 312 more preferably has one or both of a polyester film and a biaxially-stretched polypropylene film from the viewpoint of satisfying, particularly, both the strength and the flexibility.

The resin layer 312 more preferably has one or both of a polypropylene film and a polyethylene terephthalate film from the viewpoint of, particularly, improving the strength and reducing the cost.

The resin layer 312 more preferably has a nylon film from the viewpoint of improving, particularly, the strength. Nylon films have excellent flexibility and thus do not easily allow the generation of pinholes. Therefore, in a case where a package is formed with a packaging bag in which the laminated film 350 is used, it is possible to suppress the generation of pinholes in the laminated film 350 and the consequent deterioration of an article to be packaged. Such an action is particularly useful in a case where the article to be packaged is a food product.

The thickness of the resin layer 312 can be set to a thickness suitable for an application or a required characteristic and is not particularly limited. The thickness of the resin layer 312 may be, for example, 3 µm or more and 100 µm or less and is more preferably 6 µm or more and 50 µm or less.

The resin layer 312 may contain an appropriate additive. As the additive, at least one selected from a filler, an antistatic agent, a plasticizer, a lubricant, an antioxidant, and the like is an exemplary example.

A surface 312a of the resin layer 312 is a surface that forms the outer surface of the laminated film 350 at the time of forming a packaging bag.

A surface 312b of the resin layer 312 is a surface opposite to the surface 312a in the thickness direction and is a joining surface with the barrier layer 314 to be described below.

An appropriate surface treatment may be performed on the laminated film 350. For example, an appropriate surface treatment that improves adhesion to the barrier layer 314 may be performed on the surface 312b. As an example of the surface treatment, for example, at least one treatment selected from a chemical treatment, a solvent treatment, a corona treatment, a plasma treatment, and an ozone treatment is an exemplary example.

The barrier layer 314 is a layer having a barrier property against at least oxygen and water vapor. The barrier layer 314 is laminated on the surface 312b of the resin layer 312.

The number of layers of the barrier layer 314 is not particularly limited as long as it includes at least one layer having a barrier property.

As an example of a case where the barrier layer 314 is composed of a single layer, a vapor-deposited layer composed of an inorganic substance, a barrier film composed of a resin having a barrier property, and the like are exemplary examples.

As an example of a case where the barrier layer 314 is composed of multiple layers, a barrier film obtained by coating the surface of a resin film or the like with an inorganic substance having a barrier property is an exemplary example.

As the inorganic substance that can be used for the barrier layer 314, silica, aluminum, silicon, and the like are exemplary examples. In a case where the barrier layer 314 is formed of a single layer, such an inorganic substance may be vapor-deposited on the surface of the resin layer 312.

As the barrier film that can be used for the barrier layer 314, a nylon-based barrier film, an ethylene vinyl alcohol-based barrier film, and the like are exemplary examples. In a case where the barrier layer 314 is formed of a single layer, such a barrier film may be laminated on the resin layer 312 by extrusion lamination, dry lamination, wet coating, or the like.

For example, in a case where a barrier film coated with an inorganic substance is used as the barrier layer 314, silica, aluminum, silicon, or the like may be used as the inorganic substance. In this case, the barrier film may be laminated on the resin layer 312 by dry lamination or the like.

As the barrier layer 314, one film exemplified above may be used singly or two or more films may be used in combination.

The layer thickness of the barrier layer 314 is not particularly limited. For example, in a case where the barrier layer 314 is composed of a vapor-deposited layer, the layer thickness may be 5 nm or more and 100 nm or less.

The barrier layer 314 can be formed by, for example, a vacuum deposition method, a sputtering method, an ion plating method, a plasma chemical vapor deposition method (CVD), a dry lamination method, an extrusion lamination method, or the like.

The adhesive layer 320 is a layer that causes the barrier layer 314 and the sealant layer 330 to be described below to adhere to each other.

The adhesive layer 320 contains an adhesive component and polyvalent metal particles or polyvalent metal compound particles mixed with the adhesive component.

As the adhesive component, cured products of an urethane-based adhesive, a polyester-based adhesive, a polyamide-based adhesive, an epoxy-based adhesive, an isocyanate-based adhesive, and the like are exemplary examples.

The adhesive component in the adhesive layer 320 is more preferably formed of a two-component curable adhesive in that it is easy to suppress the alteration of the polyvalent metal particles or polyvalent metal compound particles to be described below.

There is a tendency that such an alteration suppression effect appears more significantly in a case where a two-component curable urethane-based adhesive is used. Therefore, among two-component curable adhesives, a urethane-based adhesive is particularly preferably used.

The polyvalent metal particles are particles formed of a metal that generates a polyvalent ion (hereinafter, polyvalent metal). The polyvalent metal compound particles are particles formed of a compound of a polyvalent metal.

The polyvalent metal particles or the polyvalent metal compound particles are used for the purpose of trapping a substance that causes a retort odor (hereinafter, referred to as an odor-causing substance in some cases), for example, a sulfur compound or the like, in the adhesive layer 320. As the sulfur compound that acts as an odor-causing substance, hydrogen sulfide, mercaptans, sulfur dioxide, sulfur trioxide, and the like are exemplary examples.

The principle of the fact that odor-causing substances can be trapped with the polyvalent metal particles and the polyvalent metal compound particles is not always theoretically elucidated, but it is possible to experimentally confirm that the particles are effective for reducing odor-causing substances.

The polyvalent metal particles and the polyvalent metal compound particles that are mixed with the adhesive layer 320 are not particularly limited as long as the particles have an action of trapping a compound that causes a retort odor and can be stably present in the adhesive component of the adhesive layer 320.

As the polyvalent metal particles, for example, particles of an alkaline earth metal such as beryllium, magnesium, or calcium; particles of a transition metal such as titanium, zirconium, chromium, manganese, iron, cobalt, nickel, copper, or zinc; particles of aluminum or the like may be used.

An oxide film may be formed on the surfaces of the polyvalent metal particles or the surfaces thereof may be coated so as to make it easy for the particles to be stably present in the adhesive layer 320.

As the polyvalent metal compound particles, particles of an oxide of a polyvalent metal, a hydroxide, a carbonate, an organic acid salt (for example, acetate), an inorganic acid salt, or the like are an exemplary example. As the polyvalent metal compound particles, for example, particles of an ammonium complex of a polyvalent metal oxide, a secondary to quaternary amine complex of a polyvalent metal oxide, a carbonate or organic acid salt thereof may be used.

It is more preferable to use the polyvalent metal compound particles, which makes it easy for the particles to be stably present in the adhesive layer 320.

As the polyvalent metal compound particles, particles of a zinc compound, an aluminum compound, a magnesium compound, or the like are more preferably used from the viewpoint of stability in the adhesive component and easiness in manufacturing. From the viewpoints of easiness in handling and cost, particles of zinc oxide, aluminum oxide, magnesium oxide, or the like are particularly preferably used as the polyvalent metal compound particles.

Hereinafter, for the sake of simplicity, the polyvalent metal particles or the polyvalent metal compound particles that are mixed with the adhesive component will be referred to as "additive particles" in some cases.

In the adhesive layer 320, one or more kinds of particles can be used as the additive particles that are mixed with the adhesive component.

The content of the additive particles in the adhesive layer 320 is not particularly limited.

As the content of the additive particles increases, the amount of an odor-causing substance trapped increases, which makes it easy to suppress a retort odor. On the other hand, when the content of the additive particles increases, there is a possibility that the lamination strength of the adhesive layer 320 may be likely to decrease or the transparency of the laminated film 350 may deteriorate.

For example, the content of the additive particles in the adhesive layer 320 is more preferably 0.5% by mass or more and 10% by mass or less and still more preferably 1.5% by mass or more and 5% by mass or less in that it is easy to satisfy both the lamination strength of the adhesive layer 320 and the transparency of the laminated film and the retort odor-reducing action.

When the content of the additive particles is less than 1% by mass, there is a possibility that the effect of suppressing a retort odor may be too weak.

When the content of the additive particles exceeds 10% by mass, there is a possibility that the lamination strength of the adhesive layer 320 may become too low or the transparency of the laminated film may become too low.

In the distribution of the additive particles in the adhesive layer 320, a bias is more preferably small. For example, when the distribution of the additive particles concentrates in a specific portion due to aggregation or the like, the transparency of the laminated film 350 is likely to be uneven. The bias of the distribution of the additive particles in the adhesive layer 320 also causes a decrease in the haze or a decrease in the lamination strength.

Particularly, in the adhesive layer 320, when large aggregates of the additive particles are formed, the additive particles form an uneven granular shape and are easily visible. Particularly, in a case where the additive particles having an uneven granular shape are arranged close to each other, the additive particles form uneven streaks and are more easily visible. For example, in a case where the laminated film 350 is used for a packaging bag so as to make an article to be packaged in the packaging bag visible from the outside through the light transmission portion, it is preferable that the uneven granular shape or the uneven streaks are not visible.

For example, from the viewpoint of improving the lamination strength of the adhesive layer 320, the number of aggregates of the additive particles of 9.0 µm or larger is preferably 30 or less in a 500 µm × 500 µm range. In addition, the distance between the aggregates is preferably 100 µm or more.

Here, "aggregate" is used in a broad sense and means an apparent mass when observed with a microscope or the like in the thickness direction. Whether the apparent mass has been formed by the aggregation phenomenon of the additive particles or is shown in a massive shape since the distribution density in a certain region when viewed in the thickness direction is high is not particularly differentiated.

For example, it is considered that the additive particles trap an odor-causing substance that permeates the adhesive layer 320 by adsorption.

In order to make it possible for the additive particles to efficiently trap an odor-causing substance, the specific surface area of the additive particles is more preferably as large as possible. Here, the specific surface area represents the surface area per unit mass of the additive particles. For example, the specific surface area of the additive particles may be 1 m2/g or more and is more preferably 5 m2/g or more.

When the specific surface area increases, the particle diameters of the additive particles become too small, and the additive particles are likely to, for example, scatter in the environment, and thus caution is required in handling the additive particles. From the viewpoint of making it easy to handle the additive particles in a manufacturing step, the specific surface area of the additive particles may be 100 m2/g or less and more preferably 50 m2/g.

When the average particle diameter of the additive particles as primary particles is too large, aggregates exceeding 9.0 µm are likely to be formed, and thus the average particle diameter of the additive particles is more preferably as small as possible. However, when the average particle diameter of the additive particles is small to some extent, the maximum diameter of the aggregates changes depending on the mixing method in the manufacturing step, and the correlation between the magnitude of the average particle diameter and the maximum diameter of the aggregates becomes weak.

Hereinafter, unless particularly otherwise specified, the average particle diameter of the additive particles as primary particles will be simply referred to as the average particle diameter of the additive particles. The average particle diameter is calculated from the following general formula by obtaining the area circle equivalent diameters from an image where the powder is enlarged to a magnification of 50,000 to 200,000 times with a transmission electron microscope (TEM). The average particle diameter is represented by a formula of the sum of the area equivalent circle diameters of measured particles/the number of the measured particles (the number of the measured particles is at least 100).

The average particle diameter of the additive particles is not particularly limited and may be, for example, 5 nm or more and 100 nm or less and is more preferably 10 nm or more and 60 nm or less and still more preferably 20 nm or more and 45 nm or less.

For example, when the average particle diameter of the additive particles is less than 5 nm, there is a possibility that the manufacturing cost may increase or it may become difficult to handle the additive particles in the manufacturing step.

For example, when the average particle diameter of the additive particles exceeds 100 nm, the specific surface area becomes small, and thus there is a possibility that the effect of trapping an odor-causing substance may decrease.

In order to reduce the sizes of the aggregates of the additive particles in the adhesive component, the adhesive layer 320 may contain 1 part by mass or more and 50 parts by mass or less of a dispersant with respect to 100 parts by mass of the additive particles.

The kind of the dispersant is not particularly limited as long as the dispersant is capable of dispersing the additive particles in a liquid adhesive component for forming the adhesive component.

As the dispersant, (poly)ester salts, polyether phosphates, alkyl sulfate ester salts, alkylbenzenesulfonates, alkylnaphthalenesulfonates, alkylsulfosuccinates, alkyldiphenylether disulfonates, alkyl phosphates, aromatic phosphates, polyoxyethylene alkyl ethers, polyoxyethylene alkylphenol ethers, polyoxyethylene alkyl esters, alkylallyl sulfate ester salts, polyoxyethylene alkyl phosphates, sorbitan alkyl esters, glycerin fatty acid esters, sorbitan fatty acid esters, sucrose fatty acid esters, polyethylene glycol fatty acid esters, polyoxyethylene sorbitan alkyl esters, polyoxyethylene alkylallyl ethers, polyoxyethylene derivatives, polyoxyethylene sorbitol fatty acid esters, polyoxy fatty acid esters, polyoxyethylene alkylamine, vinyl chloride-vinyl acetate copolymers, and the like are exemplary examples. These dispersants may be used singly or two or more dispersants may be mixed and used.

The lamination strength of the adhesive layer 320 is measured in accordance with JIS Z 0238: 1998 by a T-peel method (crosshead speed: 300 mm/min.) using a TENSILON tensile tester.

The lamination strength of the adhesive layer 320 needs to be, for example, 6 N/15 mm width or more and is more preferably 7 N/15 mm width or more.

The thickness of the adhesive layer 320 is not particularly limited as long as the lamination strength is favorable in the case of forming the laminated film 350 into a packaging bag and the effect of reducing an odor-causing substance is favorable.

The thickness of the adhesive layer 320 may be, for example, 0.01 µm or more and 5 µm or less and is more preferably 0.03 µm or more and 3 µm or less.

When the thickness of the adhesive layer 320 is less than 0.01 µm, there is a possibility that the lamination strength may decrease and the amount of an odor-causing substance trapped may be too small.

When the thickness of the adhesive layer 320 exceeds 5 µm, there is a possibility that the laminated film 350 may become too thick.

The sealant layer 330 is a layer for pasting the laminated film 350 to another laminated film by thermal fusion. The sealant layer 330 is not particularly limited as long as the sealant layer melts by heat and is capable of fusing with a sealant layer in another laminated film.

As the material of the sealant layer 330, for example, resins such as low-density polyethylene, medium-density polyethylene, high-density polyethylene, linear low-density polyethylene, polypropylene, ethylene-vinyl acetate copolymer, an ionomer resin, an ethylene-acrylic acid copolymer, an ethylene-methyl acrylate copolymer, an ethylene-methacrylic acid copolymer, and an ethylene-propylene copolymer are exemplary examples. As the resin that is used for the sealant layer 330, any one of the exemplified resins may be used singly or two or more resins may be used in combination.

For example, in the case of forming a package with the laminated film 350, the package being subjected to boiling sterilization or retort sterilization, the sealant layer 330 more preferably contains an unstretched polypropylene resin from the viewpoint of maintaining sufficient adhesion.

The sealant layer 330 may be laminated on the adhesive layer 320 while forming a film of a resin composition by extrusion lamination or a film-like sheet may be pasted to the adhesive layer 320.

The thickness of the sealant layer 330 may be, for example, 10 µm or more and 150 µm or less and is more preferably 30 µm or more and 80 µm or less.

Next, an example of a method for manufacturing the laminated film 350 will be described.

First, the base material film 310 having the barrier layer 314 laminated on a resin film that forms the resin layer 312 is prepared.

After that, the adhesive layer 320 and the sealant layer 330 are laminated in this order on the barrier layer 314 of the base material film 310.

As a lamination method, for example, dry lamination may be used.

For example, a coating liquid with which the additive particles have been mixed is prepared as an adhesive that forms the adhesive component of the adhesive layer 320 after curing, the coating liquid is applied to and dried on the surface of the barrier layer 314 of the base material film 310 with a dry lamination machine, and a resin film that forms the sealant layer 330 and the base material film 310 are thermally pressed using hot rolls.

A method for applying the coating liquid is not particularly limited. For example, the coating liquid can be applied using a coater such as a roll coater, a reverse roll coater, a gravure coater, a micro gravure coater, a knife coater, a bar coater, a wire bar coater, a die coater, a dip coater, or a spin coater.

As a lamination method, a non-solvent laminator can be used, and, as the adhesive component of the adhesive layer 320, a coating liquid with which a non-solvent adhesive additive particles have been mixed can also be used.

At the time of preparing the coating liquid, it is more preferable to mix the additive particles with the adhesive that forms the adhesive component and sufficiently stir the additive particles so that the sizes of aggregates of the additive particles become 9.0 µm or smaller. Stirring makes the additive particles dispersed in the coating liquid.

In order to decrease the sizes of the aggregates of the additive particles, it is more preferable to add a dispersant to the coating liquid. The dispersant may be directly added to the adhesive together with the additive particles, but it is more preferable to form a particle dispersion liquid by dispersing the additive particles and the dispersant in a solvent and then mixing and stirring the particle dispersion liquid and the adhesive to prepare the coating liquid. In this case, the dispersion of the additive particles in the coating liquid is promoted.

On the additive particles, it is more preferable to perform a physical fibrillation treatment for refining the additive particles in a state where the additive particles, the dispersant, and the solvent have been mixed together. This promotes the refinement and dispersion of the additive particles in the coating liquid.

As the physical fibrillation treatment, mechanical treatments such as a highpressure homogenizer, an ultrahigh-pressure homogenizer, a ball mill, a roll mill, a cutter mill, a planetary mill, a jet mill, an attritor, a grinder, a juicer mixer, a homomixer, an ultrasonic homogenizer, a NanoGenizer, and aqueous counter collision are exemplary examples.

When a dispersion treatment for dispersing the refined additive particles in the coating liquid is performed using one or more means described above, it is possible to suppress the growth of the aggregates in the coating liquid.

The dispersion treatment also suppresses the formation of a precipitate in the coating liquid and is thus capable of efficiently dispersing the additive particles in the coating liquid.

Once the coating liquid is prepared, it is more preferable to perform the filtration treatment before application.

Since the laminated film 350 includes the barrier layer 314 having a barrier property against oxygen and water vapor, the permeation of oxygen and water vapor that have passed through the resin layer 312 into the adhesive layer 320 and the sealant layer 330 is suppressed. Therefore, it is possible to suppress the intrusion of oxygen, water vapor, or the like into packaging bags. This makes it possible to suppress deterioration of an article to be packaged attributed to at least one of oxygen and water vapor in a package accommodating the article to be packaged in a packaging bag formed of the laminated film 350. Deterioration of the polyvalent metal particles or the polyvalent metal compound particles attributed to at least one of oxygen and water vapor permeating from the outside can also be suppressed in the same manner.

The laminated film 350 has the adhesive layer 320 containing the polyvalent metal particles or the polyvalent metal compound particles between the base material film 310 and the sealant layer 330 and is thus capable of adsorbing an odor-causing substance such as a sulfur compound that has permeated into the adhesive layer 320 through the sealant layer 330. Therefore, in a package accommodating an article to be packaged in a packaging bag formed of the laminated film 350, an odor-causing substance such as a sulfur compound derived from the article to be packaged that has permeated into the adhesive layer 320 is trapped with the polyvalent metal particles or the polyvalent metal compound particles. As a result, it is possible to reduce a retort odor in the article to be packaged.

The polyvalent metal particles or polyvalent metal compound particles contained in the adhesive layer suppress a decrease in the lamination strength of the adhesive layer 320. Since the polyvalent metal particles or the polyvalent metal compound particles are mixed with the adhesive component of the adhesive layer 320, the polyvalent metal particles or the polyvalent metal compound particles react with a component such as acetic acid or amino acid contained in the article to be packaged to suppress alteration. Therefore, the effect of reducing an odor-causing substance and the lamination strength are less likely to decrease over time.

As described above, according to the laminated film 350 of the present embodiment, it is possible to provide a laminated film capable of reducing a retort odor and having a favorable lamination strength.

### [Seventh Embodiment]

A laminated film according to a seventh embodiment of the present invention will be described.

FIG. 10 is a schematic cross-sectional view showing an example of the laminated film according to the seventh embodiment of the present invention.

A laminated film 360 of the present embodiment shown in FIG. 10 includes a base material film (predetermined layer) 310A in place of the base material film 310 in the laminated film 350 of the sixth embodiment.

The base material film 310A includes an adhesive layer 316 and an intermediate layer 318 in this order between the barrier layer 314 and the adhesive layer 320. Hereinafter, differences from the sixth embodiment will be mainly described.

The adhesive layer 316 is a layer that causes the barrier layer 314 and the intermediate layer 318 to adhere to each other.

For the adhesive layer 316, one or more materials of the materials exemplified as the adhesive component in the adhesive layer 320 are used. The adhesive layer 316 may be formed of the same material as the adhesive layer 320 in the laminated film 360 or may be formed of a different material.

The adhesive layer 316 may not contain additive particles or may contain additive particles.

In a case where the adhesive layer 316 contains additive particles, the laminated film 360 is an example of a case where there are a plurality of adhesive layers containing additive particles.

In a case where the adhesive layer 316 contains additive particles, the kind, content, specific surface area, layer thickness, and average particle diameter of the additive particles in the adhesive layer 316 are not particularly limited.

For example, the kind, content, specific surface area, layer thickness, and average particle diameter of the additive particles in the adhesive layer 316 are more preferably the same kind and suitable numerical ranges as those exemplified for the adhesive layer 320 in the laminated film 350.

This is also true for the kind, content, specific surface area, layer thickness, and average particle diameter of the adhesive layer 320 in the laminated film 360.

In a case where the adhesive layer 316 contains additive particles, the maximum diameter and distribution of aggregates of the additive particles in the laminated film 360 are not particularly limited.

The maximum diameter of the aggregates of the additive particles in the laminated film 360 in each of the adhesive layers 320 and 316 in the laminated film 360 is more preferably within the preferable range of the adhesive layer 320 in the laminated film 350.

The distribution of the aggregates of the additive particles in the laminated film 360 in each of the adhesive layers 320 and 316 in the laminated film 360 is more preferably within the preferable range of the adhesive layer 320 in the laminated film 350.

The intermediate layer 318 is a resin layer disposed between the barrier layer 314 and the sealant layer 330. The intermediate layer 318 adheres to each of the barrier layer 314 through the adhesive layer 316 and the sealant layer 330 through the adhesive layer 320.

A material of the intermediate layer 318 is not particularly limited.

The kind of the intermediate layer 318 can be selected as appropriate depending on the application of the laminated film 360. For example, when a resin film that is excellent in terms of at least one of an oxygen barrier property, a water vapor barrier property, a mechanical strength, bending resistance, puncture resistance, impact resistance, abrasion resistance, cold resistance, heat resistance, chemical resistance, and light-shielding resistance is selected, the characteristic improves in the laminated film 360.

For example, as a suitable material of the intermediate layer 318, a film of nylon, polyethylene terephthalate, polyamide, polyethylene, polypropylene, polyvinyl chloride, polycarbonate, polyvinyl alcohol, an ethylene-propylene copolymer, an ethylene-vinyl acetate copolymer saponified product, or the like or a resin film having a vapor-deposited layer is an exemplary example.

For example, when nylon is used as the intermediate layer 318, the flexibility improves, and it is possible to suppress the generation of pinholes even in a case where a large external force is applied. Therefore, in a case where a package is formed with a packaging bag in which the laminated film 350 is used, it is possible to suppress the generation of pinholes in the laminated film 360 and the consequent deterioration of an article to be packaged. Such an action is particularly useful in a case where the article to be packaged is a food product.

The laminated film 360 of the present embodiment can be manufactured in the same manner as the laminated film 350 except that the base material film 310A having the adhesive layer 316 and the intermediate layer 318 laminated on the barrier layer 314 is formed in place of the base material film 310.

Particularly, in a case where the adhesive layer 316 contains the additive particles, the adhesive layer 316 can be manufactured in the same manner as the adhesive layer 320 in the sixth embodiment.

The laminated film 360 of the present embodiment has the same configuration as the laminated film 350 of the sixth embodiment except that the adhesive layer 316 and the intermediate layer 318 are laminated between the barrier layer 314 and the adhesive layer 320, and thus it is possible to provide a laminated film capable of reducing a retort odor and having a favorable lamination strength.

Particularly, since the laminated film 360 includes the intermediate layer 318, it is possible to improve the characteristics of the laminated film 360 depending on the characteristics of the intermediate layer 318.

Furthermore, in a case where the adhesive layer 316 contains polyvalent metal particles or polyvalent metal compound particles, since two layers trap an odor-causing substance, it is possible to improve the effect of reducing an odor-causing substance.

### [Eighth Embodiment]

A laminated film according to an eighth embodiment of the present invention will be described.

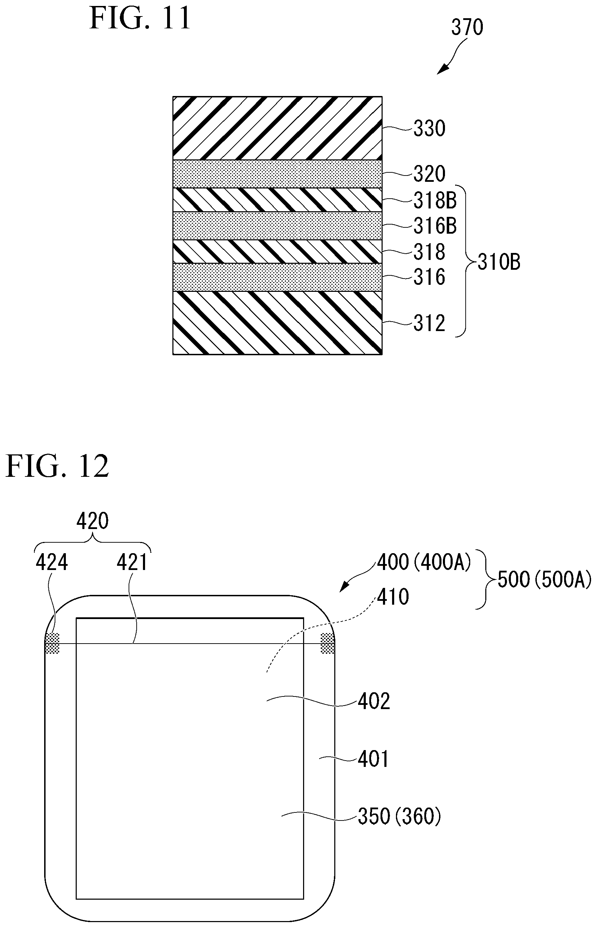

FIG. 11 is a schematic cross-sectional view showing an example of the laminated film according to the eighth embodiment of the present invention.

A laminated film 370 of the present embodiment shown in FIG. 11 includes a base material film (predetermined layer) 310B in place of the base material film 310A in the laminated film 370 of the seventh embodiment. In the laminated film 370, the resin layer 312, the adhesive layer 316, the intermediate layer 318, an adhesive layer 316B, and an intermediate layer 318B are laminated in this order. Hereinafter, differences from the seventh embodiment will be mainly described.

The adhesive layer 316 is a layer that causes the resin layer 312 and the intermediate layer 318 to adhere to each other. The adhesive layer 316B is a layer that causes the intermediate layer 318 and the intermediate layer 318B to adhere to each other.

For the adhesive layers 316 and 316B, one or more materials of the materials exemplified as the adhesive component in the adhesive layer 320 are used. The adhesive layers 316 and 316B may be formed of the same material as the adhesive layer 320 in the laminated film 370 or may be formed of a different material.

The adhesive layers 316 and 316B may not contain additive particles or may contain additive particles.

In a case where the adhesive layers 316 and 316B contain additive particles, the laminated film 370 is an example of a case where there are a plurality of adhesive layers containing additive particles.

In a case where the adhesive layers 316 and 316B contain additive particles, the kind, content, specific surface area, layer thickness, and average particle diameter of the additive particles in the adhesive layers 316 and 316B are not particularly limited.

For example, the kind, content, specific surface area, layer thickness, and average particle diameter of the additive particles in the adhesive layers 316 and 316B are more preferably the same kind and suitable numerical ranges as those exemplified for the adhesive layer 320 in the laminated film 350.

This is also true for the kind, content, specific surface area, layer thickness, and average particle diameter of the adhesive layer 320 in the laminated film 370.

In a case where the adhesive layers 316 and 316B contain additive particles, the maximum diameter and distribution of aggregates of the additive particles in the laminated film 370 are not particularly limited.

The maximum diameter of the aggregates of the additive particles in the laminated film 370 in each of the adhesive layers 316 and 316B in the laminated film 370 is more preferably within the preferable range of the adhesive layer 320 in the laminated film 350.

The distribution of the aggregates of the additive particles in the laminated film 370 in each of the adhesive layers 316 and 316B in the laminated film 370 is more preferably within the preferable range of the adhesive layer 320 in the laminated film 350.

The intermediate layer 318 is a resin layer disposed between the resin layer 312 and the intermediate layer 318B. The intermediate layer 318 adheres to each of the resin layer 312 through the adhesive layer 316 and the intermediate layer 318B through the adhesive layer 316B.

A material of the intermediate layer 318 is not particularly limited.

The kind of the intermediate layer 318 can be selected as appropriate depending on the application of the laminated film 370. For example, when a resin film that is excellent in terms of at least one of an oxygen barrier property, a water vapor barrier property, a mechanical strength, bending resistance, puncture resistance, impact resistance, abrasion resistance, cold resistance, heat resistance, chemical resistance, and light-shielding resistance is selected, the characteristic improves in the laminated film 370.

For example, as a suitable material of the intermediate layer 318, a film of nylon, polyethylene terephthalate, polyamide, polyethylene, polypropylene, polyvinyl chloride, polycarbonate, polyvinyl alcohol, an ethylene-propylene copolymer, an ethylene-vinyl acetate copolymer saponified product, or the like or a resin film having a vapor-deposited layer is an exemplary example.

For example, when nylon is used as the intermediate layer 318, the flexibility improves, and it is possible to suppress the generation of pinholes even in a case where a large external force is applied. Therefore, in a case where a package is formed with a packaging bag in which the laminated film 370 is used, it is possible to suppress the generation of pinholes in the laminated film 370 and the consequent deterioration of an article to be packaged. Such an action is particularly useful in a case where the article to be packaged is a food product.

The intermediate layer 318B is a layer disposed between the intermediate layer 318 and the sealant layer 330. The intermediate layer 318B adheres to each of the intermediate layer 318 through the adhesive layer 316B and the sealant layer 330 through the adhesive layer 320.

For example, an aluminum film foil can be used as the intermediate layers 318 and 318B. Aluminum film foils do not easily transmit gas or liquid and have a characteristic of shielding light. Therefore, in a case where a package is formed with a packaging bag in which the laminated film 370 is used, it is possible to suppress the deterioration of an article to be packaged. In addition, since aluminum film foils do not let smells out, it is possible to suppress flavor being degraded by leakage of scent. Such an action is particularly useful in a case where the article to be packaged is a food product.

According to the laminated film 370 of the present embodiment, it is possible to provide a laminated film capable of reducing a retort odor and having a favorable lamination strength.

### [Ninth Embodiment]

A packaging bag and a package according to a ninth embodiment of the present invention will be described.

FIG. 12 is a schematic front view showing an example of the packaging bag and the package according to the ninth embodiment of the present invention.

As shown in FIG. 12, a package 500 of the present embodiment includes a packaging bag 400 of the present embodiment and an article to be packaged 410 accommodated in the packaging bag 400.

The packaging bag 400 includes a seal portion 401 formed by pasting the peripheral edges of a pair of the laminated films 350 cut into a substantially rectangular shape together and an accommodation portion 402 formed between the pair of laminated films 350 surrounded by the seal portion 401. That is, in the packaging bag 400, the side end portions, the lower end portion, and the upper end portion are sealed with the seal portion 401.

The accommodation portion 402 forms an accommodation space sandwiched between the pair of laminated films 350 and surrounded by the seal portion 401 and accommodates, for example, the article to be packaged 410 such as food.

For example, the package 500 may be a retort food product obtained by heat-sterilizing the article to be packaged 410 composed of food and sealing the article to be packaged with the packaging bag 400.

The pair of laminated films 350 are formed by cutting the laminated films 350 of the sixth embodiment to appropriate sizes.

The pair of laminated films 350 are overlaid so that the sealant layers 330 face each other. Each sealant layer 330 is thermally fused to the outer peripheral portion of the pair of laminated films 350. Therefore, the seal portion 401 is formed.

The packaging bag 400 includes an opening portion 420. For example, the opening portion 420 has a pair of easy-to-open processed portions 424 formed in the seal portion 401 at the side end portions and a half-cut line 421 that serves as a path of cutting between the pair of easy-to-open processed portions 424.

The easy-to-open processed portion 424 is not particularly limited as long as the portion is configured to enable the easy opening of the packaging bag 400. For example, the easy-to-open processed portion 424 may be formed of a scar group composed of a collection of fine recess portions formed on the surface of the seal portion 401. For example, the easy-to-open processed portion 424 may be a notch that penetrates an end edge of the seal portion 401 in the thickness direction. The shape of the notch is not particularly limited, and the notch may be, for example, a V-shaped, U-shaped, or I-shaped notch.

For example, the half-cut line 421 can be formed by laser processing.

A method for manufacturing the packaging bag 400 and the package 500 will be described.

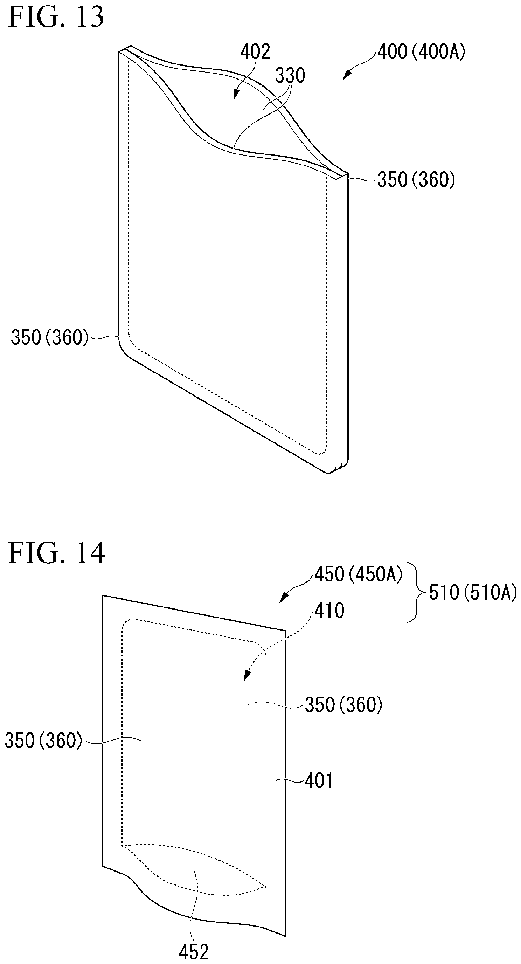

FIG. 13 is a schematic perspective view showing a method for manufacturing a packaging bag according to the ninth embodiment of the present invention.

A pair of the laminated films 350 cut in accordance with the outer shape of the packaging bag 400 are prepared.

After that, as shown in FIG. 13, the sealant layers 330 of the individual laminated films 350 are made to face each other, and the sealant layers 330 are thermally fused together at the lower end portions and side end portions of the individual laminated films 350.

Therefore, the seal portion 401 is formed at the lower end portion and the side end portions. The accommodation portion 402 is formed in the individual laminated films 350 surrounded by the seal portion 401 in a U-shape.

At the upper end of the packaging bag 400, a slit portion that communicates with the accommodation portion 402 is formed.

After that, the article to be packaged 410 is loaded from the upper end portion of the packaging bag 400 in an unsealed state. After that, the sealant layers 330 of the laminated films 350 facing each other at the upper end portions are thermally fused together, thereby forming the seal portion 401 at the upper end portion as well. The package 500 as shown in FIG. 12 can be manufactured as described above.

In the packaging bag 400 of the present embodiment, the accommodation portion 402 is formed of the same laminated films 350 as the sixth embodiment.

Since each laminated film 350 has the barrier layer 314, it is possible to suppress oxygen and water vapor permeating into the inside from the outside and to suppress deterioration of the members inside the barrier layer 314 and the article to be packaged 410 attributed to oxygen and water vapor.

Each laminated film 350 contains the polyvalent metal particles or the polyvalent metal compound particles in the adhesive layer 320 inside (on the article to be packaged side) the barrier layer 314. Therefore, it is possible to adsorb a retort odor-causing substance, such as a sulfur compound, that is generated from the article to be packaged 410 for a long period of time. Therefore, the packaging bag 400 is capable of suppressing the accumulation of a retort odor-causing substance, which accumulates in the article to be packaged 410 in the accommodation portion 402, in the article to be packaged 410 in the accommodation portion 402.

As a result, it is possible to reduce a retort odor that is generated in a case where the package 500 is opened.

Depending on the kind, there are cases where the article to be packaged 410 contains a component that alters the polyvalent metal particles or the polyvalent metal compound particles and degrades the retort odor-trapping action (deterioration-causing component). For example, acids, such as acetic acid, contained in a variety of food products are likely to alter the polyvalent metal particles or the polyvalent metal compound particles.

In the present embodiment, since the polyvalent metal particles or the polyvalent metal compound particles are mixed with the adhesive component and covered with the adhesive component, for example, the chemical reaction between the polyvalent metal particles or the polyvalent metal compound particles and the deterioration-causing component is suppressed, and thus the polyvalent metal particles or the polyvalent metal compound particles are less likely to deteriorate.

As described above, according to the packaging bag 400 and the package 500 of the present embodiment, since the laminated films 350 of the sixth embodiment are provided, similar to the sixth embodiment, it is possible to provide a packaging bag and a package each capable of reducing a retort odor and having a favorable lamination strength. The same action is provided even when the laminated film 360 of the seventh embodiment or the laminated film 370 of the eighth embodiment is employed in place of the laminated film 350.

### [Tenth Embodiment]

A packaging bag and a package according to a tenth embodiment of the present invention will be described.

FIG. 14 is a schematic perspective view showing an example of the packaging bag and the package according to the tenth embodiment of the present invention.

As shown in FIG. 14, a package 510 of the present embodiment includes a packaging bag 450 and the same article to be packaged 410 as in the ninth embodiment.

The packaging bag 450 is a stand-up pouch including a pair of the laminated films 350 and a bottom tape made to adhere to the lower end portion of each laminated film 350. A bottom tape 452 is composed of a laminated film having the same layer configuration as that of the laminated film 350.

The packaging bag 450 and the package 510 of the present embodiment are configured in the same manner as the packaging bag 400 and the package 500 of the ninth embodiment except that the packaging bag 450 and the package 510 include the bottom tape 452 and are thus formed in a stand-up pouch shape.

The package 510 can be manufactured by manufacturing the packaging bag 450 having a slit formed at the upper end portion by a well-known method for manufacturing a stand-up pouch in which a pair of the laminated films 350 and the bottom tape 452 are used, then, loading the article to be packaged 410 from the upper end portion, and sealing the upper end portion to form the seal portion 401.

The packaging bag 450 and the package 510 of the present embodiment include the laminated films 350 as in the ninth embodiment and thus have the same action as in the ninth embodiment. The same action is provided even when the laminated film 360 of the seventh embodiment or the laminated film 370 of the eighth embodiment is employed in place of the laminated film 350.

In each of the above-described embodiments, examples where the laminated films 350 and 360 are wholly light transmission portions have been described.

However, a light transmission portion may be formed in a part of each of the laminated films 350 and 360 by providing a printed layer on an appropriate portion of the laminated film 350 or 360 and thereby forming a light-shielding portion on a part of each of the laminated films 350 and 360.

For example, in a case where the packaging bag 400 is formed of a pair of the laminated films 350 as in the ninth embodiment, a light-shielding portion by a printed layer may be formed in one or both of the pair of laminated films 350.

For example, in the laminated films 350 and 360, the printed layer may be provided between the resin layer 312 and the barrier layer 314.

The printed layer is, for example, a layer composed of an ink formed by adding a variety of pigments, a plasticizer, a drying agent, a stabilizer, and the like to a binder resin such as a urethane-based resin, an acrylic resin, a nitrocellulose-based resin, or a rubber-based resin. This printed layer makes it possible to display a character, a pattern, and the like. As a printing method, for example, a well-known printing method such as offset printing, gravure printing, flexographic printing, silk screen printing, or inkjet printing can be used.

On the surface 312b of the resin layer 312 that forms the printed layer, a corona treatment or an ozone treatment may be performed in advance as a pretreatment. In this case, it is possible to improve the adhesion between the printed layer and the resin layer 312.

The layer configurations of the laminated films in the sixth and seventh embodiments are examples. For example, the laminated film may include a random layer or a thin film between the adhesive layer 320 and the sealant layer 330 or between the resin layer 312 and the barrier layer 314 as long as the function of the laminated film is not significantly impaired.

In the description of the seventh embodiment, an example where the polyvalent metal particles or the polyvalent metal compound particles are contained in the adhesive layer 320 of the laminated film 360 and an example where the polyvalent metal particles or the polyvalent metal compound particles are contained in both of the adhesive layers 320 and 316 of the laminated film 360 have been described. However, the polyvalent metal particles or the polyvalent metal compound particles may be contained only in the adhesive layer 316.

In the description of the seventh embodiment, an example where there is one intermediate layer has been described. However, in the laminated film, two or more intermediate layers may be included.

The resin layer 312, the adhesive layer 316, the intermediate layer 318, the adhesive layer 316, the barrier layer 314 containing aluminum, the adhesive layer 320, and the sealant layer 330 may be laminated in this order.

The resin layer 312, the adhesive layer 316, the barrier layer 314 containing aluminum, the adhesive layer 320, and the sealant layer 330 may be laminated in this order.

The barrier layer 314, the adhesive layer 316, the intermediate layer 318, the adhesive layer 320, and the sealant layer 330 may be laminated in this order.

The resin layer 312, the adhesive layer 316, the intermediate layer 318, the adhesive layer 320, and the sealant layer 330 may be laminated in this order.

The intermediate layer 318, the adhesive layer 320, and the sealant layer 330 may be laminated in this order.

The resin layer 312, the adhesive layer 320, and the sealant layer 330 may be laminated in this order.

The intermediate layer 318, the barrier layer 314, the adhesive layer 320, and the sealant layer 330 may be laminated in this order.

The sealant layer 330 may be configured in the same manner as the resin layer 312.

The sealant layer 330 may be configured to impart a light-shielding property by light-shielding printing.

A full-tone printed layer may be provided on the resin layer 312 or the barrier layer 314. For example, in a case where the resin layer 312, the adhesive layer 316, the intermediate layer 318, the adhesive layer 320, and the sealant layer 330 are laminated in this order, a full-tone printed layer provided on the resin layer 312 is disposed between the resin layer 312 and adhesive layer 316.

In addition, for example, in a case where the resin layer 312, the barrier layer 314, the adhesive layer 316, the intermediate layer 318, the adhesive layer 320, and the sealant layer 330 are laminated in this order, a full-tone printed layer provided on the barrier layer 314 is disposed between the barrier layer 314 and the adhesive layer 316.

In the above-described ninth embodiment, an example where the packaging bag 400 and the package 500 are formed using the pair of laminated films 350 has been described.

However, as shown in FIGS. 12 and 13, a packaging bag 400A and a package 500A may be formed of a pair of the laminated films 360 or 370 in place of the pair of laminated films 350.

The packaging bag 400A and the package 500A can be manufactured in the same manner as the packaging bag 400 and the package 500 except that the pair of laminated films 360 are used in place of the pair of laminated films 350.

The packaging bag 400A and the package 500A include the pair of laminated films 360 and thus have the same action as the laminated film 360.

In the above-described ninth embodiment, an example where the packaging bag 450 and the package 510 are formed using the pair of laminated films 350 has been described.

However, as shown in FIG. 14, a packaging bag 450A and a package 510A may be formed of a pair of the laminated films 360 or 370 in place of the pair of laminated films 350.

The packaging bag 450A and the package 510A can be manufactured in the same manner as the packaging bag 450 and the package 510 except that the pair of laminated films 360 are used in place of the pair of laminated films 350.

The packaging bag 450A and the package 510A include the pair of laminated films 360 and thus have the same action as the laminated film 360.

In the above-described ninth and tenth embodiments, examples where the packaging bag and the package are formed using the pair of laminated films 350 have been described. However, as long as the laminated film 350 is used in some of the outer peripheral portions of the packaging bags and the packages, laminated films in the other outer peripheral portions may have a different layer configuration from the laminated film 350.

For example, in a case where a retort odor can be suppressed with the polyvalent metal particles or polyvalent metal compound particles contained in one laminated film 350, polyvalent metal particles or polyvalent metal compound particles may not be contained in other laminated films.

In the above-described ninth and tenth embodiments, examples where the packaging bags are a gusseted bag and a stand-up pouch have been described, but the shape of the packaging bag is not limited thereto, and the packaging bag may have other well-known bag shapes.

For example, the shape of the packaging bag may be a two-side seal bag, a three-side seal bag, or a center seal bag.

For example, the packaging bag may include a synthetic resin fastener that can be sealed repeatedly by fitting a spout or a strip-like protrusion with a strip-like groove.

The packaging bag may have one or a plurality of functions such as retort packaging, boiling packaging, and microwave packaging.

In the above-described ninth and tenth embodiments, examples where the article to be packaged 410 is food have been described, but the article to be packaged 410 is not limited to food.

The article to be packaged 410 may be curry, oden, noodle soup, seasoning liquid, pasta sauce, side dishes, soup, kamameshi mix, and pet food.

In a range of 500 µm × 500 µm in the adhesive layer 320, among the aggregates formed of the polyvalent metal particles or the polyvalent metal compound particles, the number of the aggregates of 9 µm or larger may be 30 or less, and, in the adhesive layer 320, the ratio of the maximum diameter of the aggregates to the minimum diameter of the aggregates formed of the polyvalent metal particles or the polyvalent metal compound particles may be 14.0 times or less.

### [Examples]

Next, Examples 1 to 31 of the embodiments of the present invention will be described together with Comparative Examples 1 to 20. The configurations of Examples 1 to 22 and Comparative Examples 1 to 14 are the configuration of the seventh embodiment of the present invention.

The configurations of Examples 23 to 31 and Comparative Examples 15 to 20 are the configuration of the eighth embodiment of the present invention.

First, particle dispersion liquids used for the manufacturing of laminated films of Examples 1 to 31 and Comparative Examples 1 to 20 will be collectively described. Each particle dispersion liquid was used for the manufacturing of an adhesive containing polyvalent metal compound particles.

The following [Table 3] shows the compositions of the particle dispersion liquids and dispersion treatments used for the manufacturing of the laminated films of Examples 1 to 31 and Comparative Examples 1 to 20.

**[Table 3]**

| | Particles | | | Dispersant | | Dispersion treatment |
|---|---|---|---|---|---|---|
| | Material | Parts by mass | Average particle diameter (nm) | Name | Parts by mass | |
| Particle dispersion liquid 11Aa | ZnO | 100 | 35 | Dispersant A | 5 | Bead mill |
| Particle dispersion liquid 11Ba | ZnO | 100 | 35 | Dispersant A | 40 | Bead mill |
| Particle dispersion liquid 11Ca | ZnO | 100 | 35 | Dispersant A | 20 | Bead mill |
| Particle dispersion liquid 12Aa | ZnO | 100 | 35 | Dispersant B | 5 | Bead mill |
| Particle dispersion liquid 12Ba | ZnO | 100 | 35 | Dispersant B | 40 | Bead mill |
| Particle dispersion liquid 13Aa | ZnO | 100 | 35 | Dispersant C | 5 | Bead mill |
| Particle dispersion liquid 13Ba | ZnO | 100 | 35 | Dispersant C | 40 | Bead mill |
| Particle dispersion liquid 14Aa | ZnO | 100 | 20 | Dispersant A | 5 | Bead mill |
| Particle dispersion liquid 14Ba | ZnO | 100 | 20 | Dispersant A | 40 | Bead mill |
| Particle dispersion liquid 14Ca | ZnO | 100 | 20 | Dispersant A | 20 | Bead mill |
| Particle dispersion liquid 15Aa | ZnO | 100 | 60 | Dispersant A | 5 | Bead mill |
| Particle dispersion liquid 15Ba | ZnO | 100 | 60 | Dispersant A | 40 | Bead mill |
| Particle dispersion liquid 100a | ZnO | 100 | 35 | - | - | Bead mill |
| Particle dispersion liquid 200a | Al₂O₃ | 100 | 45 | - | - | Bead mill |
| Particle dispersion liquid 300a | MgO | 100 | 20 | - | - | Bead mill |
| Particle dispersion liquid 400a | ZnO | 100 | 20 | - | - | Bead mill |
| Particle dispersion liquid 11Ab | ZnO | 100 | 35 | Dispersant A | 5 | Stirring only |
| Particle dispersion liquid 11Bb | ZnO | 100 | 35 | Dispersant A | 40 | Stirring only |
| Particle dispersion liquid 11Cb | ZnO | 100 | 35 | Dispersant A | 20 | Stirring only |
| Particle dispersion liquid 14Ab | ZnO | 100 | 20 | Dispersant A | 5 | Stirring only |
| Particle dispersion liquid 14Bb | ZnO | 100 | 20 | Dispersant A | 40 | Stirring only |
| Particle dispersion liquid 100b | ZnO | 100 | 35 | - | - | Stirring only |
| Particle dispersion liquid 200b | Al₂O₃ | 100 | 45 | - | - | Stirring only |
| Particle dispersion liquid 300b | MgO | 100 | 20 | - | - | Stirring only |
| Particle dispersion liquid 400b | ZnO | 100 | 20 | - | - | Stirring only |

### [Particle dispersion liquid 11Aa]

As shown in [Table 3], a particle dispersion liquid 11Aa was prepared by dispersing fine particles of zinc oxide (ZnO), which is a polyvalent metal oxide, (hereinafter, zinc oxide particles) in ethyl acetate.

The particle dispersion liquid 11Aa was prepared as described below.

First, the zinc oxide particles were added to ethyl acetate, which was a solvent, to form a liquid mixture. As the zinc oxide particles, FINEX-30 (trade name; manufactured by Sakai Chemical Industry Co., Ltd.) having an average particle diameter of 35 nm was used. The amount of FINEX (registered trademark)-30 added was set to an amount at which the solid content concentration of the liquid mixture became 30% by mass.

After that, a dispersant A containing polyester acid amide amine salt, alkylcyclohexane, and propylene glycol monomethyl ether acetate was added to the liquid mixture. The dispersant A is a dispersant containing amide amino acid of a high-molecular-weight polyester acid as a main component.

The amount of the dispersant A added was set to 5 parts by mass relative to 100 parts by mass of the solid content of the zinc oxide particles in the liquid mixture.

A dispersion treatment (described as "bead mill" in [Table 3]) was performed on this liquid mixture using a planetary ball mill.

As a result, the particle dispersion liquid 11Aa containing zinc oxide particles dispersed in the solvent was prepared.

### [Particle dispersion liquid 11Ba]

A particle dispersion liquid 11Ba was prepared in the same manner as the particle dispersion liquid 11Aa except that the amount of the dispersant added was set to 40 parts by mass.

### [Particle dispersion liquid 11Ca]

A particle dispersion liquid 11Ca was prepared in the same manner as the particle dispersion liquid 11Aa except that the amount of the dispersant added was set to 20 parts by mass.

### [Particle dispersion liquids 12Aa and 12Ba]

A particle dispersion liquid 12Aa was prepared in the same manner as the particle dispersion liquid 11Aa except that a dispersant B containing phosphoric acid ester was used in place of the dispersant A as a dispersant. The dispersant B is a polyether phosphate compound-based dispersant.

A particle dispersion liquid 12Ba was prepared in the same manner as the particle dispersion liquid 12Aa except that the amount of the dispersant added was set to 40 parts by mass.

### [Particle dispersion liquids 13Aa and 13Ba]

A particle dispersion liquid 13Aa was prepared in the same manner as the particle dispersion liquid 11Aa except that a dispersant C containing a vinyl chloride/vinyl acetate-based copolymer, acetone, and methanol was used in place of the dispersant A as a dispersant. The dispersant C is a dispersant containing a vinyl chloride-vinyl acetate copolymer resin as a main component.

A particle dispersion liquid 13Ba was prepared in the same manner as the particle dispersion liquid 13Aa except that the amount of the dispersant added was set to 40 parts by mass.

### [Particle dispersion liquids 14Aa, 14Ba, and 14Ca]

A particle dispersion liquid 14Aa was prepared in the same manner as the particle dispersion liquid 11Aa except that FINEX (registered trademark)-50 (trade name; manufactured by Sakai Chemical Industry Co., Ltd.), which is zinc oxide particles having an average particle diameter of 20 nm as primary particles, was used in place of FINEX-30 (registered trademark) having an average particle diameter of 35 nm as primary particles.

A particle dispersion liquid 14Ba was prepared in the same manner as the particle dispersion liquid 14Aa except that the amount of the dispersant added was set to 40 parts by mass.

A particle dispersion liquid 14Ca was prepared in the same manner as the particle dispersion liquid 14Aa except that the amount of the dispersant added was set to 20 parts by mass.

### [Particle dispersion liquids 15Aa and 15Ba]

A particle dispersion liquid 15Aa was prepared in the same manner as the particle dispersion liquid 11Aa except that FINEX (registered trademark)-20, which is zinc oxide particles having an average particle diameter of 60 nm as primary particles, was used in place of FINEX (registered trademark)-30.

A particle dispersion liquid 15Ba was prepared in the same manner as the particle dispersion liquid 15Aa except that the amount of the dispersant added was set to 40 parts by mass.

### [Particle dispersion liquids 100a, 200a, 300a, and 400a]

A particle dispersion liquid 100a was prepared in the same manner as the particle dispersion liquid 11Aa except that the dispersant was not added.

A particle dispersion liquid 200a was prepared in the same manner as the particle dispersion liquid 100a except that the particles of aluminum oxide (Al2O3) (hereinafter, aluminum oxide particles) manufactured by Fujifilm Wako Pure Chemical Corporation were used in place of the zinc oxide particles. The average particle diameter of the aluminum oxide particles was 45 nm.

A particle dispersion liquid 300a was prepared in the same manner as the particle dispersion liquid 100a except that the particles of magnesium oxide (MgO) (hereinafter, magnesium oxide particles) manufactured by Stream Chemicals, Inc. were used in place of the zinc oxide particles. The average particle diameter of the magnesium oxide particles was 20 nm.

A particle dispersion liquid 400a was prepared in the same manner as the particle dispersion liquid 100a except that FINEX (registered trademark)-50 was used in place of FINEX (registered trademark)-30.

### [Particle dispersion liquids 11Ab, 11Bb, and 11Cb]

A particle dispersion liquid 11Ab was prepared in the same manner as the particle dispersion liquid 11Aa except that the dispersion treatment using a planetary ball mill was not performed and the liquid mixture was stirred for 10 minutes using a stirring blade (expressed as "stirring only" in [Table 3]).

A particle dispersion liquid 11Bb was prepared in the same manner as the particle dispersion liquid 11Ab except that the amount of the dispersant added was set to 40 parts by mass.

A particle dispersion liquid 11 Cb was prepared in the same manner as the particle dispersion liquid 11Ab except that the amount of the dispersant added was set to 20 parts by mass.

### [Particle dispersion liquids 14Ab and 14Bb]

A particle dispersion liquid 14Ab was prepared in the same manner as the particle dispersion liquid 14Aa except that the dispersion treatment using a planetary ball mill was not performed and the liquid mixture was stirred for 10 minutes using a stirring blade.

A particle dispersion liquid 14Bb was prepared in the same manner as the particle dispersion liquid 14Ab except that the amount of the dispersant added was set to 40 parts by mass.

### [Particle dispersion liquids 100b, 200b, 300b, and 400b]

A particle dispersion liquid 100b was prepared in the same manner as the particle dispersion liquid 100a except that the dispersion treatment using a planetary ball mill was not performed and the liquid mixture was stirred for 10 minutes using a stirring blade.

A particle dispersion liquid 200b was prepared in the same manner as the particle dispersion liquid 200a except that the dispersion treatment using a planetary ball mill was not performed and the liquid mixture was stirred for 10 minutes using a stirring blade.

A particle dispersion liquid 300b was prepared in the same manner as the particle dispersion liquid 300a except that the dispersion treatment using a planetary ball mill was not performed and the liquid mixture was stirred for 10 minutes using a stirring blade.

A particle dispersion liquid 400b was prepared in the same manner as the particle dispersion liquid 400a except that the dispersion treatment using a planetary ball mill was not performed and the liquid mixture was stirred for 10 minutes using a stirring blade.

The following [Table 4] shows the manufacturing conditions and evaluation results of Examples 1 to 31 and Comparative Examples 1 to 20.

**[Table 4]**

| | Particle dispersion liquid | Coating liquid | Particle amount (% by mass) | OM image observation results | | H₂S (mg/L) concentration | Lamination strength (N) | | Evalua tion | | |
|---|---|---|---|---|---|---|---|---|---|---|---|
| | | | | Number of aggregates | Distance between aggregates (µm) | | Before treatment | After treatment | Odor | Strength | Comprehensive |
| Example 1 | 11Aa | 11Aa | 1.5 | 14 | 133 | 0.03 | 11 | 8 | A | A | A |
| Example 2 | 11Ca | 11Ca | 3.0 | 13 | 141 | 0.02 | 11 | 8 | A | A | A |
| Example 3 | 11Ca | 11Ca+ | 5.0 | 13 | 141 | 0.01 | 11 | 8 | A | A | A |
| Example 4 | 11Ba | 11Ba | 1.5 | 8 | 179 | 0.03 | 11 | 8 | A | A | A |
| Example 5 | 12Aa | 12Au | 1.5 | 16 | 126 | 0.03 | 11 | 8 | A | A | A |
| Example 6 | 12Ba | 12Ba | 1.5 | 9 | 163 | 0.03 | 11 | 8 | A | A | A |
| Example 7 | 13Aa | 13Aa | 1.5 | 16 | 126 | 0.03 | 11 | 8 | A | A | A |
| Example 8 | 13Ba | 13Ba | 1.5 | 9 | 163 | 0.03 | 11 | 8 | A | A | A |
| Example 9 | 100a | 100a | 1.5 | 14 | 133 | 0.03 | 11 | 8 | A | A | A |
| Example 10 | 11Aa | 11Aa+ | 9.5 | 20 | 111 | 0.01 | 11 | 8 | A | A | A |
| Example 11 | 100a | 100a+ | 9.5 | 23 | 103 | 0.01 | 11 | 8 | A | A | A |
| Example 12 | 14Aa | 14Au | 1.5 | 13 | 141 | 0.03 | 11 | 8 | A | A | A |
| Example 13 | 14Cu | 14Cu | 3.0 | 11 | 151 | 0.02 | 11 | 8 | A | A | A |
| Example 14 | 14Cu | 14Ca+ | 5.0 | 11 | 151 | 0.01 | 11 | 8 | A | A | A |
| Example 15 | 14Ba | 14Ba | 1.5 | 6 | 200 | 0.03 | 11 | 8 | A | A | A |
| Example 16 | 400a | 400a | 1.5 | 13 | 141 | 0.03 | 11 | 8 | A | A | A |
| Example 17 | 200a | 200a | 1.5 | 16 | 126 | 0.03 | 11 | 8 | A | A | A |
| Example 18 | 300a | 300a | 1.5 | 16 | 126 | 0.03 | 11 | 8 | A | A | A |
| Example 19 | 11Aa | 11Aa- | 0.8 | 13 | 141 | 0.2 | 11 | 8 | B | A | B |
| Example 20 | 11Aa | 11Aa++ | 11 | 23 | 103 | 0.01 | 11 | 6 | A | B | B |
| Example 21 | 15Aa | 15Au | 1.5 | 11 | 151 | 0.06 | 11 | 8 | B | A | B |
| Example 22 | 15Ba | 15Ba | 1.5 | 9 | 167 | 0.06 | 11 | 8 | B | A | B |
| Example 23 | 11Aa | 11Aa | 1.5 | 14 | 133 | 0.03 | 12 | 8 | A | A | A |
| Example 24 | 11Ba | 11Ba | 1.5 | 8 | 179 | 0.03 | 12 | 8 | A | A | A |
| Example 25 | 100a | 100a | 1.5 | 14 | 133 | 0.03 | 12 | 8 | A | A | A |
| Example 26 | 11Aa | 11Aa+ | 9.5 | 20 | 111 | 0.01 | 12 | 8 | A | A | A |
| Example 27 | 14Aa | 14Au | 1.5 | 13 | 141 | 0.03 | 12 | 8 | A | A | A |
| Example 28 | 14Ba | 14Ba | 1.5 | 6 | 200 | 0.03 | 12 | 8 | A | A | A |
| Example 29 | 400a | 400a | 1.5 | 13 | 141 | 0.03 | 12 | 8 | A | A | A |
| Example 30 | 11Aa | 11Aa- | 0.8 | 13 | 141 | 0.20 | 12 | 8 | B | A | B |
| Example 31 | 11Aa | 11Aa++ | 11 | 23 | 103 | 0.01 | 12 | 6 | A | B | B |
| Comparative Example 1 | - | - | - | N/A | - | 0.26 | 12 | 10 | C | A | C |
| Comparative Example 2 | 100b | 100bN | 1.5 | 109 | 48 | 0.07 | 12 | 6 | B | B | C |
| Comparative Example 3 | 100b | 100bP | 3.0 | 125 | 45 | 0.05 | 12 | 6 | B | B | C |
| Comparative Example 4 | 11Ab | 11Ab | 1.5 | 102 | 50 | 0.07 | 12 | 6 | B | B | C |
| Comparative Example 5 | 11Cb | 11Cb | 3.0 | 109 | 48 | 0.05 | 12 | 6 | B | B | C |
| Comparative Example 6 | 11Bb | 11Bb | 1.5 | 86 | 54 | 0.05 | 12 | 6 | B | B | C |
| Comparative Example 7 | 200b | 200b | 1.5 | 125 | 45 | 0.05 | 12 | 6 | B | B | C |
| Comparative Example 8 | 300b | 300b | 1.5 | 125 | 45 | 0.05 | 12 | 6 | B | B | C |
| Comparative Example 9 | 100b | 100b+ | 9.5 | 141 | 42 | 0.01 | 12 | 4 | A | C | C |
| Comparative Example 10 | 200b | 200b+ | 9.5 | 156 | 40 | 0.01 | 12 | 4 | A | C | C |
| Comparative Example 11 | 300b | 300b+ | 9.5 | 156 | 40 | 0.01 | 12 | 4 | A | C | C |
| Comparative Example 12 | 14Ab | 14Ab | 1.5 | 94 | 52 | 0.05 | 12 | 6 | B | B | C |
| Comparative Example 13 | 14Bb | 14Bb | 1.5 | 80 | 56 | 0.05 | 12 | 6 | B | B | C |
| Comparative Example 14 | 400b | 400b | 1.5 | 109 | 48 | 0.05 | 12 | 6 | B | B | C |
| Comparative Example 15 | 11Ab | 11Ab | 1.5 | 102 | 50 | 0.07 | 13 | 6 | B | B | C |
| Comparative Example 16 | 11Bb | 11Bb | 1.5 | 86 | 54 | 0.05 | 13 | 6 | B | B | C |
| Comparative Example 17 | 100b | 100b | 1.5 | 117 | 46 | 0.05 | 13 | 6 | B | B | C |
| Comparative Example 18 | 14Ab | 14Ab | 1.5 | 94 | 52 | 0.05 | 13 | 6 | B | B | C |
| Comparative Example 19 | 14Bb | 14Bb | 1.5 | 80 | 56 | 0.05 | 13 | 6 | B | B | C |
| Comparative Example 20 | 400b | 400b | 1.5 | 109 | 48 | 0.05 | 13 | 6 | B | B | C |

### [Example 1]

In Example 1, a TOYOBO ESTER (registered trademark) film E5100 (trade name; manufactured by Toyobo Co., Ltd.), which is a biaxially-stretched polyethylene terephthalate film, was used as a resin layer 312. E5100 was 12 µm in thickness, 500 m in length, and 600 mm in width.

One surface 312b of the resin layer 312 was corona-treated, and a barrier layer 314 composed of SiOx was formed on the corona-treated surface 312b using a vacuum deposition machine.

Specifically, a vapor deposition material in which a metal silicon powder and a silicon dioxide powder had been mixed was prepared, and vapor deposition was performed with the vacuum deposition machine such that a vapor-deposited layer having an element ratio O/Si of 1.5 (x = 1.5) was formed on the surface 312b. The thickness of the barrier layer 314 was 50 nm.

After that, two-component curable polyurethane-based adhesives A626/A50 (trade name; manufactured by Mitsui Fine Chemicals, Inc Co., Ltd.) were applied onto the barrier layer 314 using a dry lamination machine, and EMBLEM (registered trademark) ON (trade name; manufactured by Unitika Ltd.), which is a 15 µm-thick nylon film, was laminated thereon. As a result, an adhesive layer 316 and an intermediate layer 318 were formed.

A coating liquid for forming an adhesive layer 320 was prepared as described below using the particle dispersion liquid 11Aa.

A626 and A50, which are the above-described two-component curable polyurethane-based adhesives, were mixed such that the mass ratio became 8:1 and diluted with ethyl acetate to form an adhesive having a solid content concentration of 30% by mass. After that, the particle dispersion liquid 11 Aa was added to the adhesive, and the ratio of the solid content of the zinc oxide particles to the total mass of the solid content of the adhesive and the solid content of the zinc oxide particles was adjusted to be 1.5% by mass.

Hereinafter, for the sake of simplicity, "the ratio of the solid content of the polyvalent metal compound particles to the total mass of the solid content of the adhesive and the solid content of the polyvalent metal compound particles" will be referred to as "the particle amount in the coating liquid". In [Table 4], the ratio was expressed as "particle amount".

After that, the liquid mixture of the adhesive and the particle dispersion liquid 11 Aa was stirred with a stirring blade for 30 minutes. After that, the liquid mixture was filtered through a membrane filter having a pore size of 3 µm to obtain a coating liquid 11Aa that was used in Example 1. In the particle dispersion liquid 11Aa on which the dispersion treatment had been performed, since it was difficult for the zinc oxide particles to aggregate, the majority of the zinc oxide particles in the liquid mixture passed through the membrane filter.

After that, the coating liquid 11Aa was applied onto the intermediate layer 318 using a dry lamination machine and pasted to an 80 µm-thick polyolefin-based unstretched coextruded film as a sealant layer 330.

A laminated film 360 having a laminate structure shown in FIG. 10 was obtained as described above. That is, this laminated film 360 had the sealant layer 330 composed of a polyolefin-based unstretched coextruded film, the adhesive layer 320 containing zinc oxide particles, the intermediate layer 318 composed of a nylon film, the adhesive layer 316 not containing zinc oxide particles, the barrier layer 314 and the resin layer 312 in this order.

The particle amount of the zinc oxide particles in the adhesive layer 320 was, similar to the particle amount in the coating liquid, 1.5% by mass.

After that, the laminated films 360 of Example 1 were pasted together such that the sealant layers 330 faced to each other to produce a packaging bag 400A of Example 1, which was a three-side seal bag as shown in FIG. 13.

After that, an article to be packaged 410 was accommodated and sealed in the packaging bag 400A, thereby manufacturing a package 500A of Example 1.

As the article to be packaged 410, a cysteine aqueous solution containing 0.03% by mass of cysteine was used.

### [Examples 2 to 22]

As shown in [Table 4], in each of Examples 2 to 22, a laminated film 360, a packaging bag 400A, and a package 500A were produced in the same manner as in Example 1 except that a coating liquid shown in the column was used in place of the coating liquid 11Aa.

While the particle amount of the zinc oxide particles in the coating liquid 11Aa is 1.5% by mass, the particle amount of the zinc oxide particles in a coating liquid 11Aa+ is 9.5% by mass, the particle amount of the zinc oxide particles in a coating liquid 11Aa-is 0.8% by mass, and the particle amount of the zinc oxide particles in a coating liquid 11Aa++ is 11% by mass.

While the particle amount of the zinc oxide particles in a coating liquid 11 Ca is 3.0% by mass, the particle amount of the zinc oxide particles in a coating liquid 11Ca+ is 5.0% by mass.

While the particle amount of the zinc oxide particles in a coating liquid 14Ca is 3.0% by mass, the particle amount of the zinc oxide particles in a coating liquid 14Ca+ is 5.0% by mass.

While the particle amount of the zinc oxide particles in a coating liquid 100a is 1.5% by mass, the particle amount of the zinc oxide particles in a coating liquid 100a+ is 9.5% by mass.

### [Example 23]

In Example 23, a TOYOBO ESTER (registered trademark) film E5100 (trade name; manufactured by Toyobo Co., Ltd.), which is a biaxially-stretched polyethylene terephthalate film, was used as a resin layer 312. E5100 was 12 µm in thickness, 500 m in length, and 600 mm in width.

Two-component curable polyurethane-based adhesives A525/A52 (trade name; manufactured by Mitsui Fine Chemicals, Inc Co., Ltd.) were applied onto the resin layer 312 using a dry lamination machine, and EMBLEM (registered trademark) ON (trade name; manufactured by Unitika Ltd.), which is a 15 µm-thick nylon film, was laminated thereon as an intermediate layer 318. As a result, an adhesive layer 316 and an intermediate layer 318 were formed.

Subsequently, the adhesives were, again, applied onto the intermediate layer 318 in the same manner, and a 7 µm-thick aluminum film foil was laminated as an intermediate layer 318B. As a result, an adhesive layer 316B and the intermediate layer 318B were formed.

A coating liquid for forming an adhesive layer 320 was prepared as described below using the particle dispersion liquid 11Aa.

A525 and A52, which are the above-described two-component curable polyurethane-based adhesives, were mixed such that the mass ratio became 8:1 and diluted with ethyl acetate to form an adhesive having a solid content concentration of 30% by mass. After that, the particle dispersion liquid 11 Aa was added to the adhesive, and the ratio of the solid content of the zinc oxide particles to the total mass of the solid content of the adhesive and the solid content of the zinc oxide particles was adjusted to be 1.5% by mass.

Hereinafter, for the sake of simplicity, "the ratio of the solid content of the polyvalent metal compound particles to the total mass of the solid content of the adhesive and the solid content of the polyvalent metal compound particles" will be referred to as "the particle amount in the coating liquid". In [Table 4], the ratio was expressed as "particle amount".

After that, the liquid mixture of the adhesive and the particle dispersion liquid 11 Aa was stirred with a stirring blade for 30 minutes. After that, the liquid mixture was filtered through a membrane filter having a pore size of 3 µm to obtain a coating liquid 11 Aa that was used in Example 19. In the particle dispersion liquid 11 Aa on which the dispersion treatment had been performed, since it was difficult for the zinc oxide particles to aggregate, the majority of the zinc oxide particles in the liquid mixture passed through the membrane filter.

After that, the coating liquid 11Aa was applied onto the intermediate layer 318B using a dry lamination machine and pasted to an 80 µm-thick polyolefin-based unstretched coextruded film as a sealant layer 330.

A laminated film 370 having a laminate structure shown in FIG. 11 was obtained as described above. That is, this laminated film 370 had the sealant layer 330 composed of a polyolefin-based unstretched coextruded film, the adhesive layer 320 containing zinc oxide particles, the intermediate layer 318B composed of the aluminum foil, the adhesive layer 316B not containing zinc oxide particles, the intermediate layer 318 composed of a nylon film, the adhesive layer 316 not containing zinc oxide particles, and the resin layer 312 in this order.

The particle amount of the zinc oxide particles in the adhesive layer 320 was, similar to the particle amount in the coating liquid, 1.5% by mass.

After that, the laminated films 370 of Example 1 were pasted together such that the sealant layers 330 faced to each other to produce a packaging bag 400A of Example 1, which was a three-side seal bag as shown in FIG. 13.

After that, an article to be packaged 410 was accommodated and sealed in the packaging bag 400A, thereby manufacturing a package 500A of Example 1.

As the article to be packaged 410, a cysteine aqueous solution containing 0.03% by mass of cysteine was used.

### [Examples 24 to 31]

As shown in [Table 4], in each of Examples 24 to 31, a laminated film 370, a packaging bag 400A, and a package 500A were produced in the same manner as in Example 23 except that a coating liquid shown in the column was used in place of the coating liquid 11Aa.

### [Comparative Examples 1 to 14]

In Comparative Example 1, a laminated film 360, a packaging bag 400A, and a package 500A of Comparative Example 1 were produced in the same manner as in Example 1 except that the adhesive layer was formed using only the polyurethane-based adhesive without using the polyvalent metal particles and the polyvalent metal compound particles.

In Comparative Example 2, a laminated film 360, a packaging bag 400A, and a package 500A of Comparative Example 2 were produced in the same manner as in Example 9 except that a coating liquid 100bN (the particle amount of zinc oxide particles was 1.5% by mass) was used in place of the coating liquid 100a. The coating liquid 100bN was formed in the same manner as the coating liquid 100a except that the adhesive and the particle dispersion liquid 100b were stirred for 30 minutes and then not filtered with a membrane filter.

In each of Comparative Examples 3 to 14, a stirring treatment was performed and a laminated film 360, a packaging bag 400A, and a package 500A were produced in the same manner as in Comparative Example 2 except that a coating liquid shown in the column was used.

While the particle amount of the zinc oxide particles in the coating liquid 100bN is 1.5% by mass, the particle amount of the zinc oxide particles in a coating liquid 100bP is 3.0% by mass, and the particle amount of the zinc oxide particles in a coating liquid 100b+ is 9.5% by mass.

While the particle amount of the aluminum oxide particles in a coating liquid 200b is 1.5% by mass, the particle amount of the aluminum oxide particles in a coating liquid 200b+ is 9.5% by mass.

While the particle amount of the magnesium oxide particles in a coating liquid 300b is 1.5% by mass, the particle amount of the magnesium oxide particles in a coating liquid 300b+ is 9.5% by mass.

### [Comparative Examples 15 to 20]

In Comparative Example 15, a laminated film 370, a packaging bag 400A, and a package 500A of Comparative Example 16 were produced in the same manner as in Example 23 except that a coating liquid 11Ab (the particle amount of zinc oxide particles was 1.5% by mass) was used in place of the coating liquid 11Aa. The coating liquid 11Ab was formed in the same manner as the coating liquid 11Aa except that the adhesive and the particle dispersion liquid 11Ab were stirred for 30 minutes and then not filtered with a membrane filter.

In each of Comparative Examples 16 to 20, a stirring treatment was performed and a laminated film 370, a packaging bag 400A, and a package 500A were produced in the same manner as in Example 23 except that a coating liquid shown in the column was used.

### [Evaluation methods]

In order to evaluate each example and each comparative example, the OM image observation result, the hydrogen sulfide (H2S) concentration, and the lamination strength were measured.

For the OM image observation result, the adhesive layer containing the polyvalent metal compound particles was observed from the resin layer side using an optical microscope.

The magnification of the optical microscope was set to 500 times, and aggregates in a 500 µm × 500 µm range were observed. The number of aggregates of 9 µm or larger in the 500 µm × 500 µm range was entered into the column "Number of aggregates" in [Table 4]. The distance between the aggregates was entered into the column "Distance between aggregates" in [Table 4]. The distance between aggregates is the average value of 10 distances between aggregates randomly measured.

In a case where aluminum particles are contained in the adhesive layer, the barrier layer, or the like, the adhesive layer may be optically observed after the cross section of the laminated film was dissolved and removed with an alkaline solution.

For the hydrogen sulfide concentration measurement, the package accommodating the cysteine aqueous solution in each example and each comparative example was used as a test sample.

On the package, which was each test sample, a retort treatment was performed by heating the package at 120°C for 60 minutes. After the retort treatment, the package was stored in a refrigerator for 1 week. After that, the aqueous solution in each package was collected, and the hydrogen sulfide concentration was obtained by a methylene blue method (wavelength: 668 nm). Upon the calculation of the hydrogen sulfide concentration, a calibration curve prepared in advance was used. The measurement results of the hydrogen sulfide concentration are shown in [Table 4].

As test samples for the measurement of the lamination strength, the packaging bag before the retort treatment and the packaging bag after retort treatment in each example and each comparative example were used.

The packaging bag before the retort treatment was aged under conditions of at 45°C for 4 days. After that, the lamination strength between the nylon layer and the sealant layer was measured in accordance with JIS Z 0238:1998. Specifically, the lamination strength of each test sample was measured by a T-peel method (crosshead speed: 300 mm/min.) using a TENSILON universal material testing instrument (trade name; manufactured by A&D Company, Limited). The measurement results are shown in the column "Lamination strength, Before treatment" in [Table 4].

The lamination strength (N/15 mm width) was measured using the test sample that was the packaging bag after the retort treatment in the same manner as for the packaging bag before the retort treatment. The measurement results are shown in the column "Lamination strength, After treatment" in [Table 4]. Here, in [Table 4], (N/15 mm width) is simply expressed as (N).

### [Evaluation results]

As shown in [Table 4], in the laminated films of Examples 1 to 31, in the ranges of 500 µm × 500 µm in the adhesive layers 320, among the aggregates formed of the polyvalent metal particles or the polyvalent metal compound particles, the numbers of the aggregates of 9 µm or larger were 6 or more and 23 or less, and the hydrogen sulfide concentrations were 0.2 mg/L or less. In addition, the distances between aggregates were 103 µm or more and 200 µm or less.

In addition, in the laminated films of Examples 1 to 31, the lamination strengths after the retort treatment were 6 N/15 mm width or more.

In Examples 1 to 31, the numbers of aggregates are 6 to 23. In Comparative Examples 2 to 20, the numbers of aggregates are 80 to 156. In Comparative Examples 1 to 20, since the results were poor in both the retort odor adsorption effect and the lamination strength after the retort treatment, it was found that, when the number of aggregates is 30 or less, the lamination strength after the retort treatment is favorable while the retort odor adsorption effect is enhanced.

When Example 1 and Example 4 are compared, the number of aggregates in Example 4 where the dispersant was 40 parts by mass is 8, but the number of aggregates in Example 1 where the dispersant was 5 parts by mass is 14. When Example 5 and Example 6 are compared, the number of aggregates in Example 6 where the dispersant was 40 parts by mass is 9, but the number of aggregates in Example 5 where the dispersant was 5 parts by mass is 16. When Example 7 and Example 8 are compared, the number of aggregates in Example 8 where the dispersant was 40 parts by mass is 9, but the number of aggregates in Example 7 where the dispersant was 5 parts by mass is 16. When Example 12 and Example 15 are compared, the number of aggregates in Example 15 where the dispersant was 40 parts by mass is 6, but the number of aggregates in Example 12 where the dispersant was 5 parts by mass is 13.

That is, it is found that, when the amount of a dispersant is large, the number of aggregates becomes small, and dispersibility by which additive particles (polyvalent metal particles or polyvalent metal compound particles) are dispersed in an adhesive component improves.

In Examples 1 to 31, the distances between aggregates are 103 to 200 µm. In Comparative Examples 2 to 20, the distances between aggregates are 40 to 56 µm. In Comparative Examples 1 to 20, since the results were poor in both the retort odor adsorption effect and the lamination strength after the retort treatment, it was found that, when the distance between aggregates is 100 µm or more, the lamination strength after the retort treatment is favorable while the retort odor adsorption effect is enhanced.

When Example 1 and Example 4 are compared, the distance between aggregates in Example 4 where the dispersant was 40 parts by mass is 179 µm, but the distance between aggregates in Example 1 where the dispersant was 5 parts by mass is 133 µm. When Example 5 and Example 6 are compared, the distance between aggregates in Example 6 where the dispersant was 40 parts by mass is 163 µm, but the distance between aggregates in Example 5 where the dispersant was 5 parts by mass is 126 µm. When Example 7 and Example 8 are compared, the distance between aggregates in Example 8 where the dispersant was 40 parts by mass is 163 µm, but the distance between aggregates in Example 7 where the dispersant was 5 parts by mass is 126 µm. When Example 12 and Example 15 are compared, the distance between aggregates in Example 15 where the dispersant was 40 parts by mass is 200 µm, but the distance between aggregates in Example 12 where the dispersant was 5 parts by mass is 141 µm.

That is, it is found that, when the amount of a dispersant is large, the distance between aggregates becomes short, and dispersibility by which additive particles are dispersed in an adhesive component improves.

When Example 1, Example 19, and Example 20 are compared, the hydrogen sulfide concentration in Example 20 where the particle amount was 11% by mass is 0.01 mg/L, the hydrogen sulfide concentration in Example 1 where the particle amount was 1.5% by mass is 0.03 mg/L, and the hydrogen sulfide concentration in Example 19 where the particle amount was 0.8% by mass is 0.2 mg/L. When Example 2 and Example 3 are compared, the hydrogen sulfide concentration in Example 3 where the particle amount was 5.0% by mass is 0.01 mg/L, and the hydrogen sulfide concentration in Example 2 where the particle amount was 3.0% by mass is 0.02 mg/L. When Example 9 and Example 11 are compared, the hydrogen sulfide concentration in Example 11 where the particle amount was 9.5% by mass is 0.01 mg/L, and the hydrogen sulfide concentration in Example 9 where the particle amount was 1.5% by mass is 0.03 mg/L. When Example 13 and Example 14 are compared, the hydrogen sulfide concentration in Example 14 where the particle amount was 5.0% by mass is 0.01 mg/L, and the hydrogen sulfide concentration in Example 13 where the particle amount was 3.0% by mass is 0.02 mg/L.

That is, it is found that, when the particle amount of the additive particles is large, the retort odor adsorption effect is high.

When the particle amount is 0.5% by mass or more, the retort odor adsorption effect is sufficient, but it is considered that the particle amount is preferably 1.0% by mass or more.

When Example 1 and Example 20 are compared, the lamination strength after the retort treatment in Example 1 where the particle amount was 1.5% by mass was 8 N/15 mm width, and the lamination strength after the retort treatment in Example 20 where the particle amount was 11% by mass was 6 N/15 mm width.

That is, when the particle amount of the additive particles is large, the retort odor adsorption effect is high; however, when the particle amount of the additive particles exceeds 10% by mass, the lamination strength decreases, and thus it is considered that the particle amount of the additive particles is preferably 10% by mass or less.

When Example 12 and Example 21 are compared, the hydrogen sulfide concentration in Example 12 where the average particle diameter of the primary particles of the additive particles was 20 nm was 0.03 mg/L, but hydrogen sulfide concentration in Example 21 where the average particle diameter of the primary particles of the additive particles was 60 nm was 0.06 mg/L. When Example 15 and Example 22 are compared, the hydrogen sulfide concentration in Example 15 where the average particle diameter of the primary particles of the additive particles was 20 nm was 0.03 mg/L, but hydrogen sulfide concentration in Example 22 where the average particle diameter of the primary particles of the additive particles was 60 nm was 0.06 mg/L.

That is, the average particle diameter of the primary particles of the additive particles may be 60 nm; however, when the average particle diameter is too large, the retort odor adsorption effect is slightly poor, and thus it is considered that the average particle diameter is preferably 45 nm or less.

Example 1 and Example 23, Example 4 and Example 24, Example 11 and Example 25, Example 10 and Example 26, Example 12 and Example 27, Example 15 and Example 28, Example 16 and Example 29, Example 16 and Example 30, and Example 20 and Example 31 are each different from each other in that no aluminum film foil was included in the intermediate layer of the former, but an aluminum film foil was included in the intermediate layer of the latter. In any cases, regardless of the presence or absence of the aluminum film foil, the results are the same in terms of the retort odor adsorption effect and the lamination strength after the retort treatment.

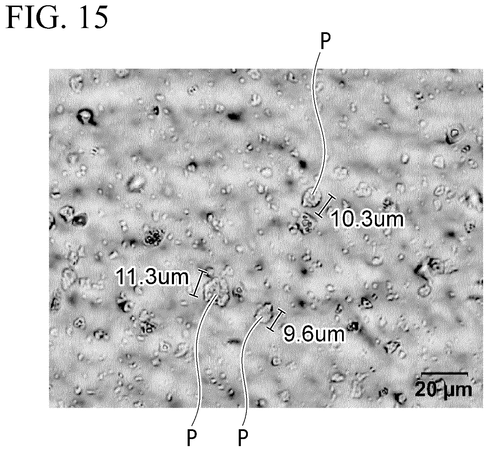

FIG. 15 is an example of an image of OM image observation in Comparative Example 3. In Comparative Example 3, as shown in FIG. 15, aggregates P are indicated by 9.6 µm, 10.3 µm, and 11.3 µm.

### [Comprehensive evaluations]

The retort odor (expressed as "Odor" in [Table 4]) was determined as favorable (expressed as "A" in [Table 4]) in a case where the hydrogen sulfide concentration was 0.04 mg/L or less, as slightly favorable (expressed as "B" in [Table 4]) in a case where the hydrogen sulfide concentration was more than 0.04 mg/L and 0.25 mg/L or less, and as poor (expressed as "C" in [Table 4]) in a case where the hydrogen sulfide concentration was more than 0.25 mg/L.

The lamination strength (expressed as "Strength" in [Table 4]) was determined as favorable (expressed as "A" in [Table 4]) in a case where the lamination strength after the retort treatment was 7 N/15 mm width or more, as slightly favorable (expressed as "B" in [Table 4]) in a case where the lamination strength after the retort treatment was 6 N/15 mm width or more and less than 7 N/15 mm width, and as poor (expressed as "C" in [Table 4]) in a case where the lamination strength after the retort treatment was less than 6 N/15 mm width.

In a case where both the retort odor and the lamination strength were evaluated as favorable (expressed as "A" in [Table 4]), the comprehensive evaluation was determined as favorable (expressed as "A" in [Table 4]). In a case where any one of the retort odor and the lamination strength was evaluated as favorable (expressed as "A" in [Table 4]), but the other was evaluated as slightly favorable (expressed as "B" in [Table 4]), the comprehensive evaluation was determined as slightly favorable (expressed as "B" in [Table 4]). In a case where both the retort odor and the lamination strength were evaluated as slightly favorable (expressed as "B" in [Table 4]) or any one of the retort odor and the lamination strength was evaluated as poor (expressed as "C" in [Table 4]), the comprehensive evaluation was determined as poor (expressed as "C" in [Table 4]).

As shown in [Table 4], the comprehensive evaluations of Examples 1 to 18 and 23 to 29 were A. The comprehensive evaluations of Examples 19 to 22, 30, and 31 were B.

In Comparative Example 1, since the odor was evaluated as C, the comprehensive evaluation was C.

In Comparative Examples 2 to 8 and 12 to 20, since the retort odors and the strengths were evaluated as B, the comprehensive evaluations were C.

In Comparative Examples 9 to 11, since the strengths were evaluated as C, the comprehensive evaluations were C.

Hereinafter, embodiments of the present invention will be described with reference to the accompanying drawings. In all the drawings, even in a case where embodiments are different, the same or corresponding member will be given the same reference numerals, and common description will be omitted. There are also cases where even the same or corresponding member as that in the embodiment is given a different reference numeral. In addition, unless particularly otherwise specified, positional relationships such as up, down, right, and left will be based on the positional relationships shown in the drawings.

Hereinafter, in a case where a plurality of suitable numerical ranges is exemplified under a specific numerical range, unless particularly otherwise specified, the combination of the upper limit value and the lower limit value is not limited to an exemplified combination as long as the combination is included within the maximum preferable numerical range. For example, in a case where, as a preferable range of the amount X, "x1 or more and x4 or less" and "x2 or more and x3 or less" are exemplified with an assumption of x1 < x2 < x3 < x4, for example, each numerical range of "more than x1 and less than x4", "x2 or more and x4 or less", "x3 or more and x4 or less" and the like are also a preferable range.

### [Eleventh Embodiment]

A laminated film according to an eleventh embodiment of the present invention will be described.

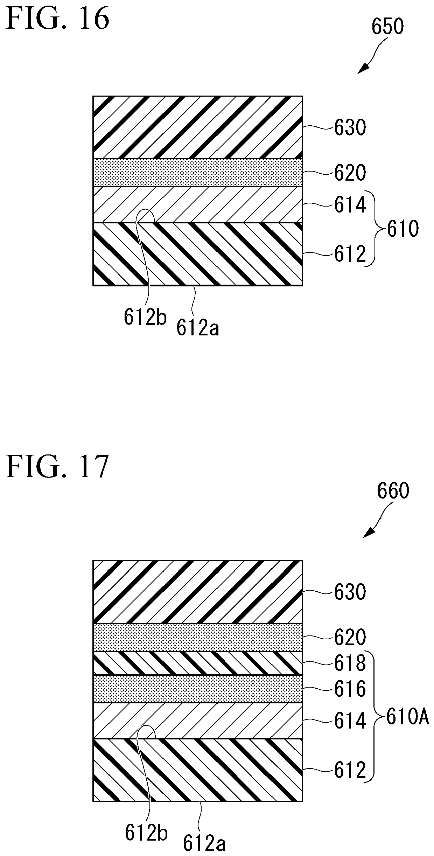

FIG. 16 is a schematic cross-sectional view showing an example of the laminated film according to the eleventh embodiment of the present invention.

A laminated film 50 of the present embodiment shown in FIG. 16 includes a base material film 610, an adhesive layer 620, and a sealant layer 630. The base material film 610, the adhesive layer 620, and the sealant layer 630 in the laminated film 50 are laminated in this order. The base material film 610, the adhesive layer 620, and the sealant layer 630 each have a light transmission property of transmitting visible light. Therefore, the laminated film 50 has a light transmission portion through which visible light is transmitted in the thickness direction (vertical direction in the drawing). The light transmission portion may be provided in at least a part of the laminated film 50. In the example shown in FIG. 16, the light transmission portion is the entire laminated film 50.

In the light transmission portion of the laminated film 50, the haze measured in accordance with a haze measurement method specified in JIS-K-7136 is 30% or less and more preferably 25% or less. Hereinafter, the haze that is specified in JIS-K-7136 will be simply referred to as "haze".

The base material film 610 has a resin layer 612 and a barrier layer 614.

The resin layer 612 is composed of, for example, a resin film.

As the resin film, polyester films formed of polyethylene terephthalate (PET), polyethylene naphthalate (PEN), or the like; polyolefin films formed of polyethylene, polypropylene, or the like; polystyrene films; polyamide films formed of a polyamide such as 66-nylon; polycarbonate films; polyacrylonitrile films; polyimide films; engineering plastic films formed of a different engineering plastic; and the like are exemplary examples.

As the resin film that configures the resin layer 612, one of the above-described resin films may be used singly or two or more thereof may be used in combination.

For example, the resin layer 612 may be configured by laminating a plurality of resin films of the same kind.

The resin film may be any of a stretched film or an unstretched film. The resin film may be a multilayer film in which at least one stretched film and at least one unstretched film are laminated.

The resin layer 612 may have a film randomly stretched biaxially. In this case, it is possible to improve the mechanical strength and the dimensional stability.

The resin layer 612 more preferably has one or both of a polyester film and a biaxially-stretched polypropylene film from the viewpoint of satisfying, particularly, both the strength and the flexibility.

The resin layer 612 more preferably has one or both of a polypropylene film and a polyethylene terephthalate film from the viewpoint of, particularly, improving the strength and reducing the cost.

The resin layer 612 more preferably has a nylon film from the viewpoint of improving, particularly, the strength. Nylon films have excellent flexibility and thus do not easily allow the generation of pinholes. Therefore, in a case where a package is formed with a packaging bag in which the laminated film 650 is used, it is possible to suppress the generation of pinholes in the laminated film 650 and the consequent deterioration of an article to be packaged. Such an action is particularly useful in a case where the article to be packaged is a food product.

The thickness of the resin layer 612 can be set to a thickness suitable for an application or a required characteristic and is not particularly limited. The thickness of the resin layer 612 may be, for example, 3 µm or more and 100 µm or less and is more preferably 6 µm or more and 50 µm or less.

The resin layer 612 may contain an appropriate additive as long as the haze of the light transmission portion of the laminated film 650 can be made to be 30% or less, more preferably 25% or less. As the additive, at least one selected from a filler, an antistatic agent, a plasticizer, a lubricant, an antioxidant, and the like is an exemplary example.

A surface 612a of the resin layer 612 is a surface that forms the outer surface of the laminated film 650 at the time of forming a packaging bag.

A surface 612b of the resin layer 612 is a surface opposite to the surface 612a in the thickness direction and is a joining surface with the barrier layer 614 to be described below.

An appropriate surface treatment may be performed on the laminated film 650 as long as the haze of the light transmission portion of the laminated film 650 can be made to be 30% or less. For example, an appropriate surface treatment that improves adhesion to the barrier layer 614 may be performed on the surface 612b. As an example of the surface treatment, for example, at least one treatment selected from a chemical treatment, a solvent treatment, a corona treatment, a plasma treatment, and an ozone treatment is an exemplary example.

The barrier layer 614 is a layer having a barrier property against at least oxygen and water vapor. The barrier layer 614 is laminated on the surface 612b of the resin layer 612.

The number of layers of the barrier layer 614 is not particularly limited as long as it includes at least one layer having a barrier property.

As an example of a case where the barrier layer 614 is composed of a single layer, a vapor-deposited layer composed of an inorganic substance, a barrier film composed of a resin having a barrier property, and the like are exemplary examples.

As an example of a case where the barrier layer 614 is composed of multiple layers, a barrier film obtained by coating the surface of a resin film or the like with an inorganic substance having a barrier property is an exemplary example.

As the inorganic substance that can be used for the barrier layer 614, silica, aluminum, silicon, and the like are exemplary examples. In a case where the barrier layer 614 is formed of a single layer, such an inorganic substance may be vapor-deposited on the surface of the resin layer 612.

As the barrier film that can be used for the barrier layer 614, a nylon-based barrier film, an ethylene vinyl alcohol-based barrier film, and the like are exemplary examples. In a case where the barrier layer 614 is formed of a single layer, such a barrier film may be laminated on the resin layer 612 by extrusion lamination, dry lamination, wet coating, or the like.

For example, in a case where a barrier film coated with an inorganic substance is used as the barrier layer 614, silica, aluminum, silicon, or the like may be used as the inorganic substance. In this case, the barrier film may be laminated on the resin layer 612 by dry lamination or the like.

As the barrier layer 614, one film exemplified above may be used singly or two or more films may be used in combination.

The layer thickness of the barrier layer 614 is not particularly limited. For example, in a case where the barrier layer 614 is composed of a vapor-deposited layer, the layer thickness may be 5 nm or more and 100 nm or less.

The barrier layer 614 can be formed by, for example, a vacuum deposition method, a sputtering method, an ion plating method, a plasma chemical vapor deposition method (CVD), a dry lamination method, an extrusion lamination method, or the like.

The adhesive layer 620 is a layer that causes the barrier layer 614 and the sealant layer 630 to be described below to adhere to each other.

The adhesive layer 620 contains an adhesive component and polyvalent metal particles or polyvalent metal compound particles mixed with the adhesive component.

As the adhesive component, cured products of an urethane-based adhesive, a polyester-based adhesive, a polyamide-based adhesive, an epoxy-based adhesive, an isocyanate-based adhesive, and the like are exemplary examples.

The adhesive component in the adhesive layer 620 is more preferably formed of a two-component curable adhesive in that it is easy to suppress the alteration of the polyvalent metal particles or polyvalent metal compound particles to be described below.

There is a tendency that such an alteration suppression effect appears more significantly in a case where a two-component curable urethane-based adhesive is used. Therefore, among two-component curable adhesives, a urethane-based adhesive is particularly preferably used.

The polyvalent metal particles are particles formed of a metal that generates a polyvalent ion (hereinafter, polyvalent metal). The polyvalent metal compound particles are particles formed of a compound of a polyvalent metal.

The polyvalent metal particles or the polyvalent metal compound particles are used for the purpose of trapping a substance that causes a retort odor (hereinafter, referred to as an odor-causing substance in some cases), for example, a sulfur compound or the like, in the adhesive layer 620. As the sulfur compound that acts as an odor-causing substance, hydrogen sulfide, mercaptans, sulfur dioxide, sulfur trioxide, and the like are exemplary examples.

The principle of the fact that odor-causing substances can be trapped with the polyvalent metal particles and the polyvalent metal compound particles is not always theoretically elucidated, but it is possible to experimentally confirm that the particles are effective for reducing odor-causing substances.

The polyvalent metal particles and the polyvalent metal compound particles that are mixed with the adhesive layer 620 are not particularly limited as long as the particles have an action of trapping a compound that causes a retort odor and can be stably present in the adhesive component of the adhesive layer 620.

As the polyvalent metal particles, for example, particles of an alkaline earth metal such as beryllium, magnesium, or calcium; particles of a transition metal such as titanium, zirconium, chromium, manganese, iron, cobalt, nickel, copper, or zinc; particles of aluminum or the like may be used.

An oxide film may be formed on the surfaces of the polyvalent metal particles or the surfaces thereof may be coated so as to make it easy for the particles to be stably present in the adhesive layer 620.

As the polyvalent metal compound particles, particles of an oxide of a polyvalent metal, a hydroxide, a carbonate, an organic acid salt (for example, acetate), an inorganic acid salt, or the like are an exemplary example. As the polyvalent metal compound particles, for example, particles of an ammonium complex of a polyvalent metal oxide, a secondary to quaternary amine complex of a polyvalent metal oxide, a carbonate or organic acid salt thereof may be used.

It is more preferable to use the polyvalent metal compound particles, which makes it easy for the particles to be stably present in the adhesive layer 620.

As the polyvalent metal compound particles, particles of a zinc compound, an aluminum compound, a magnesium compound, or the like are more preferably used from the viewpoint of stability in the adhesive component and easiness in manufacturing. From the viewpoints of easiness in handling and cost, particles of zinc oxide, aluminum oxide, magnesium oxide, or the like are particularly preferably used as the polyvalent metal compound particles.

Hereinafter, for the sake of simplicity, the polyvalent metal particles or the polyvalent metal compound particles that are mixed with the adhesive component will be referred to as "additive particles" in some cases.

In the adhesive layer 620, one or more kinds of particles can be used as the additive particles that are mixed with the adhesive component.

The content of the additive particles in the adhesive layer 620 is not particularly limited as long as the haze of the light transmission portion in the laminated film 650 is 30% or less, more preferably 25% or less.

As the content of the additive particles increases, the amount of an odor-causing substance trapped increases, which makes it easy to suppress a retort odor. On the other hand, when the content of the additive particles increases, there is a possibility that the lamination strength of the adhesive layer 620 may be likely to decrease or the transparency of the laminated film 650 may deteriorate.

For example, from the viewpoint of the transparency of the laminated film, the content of the additive particles in the adhesive layer 620 is preferably 0.5% by mass or more and 10% by mass or less.

In addition, the content of the additive particles in the adhesive layer 620 is more preferably 1% by mass or more and 10% by mass or less and still more preferably 1.5% by mass or more and 5% by mass or less in that it is easy to satisfy both the lamination strength of the adhesive layer 620 and the transparency of the laminated film and the retort odor-reducing action.

When the content of the additive particles is less than 1% by mass, there is a possibility that the effect of suppressing a retort odor may be too weak.

When the content of the additive particles exceeds 10% by mass, there is a possibility that the lamination strength of the adhesive layer 620 may become too low or the transparency of the laminated film may become too low.

In the distribution of the additive particles in the adhesive layer 620, a bias is more preferably small. For example, when the distribution of the additive particles concentrates in a specific portion due to aggregation or the like, the transparency of the laminated film 650 is likely to be uneven. The bias of the distribution of the additive particles in the adhesive layer 620 also causes an increase in the haze or a decrease in the lamination strength.

Particularly, in the adhesive layer 620, when large aggregates of the additive particles are formed, the additive particles form an uneven granular shape and are easily visible. Particularly, in a case where the additive particles having an uneven granular shape are arranged close to each other, the additive particles form uneven streaks and are more easily visible. For example, in a case where the laminated film 650 is used for a packaging bag so as to make an article to be packaged in the packaging bag visible from the outside through the light transmission portion, it is preferable that the uneven granular shape or the uneven streaks are not visible.

For example, from the viewpoint of improving the transparency of the light transmission portion of the laminated film 650 and the lamination strength of the adhesive layer 620, the maximum diameter of aggregates formed of the additive particles when viewed in a direction orthogonal to the thickness direction of the adhesive layer 620 is more preferably 1.0 µm or less and still more preferably 500 nm or less.

Here, "aggregate" is used in a broad sense and means an apparent mass when observed with a microscope or the like in the direction orthogonal to the thickness direction. Whether the apparent mass has been formed by the aggregation phenomenon of the additive particles or is shown in a massive shape since the distribution density in a certain region when viewed in the direction orthogonal to the thickness direction is high is not particularly differentiated.

For example, the maximum diameter of aggregates can be measured using a scanning electron microscope (cross-sectional SEM). Specifically, the maximum diameter is determined from the maximum diameter of aggregates that are observed when a rectangular region of 50 µm in the width direction is captured with a magnification of the cross-sectional SEM set to 10000 times.

The measurement sites of the sizes of aggregates may be at 500 m intervals in the roll direction (longitudinal direction) of the laminated film 650 and at 200 mm intervals in the width direction. For example, in the case of a laminated film that is 3000 m in length and 600 mm in width, a total of 21 sites (6 sites every 500 m in the longitudinal direction × 3 sites at the center in the width direction and portions 200 mm apart from the center) may be measured.

However, in a case where the maximum diameter of aggregate is measured in a packaging bag in which the laminated film 650 is used, the sizes may be measured at appropriate positions within the range of the light transmission portion in the packaging bag.

Regarding the distribution of the aggregates of the additive particles, the number of aggregates as large as 10% or more and 200% or less of the average particle diameter present in the rectangular region of 50 µm in the width direction is preferably 50 or more. In this case, uneven streaks become invisible, and it is possible to improve the visibility of an article to be packaged when the laminated film 650 is used as a packaging bag.

For example, it is considered that the additive particles trap an odor-causing substance that permeates the adhesive layer 620 by adsorption.

In order to make it possible for the additive particles to efficiently trap an odor-causing substance, the specific surface area of the additive particles is more preferably as large as possible. Here, the specific surface area represents the surface area per unit mass of the additive particles. For example, the specific surface area of the additive particles may be 1 m²/g or more and is more preferably 5 m²/g or more.

When the specific surface area increases, the particle diameters of the additive particles become too small, and the additive particles are likely to, for example, scatter in the environment, and thus caution is required in handling the additive particles. From the viewpoint of making it easy to handle the additive particles in a manufacturing step, the specific surface area of the additive particles may be 100 m²/g or less and more preferably 50 m²/g.

When the average particle diameter of the additive particles as primary particles is too large, aggregates exceeding 1.0 µm are likely to be formed, and thus the average particle diameter of the additive particles is more preferably as small as possible. However, when the average particle diameter of the additive particles is small to some extent, the maximum diameter of the aggregates changes depending on the mixing method in the manufacturing step, and the correlation between the magnitude of the average particle diameter and the maximum diameter of the aggregates becomes weak.

Hereinafter, unless particularly otherwise specified, the average particle diameter of the additive particles as primary particles will be simply referred to as the average particle diameter of the additive particles. The definition of the average particle diameter is calculated from the following general formula by obtaining the area circle equivalent diameters from an image where the powder is enlarged to a magnification of 50,000 to 200,000 times with a transmission electron microscope (TEM). Formula: Average particle diameter = sum of area equivalent circle diameters of measured particles/number of measured particles (at least 100).

The average particle diameter of the additive particles is not particularly limited as long as the haze is 30% or less and more preferably 25% or less, but is, for example, preferably 10 nm or more and 50 nm or less and more preferably 20 nm or more and 45 nm or less.

For example, when the average particle diameter of the additive particles is less than 10 nm, there is a possibility that the manufacturing cost may increase or it may become difficult to handle the additive particles in the manufacturing step.

For example, when the average particle diameter of the additive particles exceeds 50 nm, the specific surface area becomes small, and thus there is a possibility that the effect of trapping an odor-causing substance may decrease.

In order to reduce the sizes of the aggregates of the additive particles in the adhesive component, the adhesive layer 620 may contain 1 part by mass or more and 50 parts by mass or less of a dispersant with respect to 100 parts by mass of the additive particles.

The kind of the dispersant is not particularly limited as long as the dispersant is capable of dispersing the additive particles in a liquid adhesive component for forming the adhesive component.

As the dispersant, (poly)ester salts, polyether phosphates, alkyl sulfate ester salts, alkylbenzenesulfonates, alkylnaphthalenesulfonates, alkylsulfosuccinates, alkyldiphenylether disulfonates, alkyl phosphates, aromatic phosphates, polyoxyethylene alkyl ethers, polyoxyethylene alkylphenol ethers, polyoxyethylene alkyl esters, alkylallyl sulfate ester salts, polyoxyethylene alkyl phosphates, sorbitan alkyl esters, glycerin fatty acid esters, sorbitan fatty acid esters, sucrose fatty acid esters, polyethylene glycol fatty acid esters, polyoxyethylene sorbitan alkyl esters, polyoxyethylene alkylallyl ethers, polyoxyethylene derivatives, polyoxyethylene sorbitol fatty acid esters, polyoxy fatty acid esters, polyoxyethylene alkylamine, vinyl chloride-vinyl acetate copolymers, and the like are exemplary examples. These dispersants may be used singly or two or more dispersants may be mixed and used.

The lamination strength of the adhesive layer 620 is measured in accordance with JIS Z 0238: 1998 by a T-peel method (crosshead speed: 300 mm/min.) using a TENSILON tensile tester.

The lamination strength of the adhesive layer 620 is, for example, preferably 7 N/15 mm width or more after a retort.

The thickness of the adhesive layer 620 is not particularly limited as long as the lamination strength is favorable in the case of forming the laminated film 650 into a packaging bag and the effect of reducing an odor-causing substance is favorable.

The thickness of the adhesive layer 620 may be, for example, 0.01 µm or more and 5 µm or less and is more preferably 0.03 µm or more and 3 µm or less.

When the thickness of the adhesive layer 620 is less than 0.01 µm, there is a possibility that the lamination strength may decrease and the amount of an odor-causing substance trapped may be too small.

When the thickness of the adhesive layer 620 exceeds 5 µm, there is a possibility that the laminated film 650 may become too thick.

The sealant layer 630 is a layer for pasting the laminated film 650 to another laminated film by thermal fusion. The sealant layer 630 is not particularly limited as long as the sealant layer melts by heat and is capable of fusing with a sealant layer in another laminated film.

As the material of the sealant layer 630, for example, resins such as low-density polyethylene, medium-density polyethylene, high-density polyethylene, linear low-density polyethylene, polypropylene, ethylene-vinyl acetate copolymer, an ionomer resin, an ethylene-acrylic acid copolymer, an ethylene-methyl acrylate copolymer, an ethylene-methacrylic acid copolymer, and an ethylene-propylene copolymer are exemplary examples. As the resin that is used for the sealant layer 630, any one of the exemplified resins may be used singly or two or more resins may be used in combination.

For example, in the case of forming a package with the laminated film 650, the package being subjected to boiling sterilization or retort sterilization, the sealant layer 630 more preferably contains an unstretched polypropylene resin from the viewpoint of maintaining sufficient adhesion.

The sealant layer 630 may be laminated on the adhesive layer 620 while forming a film of a resin composition by extrusion lamination or a film-like sheet may be pasted to the adhesive layer 620.

The thickness of the sealant layer 630 may be, for example, 10 µm or more and 150 µm or less and is more preferably 30 µm or more and 80 µm or less.

Next, an example of a method for manufacturing the laminated film 650 will be described.

First, the base material film 610 having the barrier layer 614 laminated on a resin film that forms the resin layer 612 is prepared.

After that, the adhesive layer 620 and the sealant layer 630 are laminated in this order on the barrier layer 614 of the base material film 610.

As a lamination method, for example, dry lamination may be used.

For example, a coating liquid with which the additive particles have been mixed is prepared as an adhesive that forms the adhesive component of the adhesive layer 620 after curing, the coating liquid is applied to and dried on the surface of the barrier layer 614 of the base material film 610 with a dry lamination machine, and a resin film that forms the sealant layer 630 and the base material film 610 are thermally pressed using hot rolls.

A method for applying the coating liquid is not particularly limited. For example, the coating liquid can be applied using a coater such as a roll coater, a reverse roll coater, a gravure coater, a micro gravure coater, a knife coater, a bar coater, a wire bar coater, a die coater, a dip coater, or a spin coater.

As a lamination method, a non-solvent laminator can be used, and, as the adhesive component of the adhesive layer 620, a coating liquid with which a non-solvent adhesive additive particles have been mixed can also be used.

At the time of preparing the coating liquid, it is more preferable to mix the additive particles with the adhesive that forms the adhesive component and disperse the additive particles in the coating liquid so that the sizes of aggregates of the additive particles become 1.0 µm or less.

In order to decrease the sizes of the aggregates of the additive particles, it is more preferable to add a dispersant to the coating liquid. The dispersant may be directly added to the adhesive together with the additive particles, but it is more preferable to disperse the additive particles and the dispersant in a solvent to form, for example, a particle dispersion liquid of NV 30% and then mix the particle dispersion liquid and the adhesive to prepare the coating liquid. In this case, the dispersion of the additive particles in the coating liquid is promoted.

On the additive particles, it is more preferable to perform a physical fibrillation treatment for refining the additive particles in a state where the additive particles, the dispersant, and the solvent have been mixed together. This promotes the refinement and dispersion of the additive particles in the coating liquid.

As the physical fibrillation treatment, mechanical treatments such as a highpressure homogenizer, an ultrahigh-pressure homogenizer, a bead mill, a roll mill, a cutter mill, a planetary mill, a jet mill, an attritor, a grinder, a juicer mixer, a homomixer, an ultrasonic homogenizer, a NanoGenizer, and aqueous counter collision are exemplary examples, but particularly preferable is a bead mill in which beads are mixed with the particle dispersion liquid containing the additive particles and the dispersant dispersed in a solvent and the additive particles are dispersed with the beads having the energy of a centrifugal force that is generated by the high-speed rotation of a stirrer.

When a dispersion treatment for dispersing the refined additive particles in the coating liquid is performed using one or more means described above (bead mill in the present embodiment), it is possible to suppress the growth of the aggregates in the coating liquid.

The dispersion treatment also suppresses the formation of a precipitate in the coating liquid and is thus capable of efficiently dispersing the additive particles in the coating liquid.

An increase in the haze is suppressed by efficiently dispersing the additive particles in the coating liquid and suppressing the growth of the aggregates in the coating liquid. The ratio of the haze in a case where the additive particles are contained to the haze in a case where the additive particles are not contained is preferably 1.10 or less and more preferably 1.00 or less. When the ratio of the haze in a case where the additive particles are contained to the haze in a case where the additive particles are not contained is set to 1.10 or less, it is possible to suppress the deterioration of the transparency of the laminated film 650. In addition, it is possible to suppress uneven streaks by dispersing the additive particles and suppressing the growth of the aggregates.

Once the coating liquid is prepared, it is more preferable to perform a filtration treatment before application. For example, when the pore size of a filtration filter is set to 1.0 µm or less, it is possible to leave aggregates as large as 1.0 µm or less after the filtration.

Since the laminated film 650 includes the barrier layer 614 having a barrier property against oxygen and water vapor, the permeation of oxygen and water vapor that have passed through the resin layer 612 into the adhesive layer 620 and the sealant layer 630 is suppressed. Therefore, it is possible to suppress the intrusion of oxygen, water vapor, or the like into packaging bags. This makes it possible to suppress deterioration of an article to be packaged attributed to at least one of oxygen and water vapor in a package accommodating the article to be packaged in a packaging bag formed of the laminated film 650. Deterioration of the polyvalent metal particles or the polyvalent metal compound particles attributed to at least one of oxygen and water vapor permeating from the outside can also be suppressed in the same manner.

The laminated film 650 has the adhesive layer 620 containing the polyvalent metal particles or the polyvalent metal compound particles between the base material film 610 and the sealant layer 630 and is thus capable of adsorbing an odor-causing substance such as a sulfur compound that has permeated into the adhesive layer 620 through the sealant layer 630. Therefore, in a package accommodating an article to be packaged in a packaging bag formed of the laminated film 650, an odor-causing substance such as a sulfur compound derived from the article to be packaged that has permeated into the adhesive layer 620 is trapped with the polyvalent metal particles or the polyvalent metal compound particles. As a result, it is possible to reduce a retort odor in the article to be packaged.

Since the polyvalent metal particles or the polyvalent metal compound particles are contained so that the haze in the light transmission portion of the laminated film 650 becomes 30% or less, the transparency is high, and it is possible to realize improvement in the visibility of articles to be packaged through the laminated film 650 and suppression of uneven streaks.

When the polyvalent metal particles or the polyvalent metal compound particles are contained so that the haze becomes 30% or less, more preferably 25% or less, a decrease in the lamination strength of the adhesive layer 620 is suppressed. Since the polyvalent metal particles or the polyvalent metal compound particles are mixed with the adhesive component of the adhesive layer 620, the polyvalent metal particles or the polyvalent metal compound particles react with a component such as acetic acid or amino acid contained in the article to be packaged to suppress alteration. Therefore, the effect of reducing an odor-causing substance and the lamination strength are less likely to decrease over time.

As described above, according to the laminated film 650 of the present embodiment, it is possible to provide a laminated film through which articles to be packaged are easily visible. Furthermore, according to the laminated film 650 of the present embodiment, it is possible to provide a laminated film capable of reducing a retort odor and having a favorable lamination strength. In addition, according to the laminated film 650 of the present embodiment, the physical fibrillation treatment with the bead mill makes it possible to efficiently disperse the additive particles in the coating liquid and suppress the growth of the aggregates in the coating liquid to suppress an increase in the haze and makes it possible to suppress the deterioration of the transparency of the laminated film 650 and uneven streaks.

### [Twelfth Embodiment]

A laminated film according to a twelfth embodiment of the present invention will be described.

FIG. 17 is a schematic cross-sectional view showing an example of the laminated film according to the twelfth embodiment of the present invention.

A laminated film 660 of the present embodiment shown in FIG. 17 includes a base material film610A in place of the base material film 610 in the laminated film 650 of the eleventh embodiment. The laminated film 660 may be provided with a light transmission portion in at least a part; however, in an example shown in FIG. 17, the laminated film 660 is wholly a light transmission portion.

The base material film 610A includes an adhesive layer 616 and an intermediate layer 618 in this order between the barrier layer 614 and the adhesive layer 620. Hereinafter, differences from the eleventh embodiment will be mainly described.

The adhesive layer 616 is a layer that causes the barrier layer 614 and the intermediate layer 618 to adhere to each other.

For the adhesive layer 616, one or more materials of the materials exemplified as the adhesive component in the adhesive layer 620 are used. The adhesive layer 616 may be formed of the same material as the adhesive layer 620 in the laminated film 660 or may be formed of a different material.

The adhesive layer 616 may not contain additive particles or may contain additive particles.

In a case where the adhesive layer 616 contains additive particles, the laminated film 660 is an example of a case where there are a plurality of adhesive layers containing additive particles.

In a case where the adhesive layer 616 contains additive particles, the kind, content, specific surface area, layer thickness, and average particle diameter of the additive particles in the adhesive layer 616 are not particularly limited as long as the haze in the light transmission portion of the laminated film 660 is 30% or less, more preferably 25% or less.

For example, the kind, content, specific surface area, layer thickness, and average particle diameter of the additive particles in the adhesive layer 616 are more preferably the same kind and suitable numerical ranges as those exemplified for the adhesive layer 620 in the laminated film 650.

This is also true for the kind, content, specific surface area, layer thickness, and average particle diameter of the adhesive layer 620 in the laminated film 660.

In a case where the adhesive layer 616 contains additive particles, the maximum diameter and distribution of the aggregates of the additive particles in the laminated film 660 are not particularly limited as long as the haze in the light transmission portion of the laminated film 660 is 30% or less, more preferably 25% or less.

The maximum diameter of the aggregates of the additive particles in the laminated film 660 in each of the adhesive layers 620 and 616 in the laminated film 660 is more preferably within the preferable range of the adhesive layer 620 in the laminated film 650.

The distribution of the aggregates of the additive particles in the laminated film 660 in each of the adhesive layers 620 and 616 in the laminated film 660 is more preferably within the preferable range of the adhesive layer 620 in the laminated film 650.

The intermediate layer 618 is a resin layer disposed between the barrier layer 614 and the sealant layer 630. The intermediate layer 618 adheres to each of the barrier layer 614 through the adhesive layer 616 and the sealant layer 630 through the adhesive layer 620.

The material of the intermediate layer 618 is not particularly limited as long as the intermediate layer is a light-transmitting resin layer capable of providing a haze of 30% or less, more preferably 25% or less, to the laminated film 660.

The kind of the intermediate layer 618 can be selected as appropriate depending on the application of the laminated film 660. For example, when a resin film that is excellent in terms of at least one of an oxygen barrier property, a water vapor barrier property, a mechanical strength, bending resistance, puncture resistance, impact resistance, abrasion resistance, cold resistance, heat resistance, chemical resistance, and light-shielding resistance is selected, the characteristic improves in the laminated film 660.

For example, as a suitable material of the intermediate layer 618, a film of nylon, polyethylene terephthalate, polyamide, polyethylene, polypropylene, polyvinyl chloride, polycarbonate, polyvinyl alcohol, an ethylene-propylene copolymer, an ethylene-vinyl acetate copolymer saponified product, or the like is an exemplary example.

For example, when nylon is used as the intermediate layer 618, the flexibility improves, and it is possible to suppress the generation of pinholes even in a case where a large external force is applied. Therefore, in a case where a package is formed with a packaging bag in which the laminated film 650 is used, it is possible to suppress the generation of pinholes in the laminated film 660 and the consequent deterioration of an article to be packaged. Such an action is particularly useful in a case where the article to be packaged is a food product.

The laminated film 660 of the present embodiment can be manufactured in the same manner as the laminated film 650 except that the base material film 610A having the adhesive layer 616 and the intermediate layer 618 laminated on the barrier layer 614 is formed in place of the base material film 610.

Particularly, in a case where the adhesive layer 616 contains the additive particles, the adhesive layer 616 can be manufactured in the same manner as the adhesive layer 620 in the eleventh embodiment.

The laminated film 660 of the present embodiment has the same configuration as the laminated film 650 of the eleventh embodiment except that the adhesive layer 616 and the intermediate layer 618 are laminated between the barrier layer 614 and the adhesive layer 620, and thus it is possible to provide a laminated film capable of reducing a retort odor, having a favorable lamination strength, furthermore, suppressing deterioration of the transparency by suppressing an increase in the haze, and easily allowing articles to be packaged to be visible.

Particularly, since the laminated film 660 includes the intermediate layer 618, it is possible to improve the characteristics of the laminated film 660 depending on the characteristics of the intermediate layer 618.

Furthermore, in a case where the adhesive layer 616 contains polyvalent metal particles or polyvalent metal compound particles, since two layers trap an odor-causing substance, it is possible to improve the effect of reducing an odor-causing substance.

### [Thirteenth Embodiment]

A packaging bag and a package according to a thirteenth embodiment of the present invention will be described.

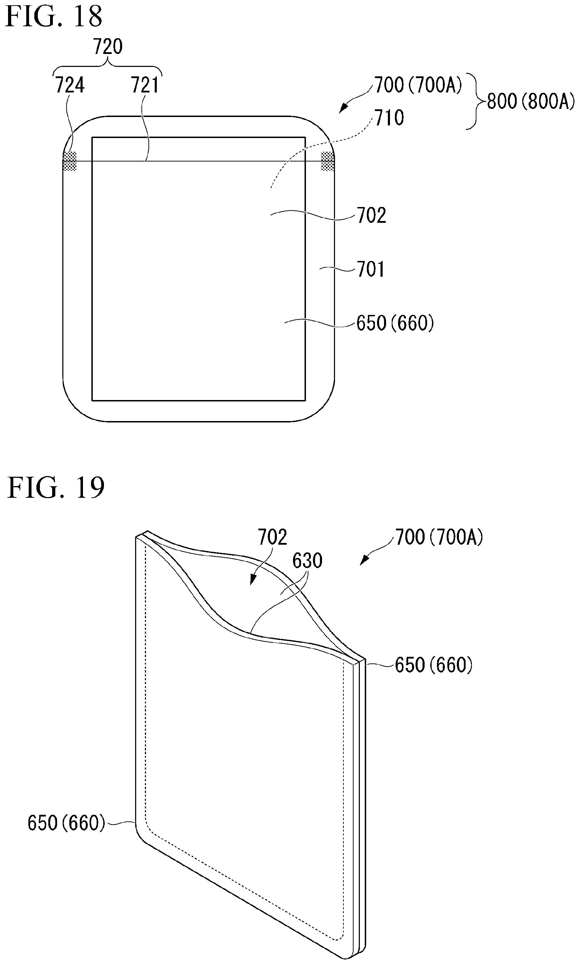

FIG. 18 is a schematic front view showing an example of the packaging bag and the package according to the thirteenth embodiment of the present invention.

As shown in FIG. 18, a package 800 of the present embodiment includes a packaging bag 700 of the present embodiment and an article to be packaged 710 accommodated in the packaging bag 700.

The packaging bag 700 includes a seal portion 701 formed by pasting the peripheral edges of a pair of the laminated films 650 cut into a substantially rectangular shape together and an accommodation portion 702 formed between the pair of laminated films 650 surrounded by the seal portion 701. That is, in the packaging bag 700, the side end portions, the lower end portion, and the upper end portion are sealed with the seal portion 701.

The accommodation portion 702 forms an accommodation space sandwiched between the pair of laminated films 650 and surrounded by the seal portion 701 and accommodates, for example, the article to be packaged 710 such as food.

For example, the package 800 may be a retort food product obtained by heat-sterilizing the article to be packaged 710 composed of food and sealing the article to be packaged with the packaging bag 700.

The pair of laminated films 650 are formed by cutting the laminated films 650 of the eleventh embodiment to appropriate sizes.

The pair of laminated films 650 are overlaid so that the sealant layers 630 face each other. Each sealant layer 630 is thermally fused to the outer peripheral portion of the pair of laminated films 650. Therefore, the seal portion 701 is formed.

The packaging bag 700 includes an opening portion 720. For example, the opening portion 720 has a pair of easy-to-open processed portions 724 formed in the seal portion 701 at the side end portions and a half-cut line 721 that serves as a path of cutting between the pair of easy-to-open processed portions 724.

The easy-to-open processed portion 724 is not particularly limited as long as the portion is configured to enable the easy opening of the packaging bag 700. For example, the easy-to-open processed portion 724 may be formed of a scar group composed of a collection of fine recess portions formed on the surface of the seal portion 701. For example, the easy-to-open processed portion 724 may be a notch that penetrates an end edge of the seal portion 701 in the thickness direction. The shape of the notch is not particularly limited, and the notch may be, for example, a V-shaped, U-shaped, or I-shaped notch.

For example, the half-cut line 721 can be formed by laser processing.

A method for manufacturing the packaging bag 700 and the package 800 will be described.

FIG. 19 is a schematic perspective view showing a method for manufacturing a packaging bag according to the thirteenth embodiment of the present invention.

A pair of the laminated films 650 cut in accordance with the outer shape of the packaging bag 700 are prepared.

After that, as shown in FIG. 19, the sealant layers 630 of the individual laminated films 650 are made to face each other, and the sealant layers 630 are thermally fused together at the lower end portions and side end portions of the individual laminated films 650.

Therefore, the seal portion 701 is formed at the lower end portion and the side end portions. The accommodation portion 702 is formed in the individual laminated films 650 surrounded by the seal portion 701 in a U-shape.

At the upper end of the packaging bag 700, a slit portion that communicates with the accommodation portion 702 is formed.

After that, the article to be packaged 710 is loaded from the upper end portion of the packaging bag 700 in an unsealed state. After that, the sealant layers 630 of the laminated films 650 facing each other at the upper end portions are thermally fused together, thereby forming the seal portion 701 at the upper end portion as well. The package 800 as shown in FIG. 18 can be manufactured as described above.

In the packaging bag 700 of the present embodiment, the accommodation portion 702 is formed of the same laminated films 650 as the eleventh embodiment.

Since each laminated film 650 has the barrier layer 614, it is possible to suppress oxygen and water vapor permeating into the inside from the outside and to suppress deterioration of the members inside the barrier layer 614 and the article to be packaged 710 attributed to oxygen and water vapor.

Each laminated film 650 contains the polyvalent metal particles or the polyvalent metal compound particles in the adhesive layer 620 inside (on the article to be packaged side) the barrier layer 614. Therefore, it is possible to adsorb a retort odor-causing substance, such as a sulfur compound, that is generated from the article to be packaged 710 for a long period of time. Therefore, the packaging bag 700 is capable of suppressing the accumulation of a retort odor-causing substance, which accumulates in the article to be packaged 710 in the accommodation portion 702, in the article to be packaged 710 in the accommodation portion 702.

As a result, it is possible to reduce a retort odor that is generated in a case where the package 800 is opened.

Depending on the kind, there are cases where the article to be packaged 710 contains a component that alters the polyvalent metal particles or the polyvalent metal compound particles and degrades the retort odor-trapping action (deterioration-causing component). For example, acids, such as acetic acid, contained in a variety of food products are likely to alter the polyvalent metal particles or the polyvalent metal compound particles.

In the present embodiment, since the polyvalent metal particles or the polyvalent metal compound particles are mixed with the adhesive component and covered with the adhesive component, for example, the chemical reaction between the polyvalent metal particles or the polyvalent metal compound particles and the deterioration-causing component is suppressed, and thus the polyvalent metal particles or the polyvalent metal compound particles are less likely to deteriorate.

As described above, according to the packaging bag 700 and the package 800 of the present embodiment, since the laminated films 650 of the eleventh embodiment are provided, similar to the eleventh embodiment, it is possible to provide a packaging bag and a package each capable of reducing a retort odor, having a favorable lamination strength, and easily allowing articles to be packaged to be visible.

### [Fourteenth Embodiment]

A packaging bag and a package according to a fourteenth embodiment of the present invention will be described.

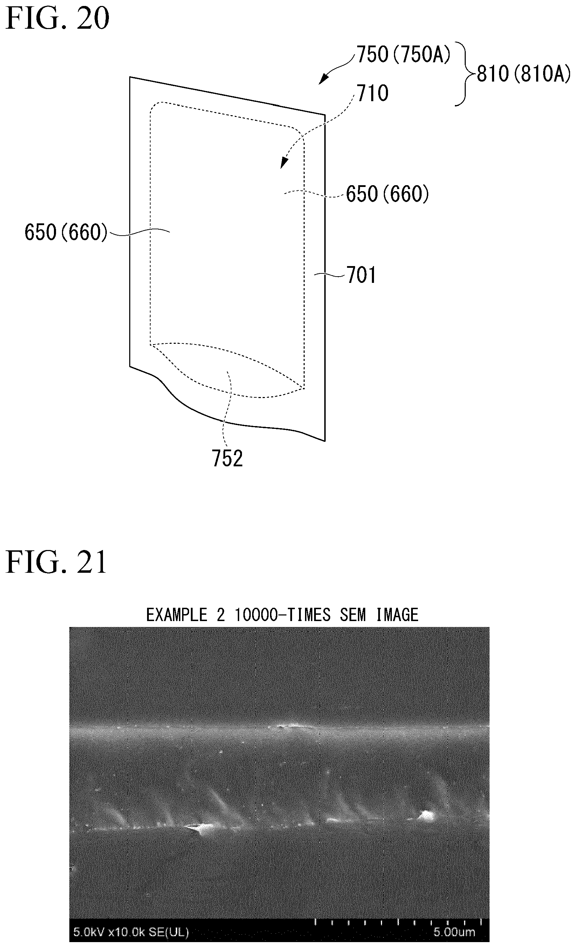

FIG. 20 is a schematic perspective view showing an example of the packaging bag and the package according to the fourteenth embodiment of the present invention.

As shown in FIG. 20, a package 810 of the present embodiment includes a packaging bag 750 and the same article to be packaged 710 as in the thirteenth embodiment.

The packaging bag 750 is a stand-up pouch including a pair of the laminated films 50 and a bottom tape made to adhere to the lower end portion of each laminated film 650. A bottom tape 752 is composed of a laminated film having the same layer configuration as that of the laminated film 650.

The packaging bag 750 and the package 810 of the present embodiment are configured in the same manner as the packaging bag 700 and the package 800 of the thirteenth embodiment except that the packaging bag 750 and the package 810 include the bottom tape 752 and are thus formed in a stand-up pouch shape.

The package 810 can be manufactured by manufacturing the packaging bag 750 having a slit formed at the upper end portion by a well-known method for manufacturing a stand-up pouch in which a pair of the laminated films 650 and the bottom tape 752 are used, then, loading the article to be packaged 710 from the upper end portion, and sealing the upper end portion to form the seal portion 701.

The packaging bag 750 and the package 810 of the present embodiment include the laminated films 650 as in the thirteenth embodiment and thus have the same action as in the thirteenth embodiment.

In each of the above-described embodiments, examples where the laminated films 650 and 660 are wholly light transmission portions have been described.

However, a light transmission portion may be formed in a part of each of the laminated films 650 and 660 by providing a printed layer on an appropriate portion of the laminated film 650 or 660 and thereby forming a light-shielding portion on a part of each of the laminated films 650 and 660.

For example, in a case where the packaging bag 700 is formed of a pair of the laminated films 650 as in the thirteenth embodiment, a light-shielding portion by a printed layer may be formed in one or both of the pair of laminated films 650.

For example, in the laminated films 650 and 660, the printed layer may be provided between the resin layer 612 and the barrier layer 614.

The printed layer is, for example, a layer composed of an ink formed by adding a variety of pigments, a plasticizer, a drying agent, a stabilizer, and the like to a binder resin such as a urethane-based resin, an acrylic resin, a nitrocellulose-based resin, or a rubber-based resin. This printed layer makes it possible to display a character, a pattern, and the like. As a printing method, for example, a well-known printing method such as offset printing, gravure printing, flexographic printing, silk screen printing, or inkjet printing can be used.

On the surface 12b of the resin layer 612 that forms the printed layer, a corona treatment or an ozone treatment may be performed in advance as a pretreatment. In this case, it is possible to improve the adhesion between the printed layer and the resin layer 612.

The layer configurations of the laminated films in the first and twelfth embodiments are examples. For example, the laminated film may include a random layer or a thin film between the adhesive layer 620 and the sealant layer 630 or between the resin layer 612 and the barrier layer 614 as long as the function of the laminated film is not significantly impaired.

In the description of the twelfth embodiment, an example where the polyvalent metal particles or the polyvalent metal compound particles are contained in the adhesive layer 620 of the laminated film 660 and an example where the polyvalent metal particles or the polyvalent metal compound particles are contained in both of the adhesive layers 620 and 616 of the laminated film 660 have been described. However, the polyvalent metal particles or the polyvalent metal compound particles may be contained only in the adhesive layer 616.

In the description of the twelfth embodiment, an example where there is one intermediate layer has been described. However, in the laminated film, two or more intermediate layers may be included.

In the above-described thirteenth embodiment, an example where the packaging bag 700 and the package 800 are formed using the pair of laminated films 650 has been described.

However, as shown in FIG. 18 and FIG. 19, a packaging bag 700A and a package 800A may be formed of a pair of the laminated films 660 in place of the pair of laminated films 650.

The packaging bag 700A and the package 800A can be manufactured in the same manner as the packaging bag 700 and the package 800 except that the pair of laminated films 660 are used in place of the pair of laminated films 650.

The packaging bag 700A and the package 800A include the pair of laminated films 660 and thus have the same action as the laminated film 660.

In the above-described fourteenth embodiment, an example where the packaging bag 750 and the package 810 are formed using the pair of laminated films 650 has been described.

However, as shown in FIG. 20, a packaging bag 750A and a package 810A may be formed of a pair of the laminated films 660 in place of the pair of laminated films 650.

The packaging bag 750A and the package 810A can be manufactured in the same manner as the packaging bag 750 and the package 810 except that the pair of laminated films 660 are used in place of the pair of laminated films 650.

The packaging bag 750A and the package 810A include the pair of laminated films 660 and thus have the same action as the laminated film 660.

In the above-described thirteenth and fourteenth embodiments, examples where the packaging bag and the package are formed using the pair of laminated films 650 have been described. However, as long as the laminated film 650 is used in some of the outer peripheral portions of the packaging bags and the packages, laminated films in the other outer peripheral portions may have a different layer configuration from the laminated film 650.

For example, in a case where a retort odor can be suppressed with the polyvalent metal particles or polyvalent metal compound particles contained in one laminated film 650, polyvalent metal particles or polyvalent metal compound particles may not be contained in other laminated films.

For example, in a case where the content of an article to be packaged is made to be visible by forming a light transmission portion in one laminated film 650, no light transmission portion may be formed in other laminated films 650.

In the above-described thirteenth and fourteenth embodiments, examples where the packaging bags are a gusseted bag and a stand-up pouch have been described, but the shape of the packaging bag is not limited thereto, and the packaging bag may have other well-known bag shapes.

For example, the shape of the packaging bag may be a two-side seal bag, a three-side seal bag, or a center seal bag.

For example, the packaging bag may include a synthetic resin fastener that can be sealed repeatedly by fitting a spout or a strip-like protrusion with a strip-like groove.

In the above-described thirteenth and fourteenth embodiments, examples where the article to be packaged 710 is food have been described, but the article to be packaged 710 is not limited to food.

In the light transmission portion, the ratio of the haze measured in accordance with the haze measurement method specified in JIS-K-7136 to the haze measured in accordance with the measurement method in a light transmission portion when the adhesive layer 620 does not contain polyvalent metal particles and polyvalent metal compound particles may be 1.10 or less, and, in the adhesive layer 620, the ratio of the maximum diameter of the aggregates formed of the polyvalent metal particles or the polyvalent metal compound particles to the minimum diameter of the aggregates may be 14.0 times or less.

### [Examples]

Next, Examples 1 to 19 of the twelfth embodiment of the present invention will be described together with Comparative Examples 1 to 17.

First, particle dispersion liquids used for the manufacturing of laminated films of Examples 1 to 19 and Comparative Examples 2 to 17 will be collectively described. Each particle dispersion liquid was used for the manufacturing of an adhesive containing polyvalent metal compound particles.

The following [Table 5] shows the compositions of the particle dispersion liquids and dispersion treatments used for the manufacturing of the laminated films of Examples 1 to 19 and Comparative Examples 2 to 17.

**[Table 5]**

| Polyvalent metal dispersion liquid | Particle dispersion liquid (NV30%) | | | | | |
|---|---|---|---|---|---|---|
| | Particles | | | Dispersant | Amount added (wt%) | Dispersion treatment |
| | Material | Average particle diameter | Specific surface area | | | |
| Particle dispersion liquid 11Aa | ZnO | 35 nm | 30 m²/g | Dispersant A | 5 | Bead mill |
| Particle dispersion liquid 11Ca | ZnO | 35 nm | 30 m²/g | Dispersant A | 20 | Bead mill |
| Particle dispersion liquid 11Ba | ZnO | 35 nm | 30 m²/g | Dispersant A | 40 | Bead mill |
| Particle dispersion liquid 12Aa | ZnO | 35 nm | 30 m²/g | Dispersant B | 5 | Bead mill |
| Particle dispersion liquid 12Ba | ZnO | 35 nm | 30 m²/g | Dispersant B | 40 | Bead mill |
| Particle dispersion liquid 13Aa | ZnO | 35 nm | 30 m²/g | Dispersant C | 5 | Bead mill |
| Particle dispersion liquid 13Ba | ZnO | 35 nm | 30 m²/g | Dispersant C | 40 | Bead mill |
| Particle dispersion liquid 14Aa | ZnO | 20 nm | 50 m²/g | Dispersant A | 5 | Bead mill |
| Particle dispersion liquid 14Ca | ZnO | 20 nm | 50 m²/g | Dispersant A | 20 | Bead mill |
| Particle dispersion liquid 14Ba | ZnO | 20 nm | 50 m²/g | Dispersant A | 40 | Bead mill |
| Particle dispersion liquid 15Aa | ZnO | 60 nm | 25 m²/g | Dispersant A | 5 | Bead mill |
| Particle dispersion liquid 15Ba | ZnO | 60 nm | 25 m²/g | Dispersant A | 40 | Bead mill |
| Particle dispersion liquid 100a | ZnO | 35 nm | 30 m²/g | None | N/A | Bead mill |
| Particle dispersion liquid 200a | Al₂O₃ | 45 nm | 27 m²/g | None | N/A | Bead mill |
| Particle dispersion liquid 300a | MgO | 20 nm | 50 m²/g | None | N/A | Bead mill |
| Particle dispersion liquid 400a | ZnO | 20 nm | 50 m²/g | None | N/A | Bead mill |
| Particle dispersion liquid 11Ab | ZnO | 35 nm | 30 m²/g | Dispersant A | 5 | Stirring only |
| Particle dispersion liquid 11Cb | ZnO | 35 nm | 30 m²/g | Dispersant A | 20 | Stirring only |
| Particle dispersion liquid 11Bb | ZnO | 35 nm | 30 m²/g | Dispersant A | 40 | Stirring only |
| Particle dispersion liquid 14Ab | ZnO | 20 nm | 50 m²/g | Dispersant A | 5 | Stirring only |
| Particle dispersion liquid 14Bb | ZnO | 20 nm | 50 m²/g | Dispersant A | 40 | Stirring only |
| Particle dispersion liquid 100b | ZnO | 35 nm | 30 m²/g | None | N/A | Stirring only |
| Particle dispersion liquid 200b | Al₂O₃ | 45 nm | 27 m²/g | None | N/A | Stirring only |
| Particle dispersion liquid 300b | MgO | 20 nm | 50 m²/g | None | N/A | Stirring only |
| Particle dispersion liquid 400b | ZnO | 20 nm | 50 m²/g | None | N/A | Stirring only |

### [Particle dispersion liquid 11Aa]

As shown in [Table 5], a particle dispersion liquid 11Aa was prepared by dispersing fine particles of zinc oxide (ZnO), which is a polyvalent metal oxide, (hereinafter, zinc oxide particles) in ethyl acetate.

The particle dispersion liquid 11Aa was prepared as described below.

First, the zinc oxide particles were added to ethyl acetate, which was a solvent, to form a liquid mixture. As the zinc oxide particles, FINEX-30 (trade name; manufactured by Sakai Chemical Industry Co., Ltd.) having an average particle diameter of 35 nm and a specific surface area of 30 m²/g was used. The amount of FINEX (registered trademark)-30 added was set to an amount at which the solid content concentration of the liquid mixture became 30% by mass.

After that, a dispersant A containing polyester acid amide amine salt, alkylcyclohexane, and propylene glycol monomethyl ether acetate was added to the liquid mixture. The dispersant A is a dispersant containing amide amino acid of a high-molecular-weight polyester acid as a main component.

The amount of the dispersant A added was set to 5 parts by mass relative to 100 parts by mass of the solid content of the zinc oxide particles in the liquid mixture.

A dispersion treatment (described as "bead mill" in [Table 5]) was performed on this liquid mixture using a bead mill.

As a result, the particle dispersion liquid 11Aa containing zinc oxide particles dispersed in the solvent was prepared.

### [Particle dispersion liquid 11Ba]

A particle dispersion liquid 11Ba was prepared in the same manner as the particle dispersion liquid 11Aa except that the amount of the dispersant added was set to 40 parts by mass.

### [Particle dispersion liquid 11Ca]

A particle dispersion liquid 11Ca was prepared in the same manner as the particle dispersion liquid 11Aa except that the amount of the dispersant added was set to 20 parts by mass.

### [Particle dispersion liquids 12Aa and 12Ba]

A particle dispersion liquid 12Aa was prepared in the same manner as the particle dispersion liquid 11Aa except that a dispersant B containing phosphoric acid ester was used in place of the dispersant A as a dispersant. The dispersant B is a polyether phosphate compound-based dispersant.

A particle dispersion liquid 12Ba was prepared in the same manner as the particle dispersion liquid 12Aa except that the amount of the dispersant added was set to 40 parts by mass.

### [Particle dispersion liquids 13Aa and 13Ba]

A particle dispersion liquid 13Aa was prepared in the same manner as the particle dispersion liquid 11Aa except that a dispersant C containing a vinyl chloride/vinyl acetate-based copolymer, acetone, and methanol was used in place of the dispersant A as a dispersant. The dispersant C is a dispersant containing a vinyl chloride-vinyl acetate copolymer resin as a main component.

A particle dispersion liquid 13Ba was prepared in the same manner as the particle dispersion liquid 13Aa except that the amount of the dispersant added was set to 40 parts by mass.

### [Particle dispersion liquids 14Aa, 14Ba, and 14Ca]

A particle dispersion liquid 14Aa was prepared in the same manner as the particle dispersion liquid 11Aa except that the average particle diameter of the zinc oxide particles was 20 nm and the specific surface area was 50 m²/g.

A particle dispersion liquid 14Ba was prepared in the same manner as the particle dispersion liquid 14Aa except that the amount of the dispersant added was set to 40 parts by mass.

A particle dispersion liquid 14Ca was prepared in the same manner as the particle dispersion liquid 14Aa except that the amount of the dispersant added was set to 20 parts by mass.

### [Particle dispersion liquids 15Aa and 15Ba]

A particle dispersion liquid 15Aa was prepared in the same manner as the particle dispersion liquid 11Aa except that the average particle diameter of the zinc oxide particles was 60 nm and the specific surface area was 25 m²/g.

A particle dispersion liquid 15Ba was prepared in the same manner as the particle dispersion liquid 15Aa except that the amount of the dispersant added was set to 40 parts by mass.

### [Particle dispersion liquids 100a, 200a, 300a, and 400a]

A particle dispersion liquid 100a was prepared in the same manner as the particle dispersion liquid 11Aa except that the dispersant was not added.

A particle dispersion liquid 400a was prepared in the same manner as the particle dispersion liquid 100a except that the average particle diameter of the zinc oxide particles was 20 nm and the specific surface area was 50 m²/g.

A particle dispersion liquid 200a was prepared in the same manner as the particle dispersion liquid 100a except that the particles of aluminum oxide (Al₂O₃) (hereinafter, aluminum oxide particles) manufactured by Fujifilm Wako Pure Chemical Corporation were used in place of the zinc oxide particles. The aluminum oxide particles had an average particle diameter of 45 nm and a specific surface area of 27 m2/g.

A particle dispersion liquid 300a was prepared in the same manner as the particle dispersion liquid 100a except that the particles of magnesium oxide (MgO) (hereinafter, magnesium oxide particles) manufactured by Stream Chemicals, Inc. were used in place of the zinc oxide particles. The magnesium oxide particles had an average particle diameter of 20 nm and a specific surface area of 50 m²/g.

### [Particle dispersion liquids 11Ab, 11Bb, and 11Cb]

A particle dispersion liquid 11Ab was prepared in the same manner as the particle dispersion liquid 11Aa except that the dispersion treatment using a bead mill was not performed and the liquid mixture was stirred for 10 minutes using a stirring blade (expressed as "stirring only" in [Table 5]).

A particle dispersion liquid 11Bb was prepared in the same manner as the particle dispersion liquid 11Ab except that the amount of the dispersant added was set to 40 parts by mass.

A particle dispersion liquid 11 Cb was prepared in the same manner as the particle dispersion liquid 11Ab except that the amount of the dispersant added was set to 20 parts by mass.

### [Particle dispersion liquids 14Ab and 14Bb]

A particle dispersion liquid 14Ab was prepared in the same manner as the particle dispersion liquid 14Aa except that the dispersion treatment using a bead mill was not performed and the liquid mixture was stirred for 10 minutes using a stirring blade.

A particle dispersion liquid 14Bb was prepared in the same manner as the particle dispersion liquid 14Ab except that the amount of the dispersant added was set to 40 parts by mass.

### [Particle dispersion liquids 100b, 200b, 300b, and 400b]

A particle dispersion liquid 100b was prepared in the same manner as the particle dispersion liquid 100a except that the dispersion treatment using a bead mill was not performed and the liquid mixture was stirred for 10 minutes using a stirring blade.

A particle dispersion liquid 200b was prepared in the same manner as the particle dispersion liquid 200a except that the dispersion treatment using a planetary bead mill was not performed and the liquid mixture was stirred for 10 minutes using a stirring blade.

A particle dispersion liquid 300b was prepared in the same manner as the particle dispersion liquid 300a except that the dispersion treatment using a planetary bead mill was not performed and the liquid mixture was stirred for 10 minutes using a stirring blade.

A particle dispersion liquid 400b was prepared in the same manner as the particle dispersion liquid 400a except that the dispersion treatment using a planetary bead mill was not performed and the liquid mixture was stirred for 10 minutes using a stirring blade.

The following [Table 6] and [Table 7] show the manufacturing conditions and evaluation results of Examples 1 to 19 and Comparative Examples 1 to 17.

**[Table 6]**

| | Particle dispersion liquid | Coating liquid | Particle amount (% by mass) | Cross-sectional SEM image observation results | | | |
|---|---|---|---|---|---|---|---|
| | | | | Maximum diameter of aggregates | Minimum diameter of aggregates | Average diameter of aggregates | Number of aggregates |
| Example 1 | 11Aa | 11Aa | 1.5% | 100 nm | 35 nm | 40 nm | 80 |
| Example 2 | 11Cu | 11Ca | 3.0% | 100 nm | 35 nm | 40 nm | 150 |
| Example 3 | 11Cu | 11Ca+ | 5.0% | 100 nm | 35 nm | 40 nm | 250 |
| Example 4 | 11Ba | 11Ba | 1.5% | 100 nm | 35 nm | 40 nm | 80 |
| Example 5 | 12Aa | 12Aa | 1.5% | 200 nm | 35 nm | 90 nm | 70 |
| Example 6 | 12Ba | 12Ba | 1.5% | 200 nm | 35 nm | 90 nm | 70 |
| Example 7 | 13Aa | 13Aa | 1.5% | 200 nm | 35 nm | 90 nm | 70 |
| Example 8 | 13Ba | 13Ba | 1.5% | 200 nm | 35 nm | 90 nm | 70 |
| Example 9 | 100a | 100a | 1.5% | 250 nm | 35 nm | 110 nm | 60 |
| Example 10 | 11Aa | 11Aa+ | 9.5% | 100 nm | 35 nm | 40 nm | 400 |
| Example 11 | 100a | 100a+ | 9.5% | 250 nm | 35 nm | 110 nm | 200 |
| Example 12 | 14Aa | 14Aa | 1.5% | 80 nm | 20 nm | 25 nm | 100 |
| Example 13 | 14Ca | 14Ca | 3.0% | 80 nm | 20 nm | 25 nm | 200 |
| Example 14 | 14Ca | 14Ca+ | 5.0% | 80 nm | 20 nm | 25 nm | 300 |
| Example 15 | 14Ba | 14Ba | 1.5% | 80 nm | 20 nm | 25 nm | 100 |
| Example 16 | 400a | 400a | 1.5% | 200 nm | 20 nm | 90 nm | 90 |
| Example 17 | 200a | 200a | 1.5% | 250 nm | 45 nm | 110 nm | 60 |
| Example 18 | 300a | 300a | 1.5% | 250 nm | 20 nm | 110 nm | 60 |
| Example 19 | 11Aa | 11Aa- | 0.8% | 100 nm | 35 nm | 40 nm | 65 |
| Comparative Example 1 | None | None | N/A | - | - | - | N/A |
| Comparative Example 2 | 100b | 100b | 1.5% | 5.3 µm | 35 nm | 3.5 µm | 0 to 3 |
| Comparative Example 3 | 100b | 100b+ | 3.0% | 6.3 µm | 35 nm | 3.5 µm | 0 to 5 |
| Comparative Example 4 | 11Ab | 11Ab | 1.5% | 3.5 µm | 35 nm | 2.6 µm | 0 to 3 |
| Comparative Example 5 | 11Cb | 11Cb | 3.0% | 3.5 µm | 35 nm | 2.4 µm | 0 to 5 |
| Comparative Example 6 | 11Bb | 11Bb | 1.5% | 3.5 µm | 35 nm | 2.1 µm | 0 to 3 |
| Comparative Example 7 | 200b | 200b | 1.5% | 3.5 µm | 45 nm | 2.8 µm | 0 to 3 |
| Comparative Example 8 | 300b | 300b | 1.5% | 3.5 µm | 20 nm | 2.8 µm | 0 to 3 |
| Comparative Example 9 | 100b | 100b++ | 9.5% | 3.5 µm | 35 nm | 2.8 µm | 0 to 10 |
| Comparative Example 10 | 200b | 200b+ | 9.5% | 3.5 µm | 45 nm | 2.8 µm | 0 to 10 |
| Comparative Example 11 | 300b | 300b+ | 9.5% | 3.5 µm | 20 nm | 2.8 µm | 0 to 10 |
| Comparative Example 12 | 14Ab | 14Ab | 1.5% | 3 µm | 20 nm | 2.5 µm | 0 to 3 |
| Comparative Example 13 | 14Bb | 14Bb | 1.5% | 3 µm | 20 nm | 2.0 µm | 0 to 3 |
| Comparative Example 14 | 400b | 400b | 1.5% | 3.5 µm | 20 nm | 2.7 µm | 0 to 3 |
| Comparative Example 15 | 11Aa | 11 Aa++ | 11% | 100 nm | 35 nm | 40 nm | 500 |
| Comparative Example 16 | 15Aa | 15Aa | 1.5% | 150 nm | 60 nm | 70 nm | 60 |
| Comparative Example 17 | 15Ba | 15Ba | 1.5% | 150 nm | 60 nm | 70 nm | 60 |

**[Table 7]**

| | Haze | Haze ratio | H₂S concentration of content | Lamination strength | | Evaluation | | | | | |
|---|---|---|---|---|---|---|---|---|---|---|---|
| | | | | Before retort | After retort | Visibility | Odor | Lamination strength Before retort | Lamination strength After retort | Lamination strength Comprehensive | Comprehensive |
| Example 1 | 25% | 1.00 | 0.03 mg/l | 11 N | 8 N | A | A | A | A | A | A |
| Example 2 | 25% | 1.00 | 0.02 mg/l | 11 N | 8 N | A | A | A | A | A | A |
| Example 3 | 25% | 1.00 | 0.01 mg/l | 11 N | 8 N | A | A | A | A | A | A |
| Example 4 | 25% | 1.00 | 0.03 mg/l | 11 N | 8 N | A | A | A | A | A | A |
| Example 5 | 25% | 1.00 | 0.03 mg/l | 11 N | 8 N | A | A | A | A | A | A |
| Example 6 | 25% | 1.00 | 0.03 mg/l | 11 N | 8 N | A | A | A | A | A | A |
| Example 7 | 25% | 1.00 | 0.03 mg/l | 11 N | 8 N | A | A | A | A | A | A |
| Example 8 | 25% | 1.00 | 0.03 mg/l | 11 N | 8 N | A | A | A | A | A | A |
| Example 9 | 25% | 1.00 | 0.03 mg/l | 11 N | 8 N | A | A | A | A | A | A |
| Example 10 | 25% | 1.00 | 0.01 mg/l | 11 N | 8 N | A | A | A | A | A | A |
| Example 11 | 25% | 1.00 | 0.01 mg/l | 11 N | 8 N | A | A | A | A | A | A |
| Example 12 | 25% | 1.00 | 0.03 mg/l | 11 N | 8 N | A | A | A | A | A | A |
| Example 13 | 25% | 1.00 | 0.02 mg/l | 11 N | 8 N | A | A | A | A | A | A |
| Example 14 | 25% | 1.00 | 0.01 mg/l | 11 N | 8 N | A | A | A | A | A | A |
| Example 15 | 25% | 1.00 | 0.03 mg/l | 11 N | 8 N | A | A | A | A | A | A |
| Example 16 | 25% | 1.00 | 0.03 mg/l | 11 N | 8 N | A | A | A | A | A | A |
| Example 17 | 25% | 1.00 | 0.03 mg/l | 11 N | 8 N | A | A | A | A | A | A |
| Example 18 | 25% | 1.00 | 0.03 mg/l | 11 N | 8 N | A | A | A | A | A | A |
| Example 19 | 25% | 1.00 | 0.20 mg/l | 11 N | 6 N | A | B | A | A | A | B |
| Comparative Example 1 | 25% | 1.00 | 0.26 mg/l | 12 N | 10 N | A | C | A | A | A | C |
| Comparative Example 2 | 28% | 1.12 | 0.07 mg/l | 12 N | 6 N | C | B | A | B | B | C |
| Comparative Example 3 | 30% | 1.20 | 0.05 mg/l | 12 N | 6 N | C | B | A | B | B | C |
| Comparative Example 4 | 29% | 1.16 | 0.07 mg/l | 12 N | 6 N | C | B | A | B | B | C |
| Comparative Example 5 | 29% | 1.16 | 0.05 mg/l | 12 N | 6 N | C | B | A | B | B | C |
| Comparative Example 6 | 29% | 1.16 | 0.05 mg/l | 12 N | 6 N | C | B | A | B | B | C |
| Comparative Example 7 | 30% | 1.20 | 0.05 mg/l | 12 N | 6 N | C | B | A | B | B | C |
| Comparative Example 8 | 30% | 1.20 | 0.05 mg/l | 12 N | 6 N | C | B | A | B | B | C |
| Comparative Example 9 | 33% | 1.32 | 0.01 mg/l | 12 N | 4 N | C | A | A | B | B | C |
| Comparative Example 10 | 33% | 1.32 | 0.01 mg/l | 12 N | 4 N | C | A | A | B | B | C |
| Comparative Example 11 | 33% | 1.32 | 0.01 mg/l | 12 N | 4 N | C | A | A | B | B | C |
| Comparative Example 12 | 29% | 1.16 | 0.05 mg/l | 12 N | 6 N | C | B | A | B | B | C |
| Comparative Example 13 | 29% | 1.16 | 0.05 mg/l | 12 N | 6 N | C | B | A | B | B | C |
| Comparative Example 14 | 30% | 1.20 | 0.05 mg/l | 12 N | 6 N | C | B | A | B | B | C |
| Comparative Example 15 | 30% | 1.20 | 0.01 mg/l | 11 N | 6 N | C | A | A | B | B | C |
| Comparative Example 16 | 28% | 1.12 | 0.06 mg/l | 11 N | 8 N | B | B | A | A | A | C |
| Comparative Example 17 | 28% | 1.12 | 0.06 mg/l | 11 N | 8 N | B | B | A | A | A | C |

### [Example 1]

In Example 1, a TOYOBO ESTER (registered trademark) film E5100 (trade name; manufactured by Toyobo Co., Ltd.), which is a biaxially-stretched polyethylene terephthalate film, was used as a resin layer 612. E5100 was 12 µm in thickness, 500 m in length, and 600 mm in width.

One surface 12b of the resin layer 612 was corona-treated, and a barrier layer 614 composed of SiOₓ was formed on the corona-treated surface 12b using a vacuum deposition machine.

Specifically, a vapor deposition material in which a metal silicon powder and a silicon dioxide powder had been mixed was prepared, and vapor deposition was performed with the vacuum deposition machine such that a vapor-deposited layer having an element ratio O/Si of 1.5 (x = 1.5) was formed on the surface 12b. The thickness of the barrier layer 614 was 50 nm.

After that, two-component curable polyurethane-based adhesives A626/A50 (trade name; manufactured by Mitsui Fine Chemicals, Inc Co., Ltd.) were applied onto the barrier layer 614 using a dry lamination machine, and EMBLEM (registered trademark) ON (trade name; manufactured by Unitika Ltd.), which is a 15 µm-thick nylon film, was laminated thereon. As a result, an adhesive layer 616 and an intermediate layer 618 were formed.

A coating liquid for forming an adhesive layer 620 was prepared as described below using the particle dispersion liquid 11Aa.

A626 and A50, which are the above-described two-component curable polyurethane-based adhesives, were mixed such that the mass ratio became 8:1 and diluted with ethyl acetate to form an adhesive having a solid content concentration of 30% by mass. After that, the particle dispersion liquid 11 Aa was added to the adhesive, and the ratio of the solid content of the zinc oxide particles to the total mass of the solid content of the adhesive and the solid content of the zinc oxide particles was adjusted to be 1.5% by mass.

Hereinafter, for the sake of simplicity, "the ratio of the solid content of the polyvalent metal compound particles to the total mass of the solid content of the adhesive and the solid content of the polyvalent metal compound particles" will be referred to as "the particle amount in the coating liquid". In [Table 6], the ratio was expressed as "particle amount".

After that, the liquid mixture of the adhesive and the particle dispersion liquid 11 Aa was stirred with a stirring blade for 30 minutes. After that, the liquid mixture was filtered through a membrane filter having a pore size of 1 µm to obtain a coating liquid 11Aa that was used in Example 1. In the particle dispersion liquid 11Aa on which the dispersion treatment had been performed, since it was difficult for the zinc oxide particles to aggregate, the majority of the zinc oxide particles in the liquid mixture passed through the membrane filter.

After that, the coating liquid 11Aa was applied onto the intermediate layer 618 using a dry lamination machine and pasted to an 80 µm-thick polyolefin-based unstretched coextruded film as a sealant layer 630.

A laminated film 660 having a laminate structure shown in FIG. 17 was obtained as described above. That is, this laminated film 660 had the sealant layer 630 composed of a polyolefin-based unstretched coextruded film, the adhesive layer 620 containing zinc oxide particles, the intermediate layer 618 composed of a nylon film, the adhesive layer 616 not containing zinc oxide particles, the barrier layer 614 and the resin layer 612 in this order.

The particle amount of the zinc oxide particles in the adhesive layer 620 was, similar to the particle amount in the coating liquid, 1.5% by mass.

After that, the laminated films 660 of Example 1 were pasted together such that the sealant layers 630 faced to each other to produce a packaging bag 700A of Example 1, which was a three-side seal bag as shown in FIG. 19.

After that, an article to be packaged 710 was accommodated and sealed in the packaging bag 700A, thereby manufacturing a package 800A of Example 1.

As the article to be packaged 710, a cysteine aqueous solution containing 0.03% by mass of cysteine was used.

### [Examples 2 to 19]

As shown in [Table 6], in Example 2, a laminated film 660, a packaging bag 700A, and a package 800A were produced in the same manner as in Example 1 except that the particle amount of the zinc oxide particles in the coating liquid 11Aa was 3.0% by mass, and a coating liquid 11Ca for which a particle dispersion liquid in which the amount of the dispersant added was set to 20 parts by mass was used was used.

In Example 3, a laminated film 660, a packaging bag 700A, and a package 800A were produced in the same manner as in Example 2 except that a coating liquid 11Ca+ for which a particle dispersion liquid in which the particle amount of the zinc oxide particles was 5.0% by mass was used was used.

In Example 4, a laminated film 660, a packaging bag 700A, and a package 800A were produced in the same manner as in Example 1 except that a coating liquid 11Ba for which a particle dispersion liquid in which the amount of the dispersant added was set to 40 parts by mass was used was used.

In Example 5, a laminated film 660, a packaging bag 700A, and a package 800A were produced in the same manner as in Example 1 except that a coating liquid 12Aa for which a particle dispersion liquid in which the amount of the dispersant B as a dispersant added was set to 5 parts by mass was used was used.

In Example 6, a laminated film 660, a packaging bag 700A, and a package 800A were produced in the same manner as in Example 5 except that a coating liquid 12Ba for which a particle dispersion liquid in which the amount of the dispersant added was set to 40 parts by mass was used was used.

In Example 7, a laminated film 660, a packaging bag 700A, and a package 800A were produced in the same manner as in Example 1 except that a coating liquid 13Aa for which a particle dispersion liquid in which the amount of the dispersant C as a dispersant added was set to 5 parts by mass was used was used.

In Example 8, a laminated film 660, a packaging bag 700A, and a package 800A were produced in the same manner as in Example 7 except that a coating liquid 13Ba for which a particle dispersion liquid in which the amount of the dispersant added was set to 40 parts by mass was used was used.

In Example 9, a laminated film 660, a packaging bag 700A, and a package 800A were produced in the same manner as in Example 1 except that a coating liquid 100a for which a particle dispersion liquid to which no dispersant was added was used was used.

In Example 10, a laminated film 660, a packaging bag 700A, and a package 800A were produced in the same manner as in Example 1 except that a coating liquid 11Aa+ for which a particle dispersion liquid in which the particle amount of the zinc oxide particles was 9.5% by mass was used was used.

In Example 11, a laminated film 660, a packaging bag 700A, and a package 800A were produced in the same manner as in Example 9 except that a coating liquid 100a+ for which a particle dispersion liquid in which the particle amount of the zinc oxide particles was 9.5% by mass was used was used.

In Example 12, a laminated film 660, a packaging bag 700A, and a package 800A were produced in the same manner as in Example 1 except that a coating liquid 14Aa for which a particle dispersion liquid in which zinc oxide particles having an average particle diameter of 20 nm and a specific surface area of 50 m²/g were dispersed was used was used.

In Example 13, a laminated film 660, a packaging bag 700A, and a package 800A were produced in the same manner as in Example 12 except that the particle amount of the zinc oxide particles was 3.0% by mass, and a coating liquid 14Ca for which a particle dispersion liquid in which the amount of the dispersant added was set to 20 parts by mass was used was used.

In Example 14, a laminated film 660, a packaging bag 700A, and a package 800A were produced in the same manner as in Example 13 except that a coating liquid 14Ca+ for which a particle dispersion liquid in which the particle amount of the zinc oxide particles was 5.0% by mass was used was used.

In Example 15, a laminated film 660, a packaging bag 700A, and a package 800A were produced in the same manner as in Example 12 except that a coating liquid 14Ba for which a particle dispersion liquid in which the amount of the dispersant added was set to 40 parts by mass was used was used.

In Example 16, a laminated film 660, a packaging bag 700A, and a package 800A were produced in the same manner as in Example 12 except that a coating liquid 400a for which a particle dispersion liquid to which no dispersant was added was used was used.

In Example 17, a laminated film 660, a packaging bag 700A, and a package 800A were produced in the same manner as in Example 9 except that a coating liquid 200a for which a particle dispersion liquid in which aluminum oxide particles having an average particle diameter of 45 nm and a specific surface area of 27 m²/g were dispersed was used was used.

In Example 18, a laminated film 660, a packaging bag 700A, and a package 800A were produced in the same manner as in Example 9 except that a coating liquid 300a for which a particle dispersion liquid in which magnesium oxide particles having an average particle diameter of 20 nm and a specific surface area of 50 m²/g were dispersed was used was used.

In Example 19, a laminated film 660, a packaging bag 700A, and a package 800A were produced in the same manner as in Example 1 except that a coating liquid 11Aa- for which a particle dispersion liquid in which the particle amount of the zinc oxide particles was 0.8% by mass was used was used.

In each of the particle dispersion liquids used in Examples 2 to 19, the dispersion treatment was performed, which made it less likely for the polyvalent metal compound particles to aggregate. Therefore, the majority of the polyvalent metal compound particles passed through the membrane filter in the filtration step at the time of producing each coating liquid. Therefore, the content of the polyvalent metal compound particles in the adhesive layer 620 of the laminated film 660 was the same as the particle amount in the coating liquid.

### [Comparative Examples 1 to 17]

In Comparative Example 1, a laminated film, a packaging bag, and a package of Comparative Example 1 were produced in the same manner as in Example 1 except that the adhesive layer was formed using only the polyurethane-based adhesive without using the polyvalent metal particles and the polyvalent metal compound particles and thus performing the dispersion treatment with the bead mill.

In Comparative Example 2, a laminated film, a packaging bag, and a package of Comparative Example 2 were produced in the same manner as in Example 9 except that a coating liquid 100b was used in place of the coating liquid 100a.

In Comparative Example 3, a laminated film, a packaging bag, and a package of Comparative Example 3 were produced in the same manner as in Comparative Example 2 except that a coating liquid 100b+ for which a particle dispersion liquid in which the particle amount of the zinc oxide particles was 3.0% by mass was used was used.

In Comparative Example 4, a laminated film, a packaging bag, and a package of Comparative Example 4 were produced in the same manner as in Example 1 except that a coating liquid 11Ab was used in place of the coating liquid 11Aa.

In Comparative Example 5, a laminated film, a packaging bag, and a package of Comparative Example 5 were produced in the same manner as in Comparative Example 4 except that the particle amount of the zinc oxide particles was 3.0% by mass, and a coating liquid 11Cb for which a particle dispersion liquid in which the amount of the dispersant added was set to 20 parts by mass was used was used.

In Comparative Example 6, a laminated film, a packaging bag, and a package of Comparative Example 6 were produced in the same manner as in Comparative Example 4 except that a coating liquid 11Bb for which a particle dispersion liquid in which the amount of the dispersant added was set to 40 parts by mass was used was used.

In Comparative Example 7, a laminated film, a packaging bag, and a package of Comparative Example 7 were produced in the same manner as in Example 17 except that a coating liquid 200b was used in place of the coating liquid 200a.

In Comparative Example 8, a laminated film, a packaging bag, and a package of Comparative Example 8 were produced in the same manner as in Example 18 except that a coating liquid 300b was used in place of the coating liquid 300a.

In Comparative Example 9, a laminated film, a packaging bag, and a package of Comparative Example 9 were produced in the same manner as in Comparative Example 2 except that a coating liquid 100b++ for which a particle dispersion liquid in which the particle amount of the zinc oxide particles was 9.5% by mass was used was used.

In Comparative Example 10, a laminated film, a packaging bag, and a package of Comparative Example 10 were produced in the same manner as in Comparative Example 7 except that a coating liquid 200b+ for which a particle dispersion liquid in which the particle amount of the aluminum oxide particles was 9.5% by mass was used was used.

In Comparative Example 11, a laminated film, a packaging bag, and a package of Comparative Example 11 were produced in the same manner as in Comparative Example 8 except that a coating liquid 300b+ for which a particle dispersion liquid in which the particle amount of the magnesium oxide particles was 9.5% by mass was used was used.

In Comparative Example 12, a laminated film, a packaging bag, and a package of Comparative Example 12 were produced in the same manner as in Example 12 except that a coating liquid 14Ab was used in place of the coating liquid 14Aa.

In Comparative Example 13, a laminated film, a packaging bag, and a package of Comparative Example 13 were produced in the same manner as in Comparative Example 12 except that a coating liquid 14Bb for which a particle dispersion liquid in which the amount of the dispersant added was set to 40 parts by mass was used was used.

In Comparative Example 14, a laminated film, a packaging bag, and a package of Comparative Example 14 were produced in the same manner as in Example 16 except that a coating liquid 400b was used in place of the coating liquid 400a.

In Comparative Example 15, a laminated film, a packaging bag, and a package of Comparative Example 15 were produced in the same manner as in Example 1 except that a coating liquid 11Aa++ for which a particle dispersion liquid in which the particle amount of the zinc oxide particles was 11% by mass was used was used.

In Comparative Example 16, a laminated film, a packaging bag, and a package of Comparative Example 16 were produced in the same manner as in Example 1 except that a coating liquid 15Aa for which a particle dispersion liquid in which the zinc oxide particles had an average particle diameter of 60 nm and a specific surface area of 25 m²/g was used was used.

In Comparative Example 17, a laminated film, a packaging bag, and a package of Comparative Example 17 were produced in the same manner as in Comparative Example 16 except that a coating liquid 15Ba for which a particle dispersion liquid in which the amount of the dispersant added was set to 40 parts by mass was used was used.

### [Measurement items]

In order to evaluate each example and each comparative example, the haze, the ratio of the haze to the haze of Comparative Example 1 (haze ratio), the maximum diameter, minimum diameter, and average system of the aggregates, the hydrogen sulfide (H₂S) concentration, and the lamination strength were measured.

The haze was measured in accordance with JIS-K-7136 using the laminated film of each of the examples and the comparative examples as a test sample. In the measurement of the haze, a haze meter NDH 2000 (trade name; manufactured by Nippon Denshoku Industries Co., Ltd.) was used. As a light source, a 5 V 9 W halogen lamp was used, and, as a light-receiving element, a silicon photocell was used. A measurement region was set to a 4 cm × 4 cm rectangular region. Measurement sites in the roll direction (longitudinal direction) of the laminated film are set to two sites of near the coating start position of the coating liquid and near the coating end position. The distance between the coating start position and the coating end position was 500 m. Measurement sites in the width direction in each measurement site in the roll direction were set to three sites of the central portion and two sites 200 mm apart from the central portion toward both sides. The average value of measurement values at 6 measurement sites was entered into the column "Haze" in [Table 7].

The sizes of the aggregates were measured using the laminated film of each of the examples and the comparative examples as a test sample by continuously capturing a cross-sectional image 50 µm along the adhesive layer at a magnification of 10000 times with a scanning electron microscope.

For the hydrogen sulfide concentration measurement, the package accommodating the cysteine aqueous solution in each example and each comparative example was used as a test sample.

On the package, which was each test sample, a retort treatment was performed by heating the package at 120°C for 60 minutes. After the retort treatment, the package was stored in a refrigerator for 1 week. After that, the aqueous solution in each package was collected, and the hydrogen sulfide concentration was obtained by a methylene blue method (wavelength: 668 nm). Upon the calculation of the hydrogen sulfide concentration, a calibration curve prepared in advance was used. The measurement results of the hydrogen sulfide concentration are shown in [Table 7].

As test samples for the measurement of the lamination strength, the packaging bag before the retort treatment and the packaging bag after retort treatment in each example and each comparative example were used.

The packaging bag before the retort treatment was aged under conditions of at 45°C for 4 days. After that, the lamination strength between the nylon layer and the sealant layer was measured in accordance with JIS Z 0238:1998. Specifically, the lamination strength of each test sample was measured by a T-peel method (crosshead speed: 300 mm/min.) using a TENSILON universal material testing instrument (trade name; manufactured by A&D Company, Limited). The measurement results are shown in the column Lamination strength, Before retort in [Table 7].

The lamination strength (N/15 mm width) was measured using the test sample that was the packaging bag after the retort treatment in the same manner as for the packaging bag before the retort treatment. The measurement results are shown in the column Lamination strength, After retort in [Table 7]. Here, in [Table 7], (N/15 mm width) is simply expressed as (N).

### [Measurement results]

As shown in [Table 6] and [Table 7], in the laminated films 660 of Examples 1 to 19 where the average particle diameter of the additive particles was 10 nm or more and 50 nm or less and the particle amount was 0.5% by mass or more and 10% by mass or less, the haze ratio was 1.10 or less, in more detail, the haze ratio was 1.00.

Generally, the haze increases when the particle amount is large, but the haze ratios of the laminated films 660 of Examples 1 to 19 were the same as those of the laminated film of Comparative Example 1 containing no additive particles.

The aggregates observed in the laminated films 660 of Examples 1 to 19 had an average diameter of 20 nm or more and 120 nm or less and a maximum diameter (major axis) of 250 nm or less. The "average diameter of aggregates" is a value obtained by summing all diameters (major axes) of the aggregates and dividing the sum by the number of the aggregates. In consideration of the average particle diameter of the additive particles, it was possible to confirm that the numbers of aggregates observed in the laminated films 660 of Examples 1 to 19 as large as 10% or more and 200% or less of the average particle diameter present in a rectangular region of 50 µm in the width direction were 50 or more. That is, it was possible to confirm that a lot of fine aggregates having a small maximum diameter were dispersed.

On the other hand, among Comparative Examples 2 to 17, in the laminated films 660 of Comparative Examples 2 to 14 where the dispersion treatment was only stirring, the haze ratios were 1.12 to 1.32, and it was not possible to obtain favorable results compared with those of the laminated films 660 of Examples 1 to 19.

The aggregates observed in the laminated films 660 of Comparative Examples 2 to 14 had an average diameter of 2.0 µm or more and a maximum diameter (major axis) of 3.0 µm or more. In consideration of the average particle diameter of the additive particles, it was possible to confirm that, in the aggregates observed in the laminated films 660 of Comparative Examples 2 to 15, approximately 100 to several hundreds of the additive particles aggregated.

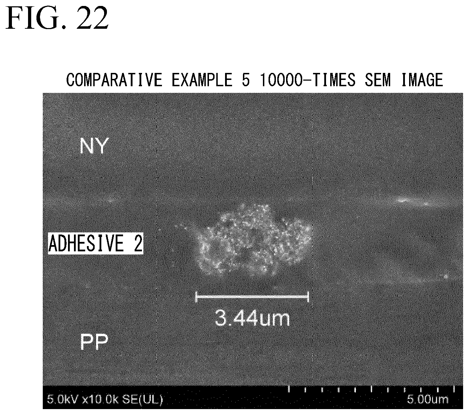

FIG. 21 is an example of a photographic image of the laminated film of Example 2. FIG. 22 is an example of a photographic image of the laminated film of Comparative Example 5.

As shown in FIG. 21, in the laminated film of Example 2, aggregates exceeding 1 µm were not observed. As shown in FIG. 22, the sizes of the aggregates observed in the laminated film of Comparative Example 5 exceeded 3.0 µm.

Since the adhesive layers in Examples 1 to 19 were manufactured by performing the dispersion treatment with the bead mill in a state where the additive particles, the dispersant, and the solvent were mixed in the coating liquid preparation step, it is considered that the degree of aggregation adversely affecting the haze was small compared with those in Comparative Examples 2 to 14 where the dispersion treatment was performed by stirring alone. Therefore, in the laminated films 660 having an adhesive layer manufactured by performing the dispersion treatment with the bead mill and the manufacturing method thereof, it is possible to add a variety of particles capable of developing a high function without adversely affecting the haze.

In addition, in the laminated films of Examples 1 to 18, the haze ratios were 1.10 or less, and, additionally, favorable evaluations were obtained in all of the visibility, the odor, and the strength. In Example 19 where the dispersion treatment with the bead mill was performed, and the haze ratio was 1.10 or less, but the particle amount was 0.8% by mass, favorable evaluations were not obtained regarding the odor and the strength. This is considered that reduction of the odor and securing of the strength were insufficient owing to the small particle amount.

On the other hand, in Comparative Example 15 where the dispersion treatment with the bead mill was performed in a state where the additive particles, the dispersant, and the solvent were mixed in the coating liquid preparation step, but the particle amount exceeded 10% by mass, a favorable evaluation was not obtained in the visibility. In addition, in Comparative Examples 16 and 17 where the dispersion treatment with the bead mill was performed in a state where the additive particles, the dispersant, and the solvent were mixed in the coating liquid preparation step, but the average particle diameter of the additive particles exceeded 50 nm, compared with Examples 1 to 19, favorable visibility was not obtained, and the haze ratio did not become a value satisfying 1.10 or less.

The lamination strengths of the packaging bags of the individual examples and the individual comparative examples before the retort treatment were 11 N/15 mm width to 12 N/15 mm width, which were substantially the same.

On the other hand, the lamination strengths after the retort treatment all decreased. Specifically, in Examples 1 to 18, the lamination strengths were 8 N/15 mm width and decreased by 3 N/15 mm width.

In addition, in Example 19, the decrease was 5 N/15 mm width.

In Comparative Example 1 where no additive particles were contained, the decrease was only 2 N/15 mm width; however, in Comparative Examples 2 to 17, the decreases were 3 N/15 mm width to 8 N/15 mm width.

From this fact, it is found that there is a tendency that the lamination strength decreases as the particle amount in the adhesive layer increases.

### [Evaluation methods and evaluation criteria]

The visibility, the retort odor, the lamination strength (before retort), the lamination strength (after retort), and the lamination strength (comprehensive) were evaluated.

Regarding the visibility, a haze ratio of 25% or less was determined as "A", a haze ratio of more than 25% and 28% or less was determined as "B", and the case of more than 28% was determined as "C".

Regarding the retort odor (expressed as "Odor" in [Table 7]), a hydrogen sulfide concentration of 0.04 mg/L or less was determined as "A", a hydrogen sulfide concentration of more than 0.04 mg/L and 0.25 mg/L or less was determined as "B", and the case of more than 0.25 mg/L was determined as "C".

Regarding the lamination strength, a lamination strength after the retort treatment of 7 N/15 mm width or more was determined as "A", and a lamination strength of less than 7 N/15 mm width was determined as "B".

### [Comprehensive evaluations]

As comprehensive evaluations, in a case where all of the visibility, the retort odor, and the lamination strength (comprehensive) were determined as "A", the comprehensive evaluation was "A", in a case where two items were determined as "A" and one item was determined as "B", the comprehensive evaluation was "B", and, in a case where two or more items were determined as "B" or any item was determined as "C", the comprehensive evaluation was "C".

As shown in [Table 7], the comprehensive evaluations of Examples 1 to 18 were all determined as "A", and the comprehensive evaluation of Example 19 was determined as "B". In all of Examples 1 to 19, the haze ratios were 1.10 or less, and favorable results were obtained in terms of visibility.

In all of Examples 1 to 19, the retort odors improved compared with that of Comparative Example 1, and favorable results were obtained.

In all of Examples 1 to 19, the lamination strengths were determined as "B" or higher, and favorable results were obtained.

That is, it was possible to confirm that, in Examples 1 to 19, favorable results were obtained in terms of all of the visibility, the retort odor, and the lamination strength and the results showing that the object of the present invention can be achieved are developed.

The present invention also discloses the following.
[1] A laminated film having a light transmission portion configured to transmit visible light in a thickness direction,
   in which a base material film having a barrier layer,
   an adhesive layer containing an adhesive component and polyvalent metal particles or polyvalent metal compound particles mixed with the adhesive component, and
   a sealant layer
   are laminated in this order, and
   in the light transmission portion, a haze measured in accordance with a haze measurement method specified in JIS-K-7136 is 25% or less.
[2] The laminated film according to [1], in which a ratio of a solid content of the polyvalent metal particles or the polyvalent metal compound particles to a total mass of the solid content of the polyvalent metal particles or the polyvalent metal compound particles and a solid content of an adhesive in the adhesive layer contains 0.5% by mass or more and 10% by mass or less.
[3] The laminated film according to [1] or [2], in which the polyvalent metal particles or the polyvalent metal compound particles have an average particle diameter of 10 nm or more and 50 nm or less.
[4] The laminated film according to any one of [1] to [3], in which, in the adhesive layer, regarding a distribution of aggregates formed of the polyvalent metal particles or the polyvalent metal compound particles, the number of the aggregates as large as 10% or more and 200% or less of an average particle diameter present in a rectangular region of 50 µm in a width direction is 50 or more.
[5] The laminated film according to any one of [1] to [4], in which, in the adhesive layer, an average diameter of the aggregates formed of the polyvalent metal particles or the polyvalent metal compound particles viewed in a direction orthogonal to the thickness direction is 20 nm or more and 120 nm or less.
[6] The laminated film according to any one of [1] to [5], in which the polyvalent metal particles or the polyvalent metal compound particles have a specific surface area of 1 m²/g or more.
[7] The laminated film according to any one of [1] to [6], in which the adhesive layer further contains a dispersant that disperses the polyvalent metal particles or the polyvalent metal compound particles in the adhesive component.
[8] The laminated film according to any one of [1] to [7], in which the adhesive component is a cured product of a two-component curable adhesive.
[9] The laminated film according to any one of [1] to [8], in which, in the adhesive layer, a maximum diameter of the aggregates formed of the polyvalent metal particles or the polyvalent metal compound particles viewed in a direction orthogonal to the thickness direction is 1.0 µm or less.
[10] The laminated film according to any one of [1] to [9], in which the base material film has a nylon layer.
[11] A packaging bag formed by pasting films together, the packaging bag including:
   the laminated film according to any one of [1] to [10].
[12] The packaging bag including the laminated film according to any one of [1] to [11], the packaging bag including:
   the packaging bag according to claim 11; and
   an article to be packaged that is accommodated in the packaging bag.
[13] A packaging bag including the laminated film according to any one of [1] to [12], in which the article to be packaged contains a sulfur compound.

Hitherto, each of the preferable embodiments of the present invention has been described together with each examples, but the present invention is not limited to each embodiment and each example. The addition, omission, substitution, and other modifications of the configuration are possible within the scope of the gist of the present invention. In addition, two or more of the embodiments may be combined together.

In addition, the present invention is limited not by the above description, but by the appended claims alone.

### [Industrial Applicability]

According to the laminated film, the packaging bag, the package, and the method for manufacturing a laminated film according to the present invention, it is possible to reduce a retort odor, and the lamination strength is favorable.

### [Reference Signs List]

10, 10A, 310, 310A, 610, 610A: Base material film
12, 312, 612: Resin layer
14, 314, 614: Barrier Layer
16, 316, 616: Adhesive layer
18, 318, 618: Intermediate layer
20, 320, 620: Adhesive layer
30, 330, 630: Sealant layer
50, 60, 70, 350, 360, 370, 650, 660: Laminated film
100, 100A, 150, 150A, 400, 450, 700, 750: Packaging bag
110, 710: Article to be packaged
200, 200A, 210, 500, 510A, 800, 810A: Package

## Claims

1. A laminated film comprising, in the following order:
a predetermined layer;
an adhesive layer containing an adhesive component and polyvalent metal particles or polyvalent metal compound particles mixed with the adhesive component; and
a sealant layer laminated,
wherein a ratio of a maximum diameter of aggregates formed of the polyvalent metal particles or the polyvalent metal compound particles to a minimum diameter of the aggregates is 14.0 times or less.

2. The laminated film according to Claim 1,
wherein the aggregates have an average aggregate diameter of 150 nm or less.

3. The laminated film according to Claim 1 or 2,
wherein, among the aggregates, the number of the aggregates having a size of 10% to 200% of an average particle diameter is 60 or more.

4. The laminated film according to any one of Claims 1 to 3,
wherein no aggregates have a diameter of 3.0 µm or more.

5. The laminated film according to any one of Claims 1 to 4,
wherein, for the aggregates having a diameter approximately equal to an average aggregate diameter, a distance between the aggregates is 3.0 µm or less, the distance being an average value of distances between the aggregates adjacent to each other.

6. The laminated film according to any one of Claims 1 to 5,
wherein the predetermined layer is a base material film having a barrier layer.

7. The laminated film according to Claim 6,
wherein the base material film has a nylon layer.

8. The laminated film according to any one of Claims 1 to 7,
wherein the adhesive layer contains 0.5% by mass or more and 10% by mass or less of the polyvalent metal particles or the polyvalent metal compound particles.

9. The laminated film according to any one of Claims 1 to 8,
wherein the polyvalent metal particles or the polyvalent metal compound particles have an average particle diameter of 10 nm or more and 45 nm or less.

10. The laminated film according to any one of Claims 1 to 9,
wherein the polyvalent metal particles or the polyvalent metal compound particles have a specific surface area of 1 m²/g or more.

11. The laminated film according to any one of Claims 1 to 10,
wherein the adhesive layer further contains a dispersant that disperses the polyvalent metal particles or the polyvalent metal compound particles in the adhesive component.

12. The laminated film according to any one of Claims 1 to 11,
wherein the adhesive component is a cured product of a two-component curable adhesive.

13. The laminated film according to Claim 1,
wherein, in a range of 500 µm × 500 µm in the adhesive layer, the number of the aggregates of 9 µm or larger is 30 or less among the aggregates formed of the polyvalent metal particles or the polyvalent metal compound particles.

14. The laminated film according to Claim 13,
wherein the distance between the aggregates is 100 µm or more.

15. The laminated film according to Claim 13 or 14,
wherein the predetermined layer is a base material film having a barrier layer.

16. The laminated film according to Claim 15,
wherein the base material film has a nylon layer.

17. The laminated film according to any one of Claims 13 to 16,
wherein the adhesive layer contains 0.5% by mass or more and 10% by mass or less of the polyvalent metal particles or the polyvalent metal compound particles.

18. The laminated film according to any one of Claims 13 to 17,
wherein the polyvalent metal particles or the polyvalent metal compound particles have an average particle diameter of 10 nm or more and 45 nm or less.

19. The laminated film according to any one of Claims 13 to 18,
wherein the polyvalent metal particles or the polyvalent metal compound particles have a specific surface area of 1 m2/g or more.

20. The laminated film according to any one of Claims 13 to 19,
wherein the adhesive layer further contains a dispersant that disperses the polyvalent metal particles or the polyvalent metal compound particles in the adhesive component.

21. The laminated film according to any one of Claims 13 to 20,
wherein the adhesive component is a cured product of a two-component curable adhesive.

22. The laminated film according to Claim 1, further comprising:
a light transmission portion configured to transmit visible light in a thickness direction,
wherein the predetermined layer is a base material film having a barrier layer, and
a ratio of a haze measured in accordance with a haze measurement method specified in JIS-K-7136 in the light transmission portion to a haze measured in accordance with the measurement method in the light transmission portion when the adhesive layer does not contain the polyvalent metal particles and the polyvalent metal compound particles is 1.10 or less

23. The laminated film according to Claim 22,
wherein a ratio of a solid content of the polyvalent metal particles or the polyvalent metal compound particles to a total mass of the solid content of the polyvalent metal particles or the polyvalent metal compound particles and a solid content of an adhesive in the adhesive layer is 0.5% by mass or more and 10% by mass or less.

24. The laminated film according to Claim 22 or 23,
wherein the polyvalent metal particles or the polyvalent metal compound particles have an average particle diameter of 10 nm or more and 50 nm or less.

25. The laminated film according to Claim 24,
wherein, in the adhesive layer, regarding a distribution of the aggregates formed of the polyvalent metal particles or the polyvalent metal compound particles, the number of the aggregates as large as 10% or more and 200% or less of the average particle diameter present in a rectangular region of 50 µm in a width direction is 50 or more.

26. The laminated film according to any one of Claims 22 to 25,
wherein, in the adhesive layer, an average diameter of the aggregates formed of the polyvalent metal particles or the polyvalent metal compound particles viewed in a direction orthogonal to the thickness direction is 20 nm or more and 120 nm or less.

27. The laminated film according to any one of Claims 22 to 26,
wherein the polyvalent metal particles or the polyvalent metal compound particles have a specific surface area of 1 m²/g or more.

28. The laminated film according to any one of Claims 22 to 27,
wherein the adhesive layer further contains a dispersant that disperses the polyvalent metal particles or the polyvalent metal compound particles in the adhesive component.

29. The laminated film according to any one of Claims 22 to 28,
wherein the adhesive component is a cured product of a two-component curable adhesive.

30. The laminated film according to any one of Claims 22 to 29,
wherein, in the adhesive layer, the maximum diameter of the aggregates formed of the polyvalent metal particles or the polyvalent metal compound particles viewed in a direction orthogonal to the thickness direction is 1.0 µm or less.

31. The laminated film according to any one of Claims 22 to 30,
wherein the base material film has a nylon layer.

32. A packaging bag formed by pasting films together,
wherein the films each include the laminated film according to any one of Claims 1 to 31.

33. A package comprising:
the packaging bag according to Claim 32; and
an article to be packaged that is accommodated in the packaging bag.

34. The package according to Claim 33,
wherein the article to be packaged contains a sulfur compound.

35. A method for manufacturing a laminated film including a base material film having a barrier layer, an adhesive layer containing an adhesive component and polyvalent metal particles or polyvalent metal compound particles mixed with the adhesive component, and a sealant layer laminated in this order and having a light transmission portion configured to transmit visible light in a thickness direction,
wherein a ratio of a haze measured in accordance with a haze measurement method specified in JIS-K-7136 in the light transmission portion to a haze measured in accordance with the measurement method in the light transmission portion when the adhesive layer does not contain the polyvalent metal particles and the polyvalent metal compound particles is 1.10 or less,
a step of forming the adhesive layer has a coating liquid preparation step of preparing a coating liquid in which the polyvalent metal particles or the polyvalent metal compound particles have been mixed with an adhesive that forms the adhesive component after cured, and
in the coating liquid preparation step, a dispersion treatment is performed with a bead mill in a state where the polyvalent metal particles or the polyvalent metal compound particles, a dispersant, and a solvent have been mixed together.
